(19) Europäisches Patentamt
European Patent Office
Office européen des brevets

(11) Numéro de publication: **0 128 913 B1**

(12) **FASCICULE DE BREVET EUROPEEN**

(45) Date de publication du fascicule du brevet: **10.10.90**

(51) Int. Cl.[5]: **B 30 B 11/10,** B 28 B 5/08

(21) Numéro de dépôt: **84900020.3**

(22) Date de dépôt: **14.12.83**

(86) Numéro de dépôt international:
**PCT/CH83/00142**

(87) Numéro de publication internationale:
**WO 84/02493 05.07.84 Gazette 84/16**

# (54) INSTALLATION POUR LA FABRICATION EN CONTINU ET AUTOMATISEE D'ARTICLES AGGLOMERES, FRITTES, VULCANISES ET PRESSES.

(30) Priorité: **20.12.82 CH 7401/82**

(43) Date de publication de la demande:
**27.12.84 Bulletin 84/52**

(45) Mention de la délivrance du brevet:
**10.10.90 Bulletin 90/41**

(84) Etats contractants désignés:
**AT BE CH DE FR GB LI LU NL SE**

(56) Documents cités:
**CH-A- 443 647**
**DE-A-1 947 405**
**DE-C- 258 335**
**DE-C- 617 971**
**FR-A- 485 898**
**FR-A-1 462 055**
**FR-A-1 531 566**
**FR-A-2 285 969**
**FR-A-2 306 071**
**FR-A-2 358 975**
**FR-A-2 391 063**
**FR-A-2 397 285**
**FR-A-2 470 675**
**FR-E- 78 121**
**GB-A- 175 721**
**GB-A- 317 559**
**GB-A- 433 591**
**NL-C- 44 908**
**US-A-1 390 375**
**US-A-1 952 130**
**US-A-2 218 456**
**US-A-2 526 797**
**US-A-2 682 695**
**US-A-3 110 990**
**US-A-3 320 740**

(73) Titulaire: **PTP PATENTIERTE TECHNOLOGISCHE PROZESSE A.G.**
**25,Rainstrasse**
**CH-8955 Oetwil an der Limmat (CH)**

(72) Inventeur: **MILISAVLJEVIC, Milorad**
**Museggstrasse 48**
**CH-6004 Luzern (CH)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

**EP 0 128 913 B1**

**Description**

L'invention concerne et a essentiellement pour objet une installation pour la fabrication en continu et automatisée d'articles agglomérés, frittés, vulcanisés ou pressés.

L'invention a plus particulièrement pour objet une installation d'un encombrement restreint dans lequel les articles sont entièrement réalisés avec une productivité élevée.

La technologie actuellement utilisée dans la fabrication des articles ou produits mentionnés ci-dessus varie d'après le mélange et les propriétés des matériaux employés pour leur production et surtout d'après le traitement exigé pour la transformation de ces mélanges en produits finis, ayant une qualité désirée. Dans ces conditions, la technologie adaptée au besoin de fabrication d'un seul produit ou article, exige des moyens de production différents. Il en résulte donc un nombre très important de machines, d'equipements et d'outillage spécifiques, développés afin de satisfaire les exigences technologiques particulères de la fabrication de chaque article ou produit. Ainsi, les phases principales de fabrication communes pour un grand nombre d'articles ou produits finis peuvent être définies par les étapes générales suivantes:

Préparation du mélange,

transformation du mélange en produit fini, notamment par compression et traitement,

finition des produits ci-dessus.

La préparation du mélange pour la fabrication des produits non métalliques consiste en un conditionnement chimique et mécanique des matériaux par, par exemple un dosage précis des composants auxiliaires et/ou des matériaux de remplissage afin d'obtenir une masse homogène d'une haute consistence capable d'être transformée dans la forme désirée et d'une constitution qui assured le déroulement de la réaction chimique prévue en fonction des températures et des pressions appliquées. Cette phase de préparation du mélange n'exige qu'un investissement relativemet modeste étant donné quelle est réalisée avec un équipment simple.

Pour le traitement de matériaux métalliques, il s'agit le plus souvent d'un changement de forme réalisé par façonage, emboutissage, repoussage ou analogue d'alliages métalliques fournis par un distributeur métallurgique à l'aide de presses conventionnelles adaptées aux articles a fabriquer.

La phase de transformation du mélange en produits ou articles finis joue un rôle primordial dans l'ensemble du procédé technologique. Dans la plupart des cas la fabrication est distribuée entre plusieurs ateliers dont chacun nécessite l'installation d'un nombre important de machines coûteuses et une main d'oeuvre qualifiée importante. De plus l'encombrement des nombreuses machines augmente les frais d'infrastructure et par conséquent l'investissement général. Il en va de même avec la fabrication de certains produits dans les usines modernes plus ou moins automatisées dans lesquelles le procédé technologique se deroule sans interruption. C'est le cas par exemple pour la fabrication de cellulose, de papier de viscose, de produits synthétiques etc., en général des produits servant de matière première pour la fabrication de biens de consommation. Cependant, cette technologie quoi que moderne, n'est pas toujours assez compétitive. Elle est sans cesse ameliorée par des procédés plus avantageux surtout dans le domaine de la transformation des matières synthétiques thermoplastiques en produits finis. C'est pourquoi nous allons comparer un procédé considéré comme le plus proche de l'invention proposée, faisant l'objet du brevet US—A—2 218 456. Le procéde technologique appliqué dans cette invention comprend une table tournante dont la surface est avantageusement utilisée pour porter les moules, chacun d'entre eux soumis au remplissage, préchauffage, traitement chimique et décharge deux fois par cycle, le nombre de moules étant limité par la place disponible sur la table tournante, respectivement par son diamètre.

Au contraire la différence principale entre l'invention mentionée ci-dessus et l'invention proposée réside en la capacité de cette dernière d'utiliser la troisième dimension la hauteur, ce qui lui rend le pouvoir d'alimenter simultanément d'un ou de plusieurs mèlanges un nombre illimité des moules, hérmétiquement fermés vers l'atmosphère, restant quand même suffisament mobile dans l'intérieur de leur coquille éxtérieure, d'être ouverts, alimentés, fermés et pressés et de continuer leur chemin d'un secteur immobile à l'autre, chacun d'eux leur assurant un traîtement thermique et chimique approprié ainsi que la décharge simultanée, toute la procédure décrite se déroulant pendant une cadence de travail de la même durée pour chaque moule particulier. Cette proceédure continue et automatisée est dûe à la formation et demontage de chaque moule, exécutés en cooperation entre les composants du moule faisant partie de la presse à vis inférieure, de la presse hydraulique et à vis combinée supérieure, toutes les trois encontact permanent et fixe avec les moyens d'alimentation immobiles d'un côté et la partie du moule contenue dans chaque secteur mobile du carrousel, tournant autour dudit moyen d'alimentation.

Par un simple échange de moules ou des outils la même installation peut produire en grand série des produits paticulièrement encombrants sans augmentation ni de son gabarit ni de la surface du bâtiment qui d'ailleurs represente seulement une petite fraction de l'espace nécessaire pour la même production par les méthodes conventionnelles. Par conséquent le coût de l'investissement est énormèment réduit en particulier dans la production en masse de produits industriels comme par exemple les pneux, les garnitures de frein, la céramique sanitaire, les tubes en amiant -ciment etc.

A titre d'exemple la fabrication de certains de ces produits est décrite et illustrée dans cette demande de brevet.

Le but de la présente invention est de fournir une seule installation permettant la réalisation d'un procédé technologique, susceptible d'etre utilisé pour la transformation en produits finis de materiaux, mélanges ou alliages de constitution chimique et de comportements différents, en traitant chaqun d'eux selon son procédé technologique spécifique, simplement en adaptant certains éléments de l'installation au procédé technologique à mettre en oeuvre et à la forme particulière des produits ou articles à fabriquer. Ainsi, comme l'invention propose une seule installation permettant la réalisation de procédés technologiques pour la fabrication d'articles en continu et de manière automatisée, les coûts d'infrastructure seront fortement diminués et la productivité de l'installation augmentée.

A cet effet, l'invention a pour objet une installation pour la fabrication en continu automatisée d'articles agglomérés, frittés, vulcanisés ou pressés à partir de minéraux, matières plastiques, mélanges, métaux ou alliages, comme de finie dans la première revendication.

Ainsi, l'invention propose une installation compacte comprenant tous les moyens fixés sur un seul bâti, permettant de fabrique des articles par traitement d'un materiau alimenté à partir d'un seul moyen d'alimentation central.

Le ou les moules des articles à produire sont construits par coopération entre les éléments de moule du carrousel se trouvant dans le secteur d'une unité de travail comportant le moyen formant presse et le ou les outils de presse de ce moyen formant presse, pendant l'alimentation des produits dans le ou les moules.

La communication entre le moyen d'alimentation et le moule formé par coopération entre le moyen formant presse et les éléments de moule du carrousel, fermée au moment de l'achèvement de l'alimentation, est automatiquement rétablie tant que la pression exercée sur le matériau alimenté dans le moule s'approche de la pression à laquelle ce matériau s'agglomère pour le refoulement du surplus de mélange, et est automatiquement fermée lorsque la pression exercée tombe au-dessous de cette pression d'agglomération.

Ainsi, il est possible d'alimenter le moule jusqu'à une pression relativement élevée sans risque d'agglomération des matériaux alimentés dans les conduits d'alimentation, et donc d'obtenir un remplissage parfait du moule même si celui-ci a des formes complexes, puis de réaliser la compression du, matériau sans risque de compactage du matériau situé en dehors du moule. De cet fait, dans le cycle suivant, les matériaux contenus dans les conduits d'alimentation pourront être'alimentés sans problème dans le nouveau moule étant donné qu'ils sont restés à l'état malléable.

Le bâti de l'installation comprend un cylindre central supportant le moyen d'alimentation et plusieurs plates-formes fixées autour du cylindre à des niveaux différents, ces plates-formes étant supportées à leur périphérie par une infrastructure verticale de support, la ou les unités, de travail de l'installation étant fixées sur ces plates-formes. L'espacement entre chaque plate-forme est réglable pou par exemple adapter l'installation en fonction des dimensions des articles à produire.

De plus, le moyen d'alimentation comprend au moins un orifice de distribution des matériaux, formé et réparti selon une section transversale dans l'enveloppe extérieure du moyen d'alimentation, au moins un de ces orifices de distribution débouchant dans le secteur d'une unité de travail comportant un moyen formant presse.

Par ailleur, le carrousel et les éléments de moule portés par ledit carrousel sont adaptés en fonction des articles à produir tels que par exemple, des garnitures de frein, des tubes en amiante-ciment, des pneus ou analogues.

Les details de la présente invention apparaîtront plus clairement à la lecture de la description explicative qui va suivre de plusieurs modes de réalisation de l'installation, et en référence aux dessins schématiques annexés illustrant plusieurs modes de réalisation de l'invention, donnés uniquement à titre d'exemple, dans lequels:

les figures 1A, 1B, 1C, 1D, 1E, 1F, 1G, 1H, 1I, assemblées les unes aux autres représentent en coupe suivant les lignes IF, IC, ID, et IE de la figure 3, une première variante de l'installation, dans sa position avant le commencement du travail de compression, adaptée à la préparation d'un mélange et à la fabrication d'un produit fritté, par exemple des garnitures pour freins à tambour;

les figures 2A, 2B, 2C, 2D, 2E, 2F, 2G, représentent assemblées avec les figures 1F et 1H en coupe suivant les lignes IF, IIC, IID, de la figure 4, l'installation représentée aux figures 1 comprenant des garnitures pour freins à tambour pressées dans un secteur de traitement thermique au stade d'achèvement de la compression dans le secteur comprenant un moyen formant presse;

la figure 3 représente, en coupe suivant la ligne III-III des figures 1F, 1C, 1D et 1E, un premier mode de réalisation de l'installation avant le commencement du travail;

la figure 4 représente en coupe selon la ligne IV-IV des figures 1F, 2C et 2D, une vue partielle de l'installation après la phase de compression du matériau dans le moule;

la figure 5 est un diagramme illustrant les différents cycles de fabrication de garnitures de frein à tambour dans le premier mode de réalisation de l'installation illustrée aux figures 1 à 4;

la figure 6 est une coupe longitudinale selon la ligne VI-VI de la figure 7 illustrant une machine pour débiter et finir les garnitures de frein produites dans le premier mode de réalisation de l'installation;

la figure 7 est une coupe transversale selon la ligne VII-VII de la figure 6;

la figure 8 est une coupe transversale selon la ligne VIII-VIII de la figure 9 représentée à une échelle deux fois plus grande, illustrant une partie du carrousel et des éléments de moule d'un deuxième mode de réalisation de l'installation adaptée pour la fabrication de tuyaux en amiante-ciment;

la figure 9 est une coupe selon la ligne IX-IX de la figure 8, représentant le deuxième mode de réalisation de l'installation adapté pour la fabrication de tuyaux en amiante-ciment;

la figure 10 est une coupe horizontale du carrousel selon le second mode de réalisation de l'installation illustrée à la figure 9, positionné dans le secteur de décharge ou démoulage dune unité de travail;

la figure 11 est une vue partielle en coupe verticale du carrousel selon le second mode de réalisation, situé dans le secteur comprenant un moyen formant presse d'une unité de travail et adapté à la fabrication de tuyaux en amiante-ciment;

la figure 12 est une vue partielle en coupe longitudinale illustrant le mécanisme de commande de la sortie des moules hors du carrousel pendant le démoulage et la décharge du tuyau en amiante -ciment fini;

les figures 13 et 14 sont des vues qui assemblées ensemble illustrent une coupe verticale montrant un second mode de réalisation du moyen d'alimentation de l'installation;

la figure 15 est une coupe horizontale selon la ligne XV-XV de la figure 14;

la figure 16 représente en coupe longitudinale la partie supérieure d'un troisième mode de réalisation du carrousel adapté pour la fabrication de pneus munis d'une carcasse, et situé dans le secteur d'une unité de travail, comprenant des moyens formant presse, pendant la phase d'alimentation du premier mélange;

la figure 17 représente le carrousel illustré à la figure 16 après l'alimentation du second mélange, à la fin de la phase de compression;

la figure 18 illustre le carrousel des figures 16 et 17 après la fin de la compression et avant son déplacement dans le secteur suivant de l'unité de travail;

la figure 19 est une coupe horizontale selon la ligne XIX-XIX de la figure 16 illustrant également le mécanisme, en position fermée, de sortie et de démoulage des moules hors du carrousel;

la figure 20 est une vue identique à celle de la figure 19 illustrant le moule à la fin de la phase de compression;

la figure 21 est une coupe verticale du mécanisme, en position ouverte, de sortie et de démoulage des moules hors du carrousel illustré dans la figure 19;

la figure 22 représente les parties supérieures de deux moules superposés après la séparation de leurs parties inférieures respectives;

la figure 23 représente en coupe horizontale, les moules du carrousel situés dans le secteur de démoulage et de décharge d'une unité de travail après la séparation de la partie supérieure respective des moules illustrés sur la figure 22, et le système de décharge des pneus finis et de chargement de nouvelles carcasses;

la figure 24 représente une coupe verticale de deux moules se trouvant dans le secteur de décharge d'une unité de travail, au moment de la décharge des pneus finis et du chargement de nouvelles carcasses;

la figure 25 est une vue en coupe illustrant la soupape de retenue d'un fluide sous une pression désirée dans le pneu pendant et après la fabrication de celui-ci;

la figure 26 est une coupe selon la ligne XXVI-XXVI de la figure 1G de la presse principale; et

les figures 27 à 29 représentent une vue en coupe longitudinale de la partie inférieure de la presse principale respectivement au commencement, pendant et à l'achèvement du travail de ladite presse dans un second mode de réalisation dans lequel elle est convertie en une presse à explosion pour la fabrication d'un produit pressé.

L'installation de la présente invention comprend généralement les éléments suivants:

un bâti de l'installation comprenant de manière générale un cylindre central 1 et plusieurs plates-formes 2, 4, 5, 7, fixées sur le cylindre de manière espacée les unes des autres,

une partie centrale de l'installation formée par un moyen d'alimentation des matériaux, fixée avantageusement sur le cylindre 1 du bâti,

au moins une unité de travail disposée autour du moyen d'alimentation, chaque unité de travail étant divisée en secteurs, un de ces secteurs comprenant un moyen formant presse constitué par une presse auxiliaire et une presse principale, ce moyen formant presse étant fixé sur les plates-formes du bâti de l'installation, un ou plusieurs autres secteurs de l'unité de travail comprennent des moyens pour assurer le traitement chimique, physique, thermique ou analogue des articles moulés dans le premier secteur et comprennent par exemple des moyens d'alimentation en différents fluides de traitement ou des moyens de chauffage. Un autre secteur de l'unité de travail comprend des moyens pour démouler et décharger les articles pressés hors de l'installation.

Enfin, chaque unité de travail comprend un carrousel pour déplacer le moule ou les éléments de moule et les articles pressés d'un secteur au suivant dans chaque unité de travail.

Pour plus de clarté, on décrira ci-dessous successivement les différents éléments de l'installation ainsi que les différents modes de réalisation notamment du carrousel en prenant comme exemple la fabrication d'un article particulier.

Par ailleurs, comme la plupart des éléments de cette installation se retrouvent dans les modes de réalisation différents et pour des fabrications d'articles très différents, ces éléments seront repérés par le même numéro de référence dans tous les modes de réalisation.

On décrira maintenant en référence aux figures 1A à 1H et 2A à 2G le bâti ou l'ossature de l'installation. Ce bâti comprend:

un cylindre central 1 sans fond ni couvercle fixé sur une première plate-forme ou contre-plaque 2 ancrée au sol et sur laquelle est fixée l'armature d'un certan nombre de cylindres jumeaux 3 correspondant au nombre d'unités de travail disposés sensiblement à distance égale autour du pourtour du cylindre central 1, et appuyés par leur fond 3a sur la contre-plaque 2, chacun de ces cylindres renfermant la presse auxiliaire du moyen formant presse de chaque unité de travail;

une première plate-forme circulaire immobile 4, commune pour toutes les unités de travail de l'installation, posée sur un évasement du cylindre central 1, et s'appuyant par sa périphérie sur une ossature extérieure (non représentée), par exemple une infrastructure verticale, construite autour de l'installation sur toute sa hauteur et fixée au sol;

une deuxième plate-forme circulaire, immobile 5 posée sur la surface horizontale de la paroi du cylindre central 1, et s'appuyant elle aussi par son bord périphérique sur l'infrastructure extérieure;

un corps cylindrique 6 montant jusqu'en haut de l'installation et dont la partie inférieure est insérée dans le cylindre central 1 et s'appuie en même temps sur la deuxième plate-forme circulaire 5 tandis que sa partie supérieure est fixée à une troisième plate-forme 7;

la troisième plate-forme 7 est circulaire et immobile et comprend des ouvertures de passage pour les éléments de la partie supérieure de l'installation afin de les retenir dans une position verticale stable et leur servir de support, cette troisième plate-forme étant elle-même supportée par une infrastructure extérieure (non représentée).

Avantageusement, les plates-formes 4, 5, 7 sont fixées sur les cylindres centraux 1, 6 et sur l'infrastructure inférieure de manière réglable pour modifier l'écartement entre chacune de ces plates-formes pour ainsi adapter l'installation à la fabrication d'articles particuliers.

On décrira maintenant un premier mode de réalisation du moyen d'alimentation du matériau dans les unités de travail, représenté aux figures 1F et 1H. Ce moyen d'alimentation comprend plusieurs éléments enfermés dans le corps cylindrique 6 qui forme l'enveloppe extérieure de ce moyen, et dans lequel est disposé un fond fixe 8 supporté par un rétrecissement de la paroi intérieure du corps cylindrique 6, ce fond fixe comprenant en son centre un support vertical 8a fixé à clavette pour former un support des éléments de la partie centrale de l'installation et les maintenir dans leur position.

L'enveloppe extérieure ou cylindre 6 comporte au moins une ouverture 9 avantageusement rectangulaire débouchant dans chaque unité de travail disposée autour du moyen d'alimentation pour ainsi permettre le passage du matériau ou mélange depuis ce moyen d'alimentation vers le moule du secteur correspondant de l'unité de travail. L'enveloppe 6 comprend également dans sa partie supérieure des ouvertures 10a, 10b reliées à des sources de mélanges préparés préalablement. Ces ouvertures sont utiles lorsque l'on doit alimenter plusieurs mélanges dans le moule comme cela sera décrit plus en détail en référence au deuxième mode de réalisation.

Le moyen d'alimentation de l'invention comprend, disposés successivement depuis sa partie supérieure dans son enveloppe extérieure 6, au moins une trémie 53 ou goulotte d'alimentation des matériaux, ou mélanges, au moins un mélangeur, au moins un alimentateur de mélanges et au moins un dispositif régulateur de dosage et de refoulement des matériaux, chaque dispositif régulateur de dosage et de refoulement étant associé à au moins un orifice de distribution 9 formé dans le cylindre extérieur 6.

La trémie d'approvisionnement est formée par un cylindre 53 fixé sur la plate-forme 7 par des supports non représentés, et comprenant un fond 54 muni en son centre d'une douille 55 logeant la partie supérieure d'un arbre de commande commun 32 du mélangeur, et liée avec la paroi du cylindre 53, par exemple par deux axes en croix 56 permettant ainsi l'entrée des matières premières dans le mélangeur.

Ce mélangeur est un mélangeur à double fond qui comprend un premier cylindre 37 immobile suspendu dans l'enveloppe cylindrique 6 par l'évasement 38 de sa partie supérieure posé et fixé par des écrous 41 sur la troisième plate-forme 7. Le fond 39 du premier cylindre 37 est traversé en son centre par l'arbre de commande 32 commun à ce mélangeur et à l'alimentateur de mélange, et est muni d'ouvertures 40 découpées en arc et disposées régulièrement concentriquement autour de l'arbre 32, à distance égale de celui-ci. Le mélangeur comprend également un deuxième cylindre 42 mobile s'appuyant par son évasement 43 sur la plateforme circulaire 7, suspendu dans l'intérieur du premier cylindre 37, et entraîné en rotation par une paroi dentée 44 formée sur le pourtour de son évasement 43 en prise avec une roue dentée 52. Le fond 45 du deuxième cylindre mobile 42 est muni d'ouvertures en arc 46 superposées, conjuguées aux ouvertures 40 du fond 39 et formant ainsi un fond de mélangeur s'ouvrant périodiquement par rotation du fond 45 par rapport au fond 39 pour décharger le mélange dans l'alimentateur de mélange situé en dessous. Avantageusement, l'arbre de commande 32 est muni d'une rainure 47 dans sa partie supérieure correspondant au mélangeur, sur cette partie est emmanché un agitateur à ailettes constitué par un axe 48 et des ailettes 49 et une clavette s'engageant dans la rainure 47. Ainsi, les matériaux alimentés par la goulotte 53 seront mélangés pendant un temps déterminé dans le mélangeur avant d'être alimentés dans l'alimentateur de mélange. Il est possible d'ajouter des matériaux auxiliaires par des orifices 50, ces matériaux pouvant être dosés dans des appareils de dosage non représentés.

L'alimentateur de mélange à vis sans fin comprend une première vis sans fin 30 montée sur l'arbre de commande 32, qui est appuyé par son disque 33 sur un roulement à rouleaux 34, pour assurer le malaxage et le transport continu du mélange depuis le mélangeur vers des orifices de décharge 17, 16a, sous basse pression, de son double fond s'ouvrant par coulissement. La vis sans fin tourne dans une enceinte définie par le corps cylindrique 6. Le double fond de l'alimentateur de mélange est constitué par un fond fixe 18 comprenant une partie cylindrique 18a formant jupe et s'étendant vers le bas concentrique à l'arbre de commande 32, et un fond mobile 16 comprenant une partie cylindrique 13 s'étendant vers le bas autour de la jupe 18a du fond fixe 18 et se terminant par un roue dentée 14 en prise avec une roue dentée d'entraînement 15. Ce cylindre 13 est supporté en rotation par un anneau 11 immobile fixé dans un rétrécissement pratiqué dans la paroi intérieure du corps cylindrique 6 et au moyen d'un roulement à rouleaux 12.

La partie formant fond mobile 16 comprend des orifices en arc 16a conjugués avec les orifices 17 du fond 18 immobile et le cylindre 13 comprend à sa partie supérieure des orifices 36 conjugués avec des orifices 18b de la jupe du fond immobile 18. Ainsi, par rotation du fond 16 et du cylindre, 13, le mélange amené par la vis sans fin 30 sous une basse pression est déchargé dans une chambre de dosage d'un dispositif régulateur de dosage et de refoulement du moyen d'alimentation.

De plus, l'arbre 32 de commande porte à sa partie inférieure disposée au niveau de la jupe 18a du fond 18 et en regard des orifices 18b, une vis sans fin 31 de pas inverse à la vis sans fin 30 pour ainsi amener le mélange refoulé à travers l'orifice 18b dans l'enceinte de l'alimentateur de mélange.

Le moyen d'alimentation comprend de préférence un dispositif régulateur de dosage et de refoulement du mélange par unité de travail, ce dispositif étant inséré par la partie supérieure du cylindre 6 avant le montage du double fond de l'alimentateur de mélange.

Ce dispositif régulateur de dosage et de refoulement est constitué par un anneau immobile 19 supporté par un rétrécissement pratiqué dans la paroi intérieure de l'enveloppe 6 du moyen d'alimentation, cet anneau étant muni au milieu de sa surface d'un certain nombre de guidetiges 20, un pour chaque dispositif régulateur de dosage et de refoulement et donc, au moins un pour chaque unité de travail fixée autour du moyen d'alimentation. L'anneau 19 comprend soudé sur son bord interne un cylindre immobile 21 qui est emmanché sur le cylindre 13 du fond mobile 16 de l'alimentateur de mélange pour le retenir en position verticale et stable. La partie supérieure du cylindre immobile 21 comprend des parois radiales s'étendant latéralement jusqu'à la paroi du corps cylindrique 6 et en hauteur jusqu'à la limite supérieure de l'ouverture rectangulaire 9 pour ainsi déterminer quatre compartiments verticaux 22a, 22b, 22c, 22d.

Dans chacun de ces compartiments verticaux est disposé un fond 23 ayant la forme d'un segment en arc possédant à sa face inférieure une tige taraudée 24 munie d'un écrou de réglage 24a et vissée dans les guide-tiges 20 portés par l'anneau 19. Chaque fond 23 comprend des bords 23a verticaux coulissant contre les parois verticales des compartiments 22 et la surface intérieure de l'enveloppe extérieure 6. Chaque fond 23 comprend sur sa face supérieure un guide-tige 25 dans lequel est monté un oscillateur 27e, f, g, h, constitué par une plaque horizontale en forme d'arc et une tige 28 insérée dans le guide-tige 25. La plaque 27 est maintenue au niveau du bord inférieur de l'ouverture rectangulaire 9 associée par un ressort à boudin 26 disposé entre la plaque horizontale 27 et le fond 23 autour du guidetige 25. Ainsi, la plaque horizontale 27 définit avec le fond mobile 16 de l'alimentateur de mélange une chambre de dosage à volume variable. De plus, chaque oscillateur comprend une partie 29 formant jupe ou dossier soudée sur le bord interne de la plaque 27 et faisant saillie vers la chambre de dosage pour s'appuyer étroitement contre la paroi extérieure du cylindre immobile 21 de l'anneau immobile 19 et venir masquer l'orifice 21a de ce cylindre 21 conjugué aux orifices 36 et 18b respectivement des cylindres 18a et 13. De plus, chaque plaque horizontale 27 comprend une partie périphérique inférieure formant jupe 27a, b, c, d, qui est insérée entre les parois des compartiments immobiles et la paroi intérieure du corps cylindrique 6. Ainsi, la plaque 27, la jupe 27a, la tige 28 et le dossier 29 oscillent sous l'effet de la pression du ressort à boudin 26 et du produit contenu dans la chambre de dosage au-dessus de la plaque 27. De ce fait, le dossier 29 ouvre et masque périodiquement l'orifice 21a permettant ainsi le refoulement du mélange dans l'alimentateur de mélange à travers les orifices 36 et 18b chaque fois que la pression du mélange contenu dans la chambre de dosage est supérieure à la force du ressort à boudin 26.

Le fonctionnement du régulateur de dosage et de refoulement se déroule en deux phases à savoir, dès que les ouvertures en arc 16a et 17 du double fond de l'alimentateur de mélange sont superposées, le mélange est alimenté dans la chambre de dosage sous une basse pression et vers le moule à travers l'orifice de distribution 9. Une fois ce passage fermé, le mélange est soumis à la pression du ressort à boudin 26 par l'intermédiaire de l'oscillateur 27. Quand la pression exercée sur le mélange alimenté dans le moule par le moyen formant presse est supérieure à une pression moyenne bien déterminée, qui correspond sensiblement à la tension du ressort à boudin 26, l'oscillateur 27 descend, ce qui ouvre les orifices de refoulement 21a, 36, 18b. Donc la pression, régnant dans la chambre de dosage du dispositif régulateur de dosage et de refoulement et dans l'orifice de distribution 9 et les orifices et conduits d'alimentation reliant cet orifice au moule, ne peut être supérieure à la pression moyenne déterminée qui est en fait la pression au-dessus de laquelle le matériau ou le mélange s'agglomère. Donc, ce mélange restera toujours à l'état malléable et pourra être ainsi réutilisé pour la phase suivante de travail.

En se référant aux figures 13, 14, 15 un second mode de réalisation du moyen d'alimentation conforme à l'invention permettant d'alimenter deux mélanges de compositions différentes est décrit. Dans ce second mode de réalisation du moyen d'alimentation, on retrouve les mêmes éléments que dans le premier mode d'alimentation, à savoir un mélangeur, un alimentateur de mélange et des dispositifs régulateur de dosage et de refoulement. Les modifications vis-à-vis du premier mode de réalisation sont les suivantes:

L'alimentateur de mélange à vis sans fin et le mélangeur à double fond sont remplacés par un cylindre extérieur 454 inséré étroitement dans l'enveloppe extérieure cylindrique 6, présentant un fond 456 muni d'au moins une ouverture 459 de refoulement de mélange et supporté par le fond immobile 18 de l'alimentateur de mélange. La jupe 18a du fond 18 est munie d'orifices 460 de refoulement du mélange et s'appuie par sa partie inférieure 455 sur le support vertical 8a fixé à clavette sur le fond fixe 8, tous ces éléments étant traversés par l'arbre de commande commun 32. Le fond 456 est muni de deux ouvertures en arc de dosage du mélange 461, 462 et de deux ouvertures de refoulement de mélange 457 et 458. Le fond 456 est solidaire en rotation avec un cylindre intérieur 463 fixé par un système de clavettes 464 et comportant dans sa partie supérieure au moins deux récipients de mélange 465, 466 et dans sa partie inférieure le même nombre d'alimentateurs de mélange à vis sans fin 467, 468, sous-jacents, chacun étant relié aux récipients de mélange 465, 466 respectifs par une ouverture 469, 470 découpée dans un fond 471, 472 traversé en son centre par un arbre de commande 473, 474 d'entraînement des vis sans fin 475, 476 de chaque alimentateur de mélange. La paroi centrale de ces récipients de mélange et alimentateurs de mélange est constituée par un cylindre 477 coaxial au cylindre 463 et monté autour de l'arbre de commande commun 32 et sert de guide à cet arbre de commande. De plus, ce moyen d'alimentation comprend des ouvertures 478, 479 traversant la paroi du cylindre intérieur 463 et du cylindre extérieur 454 pour s'aligner successivement en synchronisation selon la cadence de travail avec une ouverture correspondante 10a, 10b, formée dans la paroi du corps cylindrique 6 et reliée à une source de mélange appropriée à travers un tuyau d'amenée de mélange 51, 51a.

Les dispositifs régulateur de dosage et de refoulement n'ont pas été modifiés par rapport au premier mode de réalisation du dispositif d'alimentation, toutefois leur fonctionnement est sensiblement différent. En effet, ces dispositifs régulateur de dosage et de refoulement maintenant rendus solidaires en rotation avec le cylindre 13 mobile par une clavette 13a encastrée. Ainsi, l'alimentation de deux mélanges différents sera réalisée à travers leur propre dispositif de dosage et de refoulement 16, 27 dont la communication avec l'alimentateur de mélange à vis sans fin 467, 468 respectif est établie par la rotation appropriée du fond 456 du cylindre extérieur 454; les arrêts de ce cylindre 454 sont programmés pour ouvrir les ouvertures en arc de dosage du mélangeur 461, 462 au commencement de l'alimentation et les fermer à la fin de l'alimentation en ouvrant simultanément l'ouverture 457, 458 de refoulement de surplus du mélange.

Quant à la goulotte d'alimentation elle comprend dans ce mode de réalisation un cylindre mobile 480 serrée étroitement dans le corps cylindrique fixe et s'appuyant par son évasement 43 sur la plate-forme immobile 7 formant ainsi une paroi dentée en prise avec une roue dentée d'entraînement 52, son fond 481 fixe par une clavette 482 sur le cylindre extérieur 454, traversé par les arbres de commande 473, 474 loge des roulements à rouleaux 483, 484 servant de support à des roues dentées 485, 486 solidaires des arbres de commande 473, 474. Ces deux roues dentées sont en prise avec une roue dentée 487 emmanchée et fixée par une clavette sur l'arbre de commande commun 32.

Ainsi, la rotation de l'arbre de commande commun 32 entraîne la rotation des arbres 473, 474 pour assurer le mélange et l'alimentation des matériaux dans les dispositifs régulateur de dosage et de refoulement, tandis que la roue dentée 52 entraîne en rotation le cylindre extérieur 454 pour faire tourner les compartiments autour de l'arbre 32 et ainsi mettre en communication le second compartiment avec le dispositif régulateur de dosage et de refoulement qui était préalablement en communication avec le premier compartiment.

Comme indiqué précédemment, chaque unité de travail est disposée autour du moyen d'alimentation et est divisée en secteurs, dans au moins un de ces secteurs est fixé un moyen formant presse qui sera décrit ci-dessous en référence aux figures 1A à 1E, 1G à 1I, 2A à 2G et 26.

Ce moyen formant presse comprend une presse auxiliaire et une presse principale montées sur les plates-formes 2, 4, 5 et 7 l'une au-dessus de l'autre en opposition et de manière espacée pour définir un espace entre leur outil de presse respectif permettant le passage des éléments de moule du carrousel de l'unité de travail.

La presse auxiliaire comprend une presse à vis inférieure disposée dans un cylindre jumeau 3 du bâti comprenant une roue dentée 57 en prise avec une roue dentée d'entraînement 58, une vis mère de montée 59 insérée et fixée dans un alésage de la roue dentée 57, cette roue dentée 57 étant supportée par un roulement à rouleaux inférieur 60 encastré dans le fond du cylindre jumeau 3, et par un roulement à rouleaux supérieur 62. Une plaque 61 posée sur un premier rétrécissement interne du cylindre jumeau 3 et supportée par le roulement à rouleaux supérieur 62 sert de support à une presse à vis supérieure comprenant également une roue dentée 64 en prise avec une roue dentée d'entraînement 65, une vis mère de montée 66 insérée et fixée dans un alésage de la roue dentée 64. Cette roue dentée 64 est supportée à sa partie inférieure par un roulement à rouleaux 63 et à sa partie supérieure par un roulement à rouleaux 67, ce second roulement à rouleaux étant inséré entre la roue dentée 64 et une plaque immobile 68 supportée par un rétrécissement interne du cylindre jumeau 3.

La presse à vis inférieure entraîne la montée et la descente d'un arbre fileté 69 bloqué en rotation par un joug (non représenté) emmanché sur au moins deux glissières de guidages 70a, 70b solidaires du fond 3a du cylindre jumeau 3 du bâti. La presse à vis supérieure entraîne par l'arbre fileté 72 engagé avec la vis mère de montée 66, un disque 71 échangeable et adaptable selon les articles à fabriquer.

Cette presse auxiliaire comprend également un piston 77 fixé, par exemple par vissage, sur l'arbre fileté 69 et qui est en fait l'outil de presse de la presse auxiliaire. Sur ce piston 77 est monté de manière coulissante un disque 80 au moyen de deux goujons guides 87 formant saillie à la face inférieure de ce disque 80, l'extrémité libre de ces goujons 87 comprenant des écrous 88 formant butée pour limiter le déplacement du disque 80 vers le haut.

De plus, le disque 80 est maintenu en position écartée par rapport au disque 77 par des ressorts, par exemple des ressorts à boudin 79 disposés autour de manchons de guidage 78, 83, solidaires respectivement du piston 77 et du disque 80. Ainsi, le disque 80 peut, sous l'effet d'une pression, osciller par rapport au piston 77.

Ce disque 80 est équipé de manière amovible, d'éléments formant des éléments de moule qui, en coopération avec les éléments de moule portéspar le carrousel définiront le moule des articles fabriqués. Ces éléments de moule sont interchangeables en fonction des articles à fabriquer et seront décrits plus en détail pendant la description du carrousel et du fonctionnement de l'installation pour la fabrication d'articles bien déterminés.

Ainsi, la presse auxiliaire joue un rôle important pendant la phase de compression des articles notamment dans des moules verticaux.

Généralement, la presse à vis inférieure actionne la montée et la descente des éléments de moule portés par le piston 77 et le disque 80 pour les associer avec les éléments de moule portés par le carrousel et décrits ci-après, à un moment donné. De plus, elle participe à la création d'une pression moyenne exercée sur le matériau ou mélange se trouvant dans le moule et règle par l'oscillation verticale du disque 80 par rapport au piston 77 la quantité de mélange introduite dans le moule. Enfin, pour la fabrication de certains produits et comme cela sera décrit plus en détail pour la fabrication de garnitures de frein, la presse à vis inférieure provoque une circulation forcée de l'air chaud dans toute les unités de travail synchronisée avec la cadence de travail pour ainsi accélérer le séchage et le traitement des produits moulés, et assure la sortie de l'air et de la vapeur contenus dans le mélange pendant la phase de compression à une pression moyenne et son refroidissement.

Quant à la presse à vis supérieure, elle procure un appui à moyen de façonnage des produits de forme élaborée réalisant des perforations, emboutissages, ou analogues. Elle supporte également un arbre de commande pour actionner les outils de façonnage ou de perforation des articles devant être fabriqués pendant la phase de compression exercée par la presse principale qui sera décrite ultérieurement et la presse à vis inférieure de cette presse auxiliaire. D'autres fonctions de la presse à vis supérieure apparaîtront dans les explications de fabrication de produits ou articles particuliers.

La presse principale qui est située en opposition de la presse auxiliaire et est montée fixement sur la plate-forme immobile 7, peut être toute presse permettant d'exercer une pression sur un produit et avantageusement une pression augmentant progressivement pour appliquer en dernier lieu une haute pression sur le matériau contenu dans le moule.

Avantageusement, cette presse peut être une presse hydraulique, pneumatique, pneumatique/à explosion combinée.

Dans le mode de réalisation illustré de la présente invention, et qui est seulement donné à titre d'exemple, cette presse comprend un cylindre extérieur 95 formant l'enveloppe extérieure de la presse et fixé par un évasement 96 à la plate-forme circulaire immobile 7 par les écrous 97. La partie inférieure de la paroi présente deux élargissements successifs: un premier élargissement supérieur 98 s'étendant vers le centre de la presse sous forme d'un réservoir annulaire à eau de refroidissement 99 ayant une paroi intérieure 100 équipée d'un presse-étoupe d'étanchéité 101 et d'un orifice 101a de récupération des fuites de fluide hydraulique et comprenant sur sa partie extérieure une arrivée d'eau de refroidissement (non représentée). Ce premier élargissement comprend au moins un alésage dans sa partie inférieure pour définir des cylindres 102a, 102b, 102c répartis sur le pour tour de la presse et comprenant chacun une chemise sèche 103a, b, c, qui sera plus détaillée lors de la description de cette presse comme presse à explosion/pneumatique combinée, et

un deuxième élargissement inférieur 106 définissant un cylindre dans lequel est logé un récipient de mélange ou matériau 107 sans couvercle, muni d'un fond 107a découpé selon une ouverture configurée à l'ouverture supérieure du moule sous-jacent. Les parois verticales du récipient 107 sont munies d'orifices 108 les reliant avec l'atmosphère à travers la paroi de l'élargissement 106 et d'une ouverture rectangulaire 109 alignée avec les ouvertures correspondantes de distribution 9 du moyen d'alimentation et les ouvertures 106a de l'élargissement 106. Avantageusement, le fond 107a comprend une rainure annulaire 110 dans laquelle est disposé un feutre 111 pour permettre le lavage du dessus du moule porté par la plate-forme de l'unité de travail, cette rainure étant reliée par une pluralité de petits canaux (non représentés) au réservoir d'eau de refroidissement 99, qui est relié par un passage 118 au réservoir supérieur 117 d'eau de refroidissement disposé entre l'enveloppe extérieure 95 et la partie supérieure du cylindre intermédiaire 116, isolé du réservoir intermédiaire 196 d'huile sous pression par l'évasement 114 et le joint 115. A l'intérieur du cylindre intermédiaire 116 est disposé un cylindre central comprenant un piston 168 muni de segments d'étanchéité 169 et d'une tige d'arbre 167 bridés en rotation par l'intermédiaire d'un joug 173 monté sur des glissières 175a, 175b, et fixé par un écrou 174 sur la tige 167. Le piston est contenu dans un cylindre mobile 133 sans fond ni couvercle muni à sa partie inférieure d'un évasement 134, de passages pour la circulation d'air frais 187a, 187b et d'un rétrécissement 135 vers le milieu de sa hauteur qui sert à l'appui d'un disque intermédiaire mobile 128 au-dessus duquel la partie supérieure rétrécie du cylindre 133 coulisse étanchément dans l'intérieur d'un cylindre guide 131 fixé par un élargissement sous forme d'un disque supérieur immobile 130 sur la plate-forme 7. L'extrémité supérieure 136 du cylindre 133 est en contact permanent avec le piston d'une pompe à huile sous pression disposée à l'intérieur d'un cylindre extérieur 137 reposant par son évasement inférieur 138 sur la surface du disque 130 de l'évasement du cylindre 131 et étant fixé sur la plate-forme 7 par les écrous 113. Le corps de cette pompe a huile est constitué par un couvercle 139 définissant le fond d'une cage 140 fixée par son évasement 141 et les écrous 142 sur le cylindre 137. Cette pompe comprend donc un cylindre moteur 143 définissant un réservoir d'huile sous pression 151 et dans lequel coulisse un piston 144 pourvu de joints d'étanchéité 145 et dont la partie centrale est emmanchée sur un rétrécissement 146 de la partie supérieure rétrécie 136 du cylindre central mobile 133. Le piston de la pompe à huile est entraîné par une presse à vis inférieure renfermée dans la cage 140 et qui est constituée par une roue dentée 152 en prise avec une roue dentée d'entraînement 153 supportée à ses faces supérieure et inférieure par des roulements à rouleaux 154, 155 et comprenant un alésage central dans lequel est encastrée une vis mère de montée 156 qui est en prise avec un arbre fileté 157 solidaire du piston 144. La presse principale comprend également, disposés en couronne autour du cylindre central 133 et du cylindre guide 131, plusieurs vérins hydrauliques, par exemple huit vérins 123a à 123h sans fond ni couvercle, ayant tous le même diamètre extérieur et logeant dans leur partie supérieure les têtes de huit pistons différentiels libres 124a à 124h chacun muni d'un joint d'étanchéité 125a à 125h et dans leur partie inférieure de diamètre intérieur réduit, les tiges 126a à 126h de ces pistons différentiels jouant le rôle de pistons plongeurs. Chacun de ces vérins hydrauliques soudé dans son ouverture respective formée dans un premier disque inférieur immobile 122 commun, traverse le disque intermédiaire mobile 128 supporté par le rétrécissement 135 du cylindre central 133 pour s'encastrer dans son alésage 132a à 132h dans le disque supérieur immobile 130 faisant partie du cylindre de guidage 131. Le disque mobile formant le fond d'un cylindre de guidage 129 monté coulissant à l'intérieur de la partie supérieure d'un cylindre 116 intermédiaire est monté manière coaxiale dans l'enveloppe extérieure 95 et supporté par son évasement supérieur 112 sur la plate-forme 7. Ainsi, le disque 128 et son cylindre de guidage 129 peuvent coulisser librement de manière étanche dans la partie supérieure du cylindre intermédiaire 116. Les vérins hydrauliques 123a à 123h sont alimentés successivement à partir du réservoir à huile sous pression 151 à travers un seul orifice prévu dans le fond rotatif 150 du cylindre 147 entraîné en rotation par une roue dentée d'entraînement 149 qui est en prise avec une surface dentée 148 de la paroi verticale 147 de ce cylindre.

De plus, cette presse principale comprend une presse à vis supérieure disposée au-dessus de la presse à vis inférieure de commande de la pompe à huile sous pression, et enfermée dans une cage supérieure 158 dont l'évasement inférieur 159 est fixé par des écrous 160 sur l'évasement supérieur 161 de la cage 140. Cette presse comprend une roue dentée 162 en prise avec une roue dentée d'entraînement 163 s'appuyant par l'intermédiaire de roulements à rouleaux inférieur et supérieur 164, 165 sur l'évasement inférieur 159 et un couvercle 170 fixé par des écrous 172 sur l'évasement supérieur 171 de la cage 158. La roue dentée 162 comprend un alésage central dans lequel est insérée une vis mère 166 de montée, en prise avec l'arbre fileté 167 bridé en rotation par le joug 173. Cette presse à vis supérieure permet donc de faire monter ou descendre le piston 168 dans le cylindre 133.

Cette presse principale comprend également un piston moteur 176 comportant une ouverture centrale dans laquelle est emmanché par son évasement 134 le cylindre central mobile 133. Ce piston coulisse de manière étanche par sa partie épaisse 177 et sa partie supérieure mince 178 dans la partie inférieure rétrécie 119, 120 du cylindre intermédiaire 116. La partie inférieure 177 de ce piston comprend un évasement 179 formant un anneau solidaire coulissant contre la paroi intérieure du premier élargissement 98 du cylindre extérieur 95. Ledit piston 176 comprend des goujons 185 de montage formant saillie à sa surface inférieure et servant à la fixation d'un piston outil 188 ou outil de presse échangeable, fixé par les écrous 186 à travers les ouvertures de service 190, 191, ayant une forme appropriée selon les articles à produire et pouvant porter des éléments de moule pour former le moule en coopération avec les éléments de moule du carrousel et les éléments de moule de la presse auxiliaire définis ci-dessus.

Par ailleurs, le piston outil 188 comprend une surface périphérique coulissant contre les parois du récipient 107 pour venir masquer partiellement l'orifice 109 d'alimentation du matériau lorsque le piston outil est en position basse. La surface inférieure de ce piston comprend un bossage central 188a de dimensions conjuguées à l'ouverture supérieure des moules et une surface périphérique en escalier 188b, 188c pour permettre au mélange ou matériau en surplus non contenu dans le moule d'être refoulé à travers les orifices 109, 106a et 9 dans le moyen d'alimentation sans subir la pression élevée et donc éviter une agglomération du produit contenu entre la surface périphérique du piston outil et le dessus du moule.

Ainsi, la presse principale comprend tous les organes nécessaires à son fonctionnement et permet d'appliquer, si elle est utilisée comme presse hydraulique, successivement une faible, une moyenne et une haute pression sur le matériau ou mélange contenu dans le réservoir 107 et le moule sousjacent. Ainsi, par actionnement de la presse à vis inférieure, le piston 144 est poussé dans le réservoir à huile 151 et alimente successivement l'huile sous pression dans les vérins hydrauliques 123a à 123h à travers le seul orifice du fond rotatif 150 du distributeur à huile sous pression. Simultanément, l'énergie mécanique provenant de la presse à vis inférieure est transmise sur le piston moteur 176 par l'intermédiaire du cylindre central mobile 133, et ainsi, quand tous les pistons différentiels libres descendent consécutivement vers leur point mort bas respectif, l'intensité de la pression exercée consécutivement contre la tête de chaque piston différentiel est réglable pendant toute la descente du piston moteur 176 par le réglage de la pression exercée par la pompe à huile.

Ainsi, cette presse principale présente les avantages suivants:

Elle permet d'exercer une grande force de pression par rapport à son encombrement étant donné que la pression finale est obtenue par l'addition des différentes pressions produites dans chaque vérin hydraulique, cylindre central et réservoir à volume variable 194, 196, 197, 198 alimenté en huile sous pression par le déplacement des pistons libres dans chaque vérin hydraulique et des tiges de pistons formant plongeur 126a à 126h de ces pistons libres;

une progression de la pression exercée par l'alimentation successive des vérins hydrauliques 123a à 123h;

une course importante du piston moteur 176 par rapport à la hauteur de la presse et par conséquent une grande efficacité d'alimentation des moules;

la possibilité d'utiliser la presse comme une presse hydraulique à fonctionnement souple étant donné qu'il est possible de régler la vitesse d'augmentation de pression par la vitesse d'alimentation des vérins hydrauliques, l'utilisation de cette presse comme une presse hydraulique pneumatique ou une presse hydraulique-pneumatique et à explosion combinée, comme cela sera décrit ci-après.

De plus, cette presse principale est un des éléments prépondérants permettant le fonctionnement de l'installation selon l'invention. En effet, il est facile de remplacer l'outil de presse pour l'adapter aux formes des articles à fabriquer. Elle présente une très bonne accessibilité aux différents dispositifs de réglage, une grande adaptabilité à la cadence de travail et au procédé de traitement de chaque article à fabriquer, par exemple par réglage de la course du piston autour de son point de départ, de la vitesse de descente et de retour du piston moteur, de la programmation de son fonctionnement telle que l'accélération, le ralentissement, le retard, l'arrêt, la durée et le degré de pression, le serrage synchronisé automatique des moules ou des pièces à presser, et enfin le montage simple des pièces interchanchangeables des outils et accessoires complémentaires préfabriqués en accord avec la nature de la matière première de départ.

Comme indiqué ci-dessus, cette presse principale peut être convertie en une presse à explosion combinée hydraulique et pneumatique comme illustré sur les figures 27 à 29.

Pour cela, on encastre dans les cylindres 102a, 102b, 102c formés dans le premier rétrécissement 98 du cylindre extérieur 95 des chemises sèches 103a, 103b, 103c et dans le couvercle de chaque cylindre 102 un siège de soupape 104 et un conduit d'échappement 105. De plus, l'anneau solidaire 179 du piston moteur 176 de la presse comprend des cylindres s'étendant depuis sa face supérieure et définissant des pistons 180a, 180b 180c s'encastrant de manière coulissante respectivement dans les chemises 103a, 103b, 103c. Chaque piston est pourvu de segments d'étanchéité 181 et est alésé sur toute sa hauteur pour former une enceinte 182 dont le fond comprend un alésage central formant guide de soupape, et débouchant à la face inférieure de l'anneau solidaire 179. Le bord supérieur de chaque piston 180a, 180b, 180c est usiné pour former un siège de soupape 184. Chaque piston 180a, 180b, 180c est équipé de deux soupapes, une soupape d'admission d'air frais 736 dont la tête 737 s'appuie sur son siège de soupape 184 et une soupape d'échappement 738 montée coulissante dans un alésage central de la soupape d'admission 736 et comprenant une tête de soupape 741 s'appuyant contre le siège de soupape 104, un corps de soupape 740 coulissant à l'intérieur de l'alésage central de la soupape d'admission 736 et une tige de soupape 739 montée coulissante dans l'orifice 183 guide-soupape de l'anneau solidaire 179, l'extrémité de la tige de soupape allant au-delà de la face inférieure de cet anneau solidaire 179 et étant munie à son extrémité traversante d'écrous de réglage 743 accessibles à travers l'alésage d'accès 744 et l'ouverture de service 191 pour que le déplacement du piston moteur 176 de la presse provoque l'ouverture de la soupape d'échappement quand ce piston moteur a parcouru une distance déterminée, pour ainsi régler la profondeur de pression ou de compression exercée par le piston outil 188.

Ainsi, la soupape d'admission 736 lorsque sa tête 737 repose sur son siège de soupape 184, définit avec la tête de soupape d'échappement 738 une chambre d'explosion 742 et, à sa partie inférieure, une chambre d'air frais 745 dans le piston 180. Cette chambre d'air frais 745 est reliée d'une part, à l'atmosphère, et, d'autre part, à l'enceinte du cylindre central mobile 133 de la presse par une soupape d'admission d'air frais 746 dont la tête a son siège 193 formé dans une plaque circulaire d'admission d'air frais 192 fixée entre l'évasement 134 du cylindre 133 et la surface supérieure du piston outil 188. La tige de cette soupape est montée coulissante dans un orifice guide soupape foré à partir d'un alésage formé dans le corps du piston 188, tandis que la partie intermédiaire du piston 188 est étendue sous forme d'un disque 747 qui permet la fixation par les écrous 752 des outils de presse 748 échangeables, qui coulissent avantageusement par leur partie élargie à l'intérieur de l'élargissement 106 du cylindre extérieur 95 de la presse principale. Enfin, cette presse à explosion comprend des moyens d'alimentation de carburant dans la chambre 742 et des moyens d'allumage (non représentés).

La presse à explosion fonctionne de la manière suivante:

La cadence de travail est répartie en trois phases:

l'admission, la compression, et l'explosion-échappement. L'admission illustrée à la figure 27 commence dès le moment de l'achèvement du temps de travail illustré sur la figure 29 et se termine avec l'avancement d'un nouveau moule ou nouveau matériau à transformer sous l'outil de presse 748, (figure 28), par exemple par avancement du carrousel, le produit fini 751 étant, quant à lui, transporté par le même carrousel sur le secteur de décharge.

Ainsi, pendant la phase d'admission, la presse à vis supérieure de la presse principale est mise en marche arrière, pour faire monter son arbre fileté 167 et donc le piston central 168 du cylindre central mobile 133, jusqu'à son point mort haut, il en résulte l'ouverture de la soupape 746, l'admission d'air frais dans le cylindre central mobile 133, la montée solidaire du piston moteur 176, du piston outil 188, de l'outil 748 et des pistons 180a, 180b, 180c à leur point mort haut respectif, ces derniers entraînant la fermeture de la soupape d'admission, tandis que la soupape d'échappement reste partiellement ouverte.

Puis, pendant la phase de compression, la vis supérieure de la presse est de nouveau mise en marche avant, le piston central 168 descendant vers son point mort bas en fermant la soupape d'admission d'air frais 746 et en comprimant l'air se trouvant dans le cylindre central 133 à travers les canaux 187b dans les trois chambres de combustion 742 reliées entre elles par des conduits horizontaux (non représentés) formés dans la paroi intérieure 100 du réservoir à eau de refroidissement 99, l'ouverture de la soupape d'admission 736 étant provoquée par la pression de l'air d'admission, tandis que la soupape d'échappement 738 sera fermée par cette même pression. Après injection du carburant par les dispositifs d'injection non représentés, on provoquera l'explosion par le dispositif d'allumage du mélange gazeux contenu dans la chambre de combustion 742, ce qui provoquera la descente des pistons 180 et donc la transmission du choc sur l'anneau solidaire 179 du piston moteur 176 et par conséquent sur l'outil 748 qui viendra façonner la plaque 749 en produit fini 751 dans le moule 750 fixé sur le carrousel. Lorsque le piston moteur 176 ou le piston outil 188 a parcouru une distance déterminée, il vient en contact avec les écrous 743 entraînant de ce fait l'ouverture de la soupape d'échappement 738 et provoquant ainsi l'échappement des gaz brûlés dans l'atmosphère par le conduit d'échappement 105 (figure 29). Le cycle recommence par l'entraînement de la presse à vis supérieure en marche arrière.

On décrira maintenant les différents modes de réalisation du carrousel et des autres moyens ou secteurs de l'unité de travail en se référant à la fabrication de plusieurs articles particuliers tels que des blocs de garnitures de frein, des tubes en amiante-ciment et des pneus d'automobile.

De manière générale, la productivité d'une installation pour chaque produit ou article à fabriquer sera établie en fonction des rapports entre les données suivantes:

la cadence de travail (cad.tr.),

la durée des opérations mécaniques qui comprennent l'alimentation du moule, le traitement mécanique et la durée de l'avancement du carrousel (T.méc.),

la durée des opérations de décharge et démoulage des articles finis (T.téch.),

la durée du traitement thermique, chimique ou analogue qui représente une constante pour chaque article à fabriquer (T.trait.),

le nombre de secteurs de chaque unité de travail qui correspond au nombre d'arrêts du carrousel pendant un cycle de travail qui commence par l'alimentation des moules et finit par la décharge du produit fini (N.Sect.),

le volume des moules correspondant au volume des moules verticaux ou au nombre de moules horizontaux situés dans chaque colonne respective pour chaque produit particulier et participant dans un cycle de travail égal à une révolution du carrousel.

La durée de la cadence de travail pour chaque produit particulier doit être adaptée au facteur de la durée la plus longue parmi les durées des opérations mécaniques, de traiment oude décharge. Etant donné que l'installation fonctionne d'une manière continue et automatique, réglable, la durée des traitement mécaniques et traitements de décharge est réduite de manière importante et donc la cadence de travail sera surtout limitée par la durée du traitement des articles à produire distribuée avantageusement sur tous les secteurs du carrousel. Cependant, pour profiter de la diminution des durées de traitements mécanique et de décharge, on règle la distribution de la durée de traitement en choisissant un nombre correspondant de moules verticaux et respectivement le nombre de colonnes de moules horizontaux de manière à ce qu'un rapport convenable soit établi entre le nombre de secteurs et la durée de la cadence de travail qui est calculée de la manière suivante.

$$\text{N. sect.} = \frac{\text{T.trait.} + \text{T.mec.} + \text{T.téch.}}{\text{cad. tr.}}$$

Il en résultera donc un nombre important de secteurs ce qui permettra d'augmenter la productivité de l'installation d'une manière favorable pour la fabrication de produits exigeant un traitement prolongé. Un tel carrousel avec un nombre de secteurs important n'est pas adapté pour la production de produits ayant une durée de traitement relativement courte étant donné que dans ce cas la cadence de travail sera déterminée par la durée des opérations mécaniques ou des opérations de décharge.

Dans le cas d'un article demandant une longue durée de traitement comme par exemple la fabrication des pneus d'automobile, pour augmenter la productivité de l'installation, on augmentera le nombre de colonnes contenant les moules horizontaux et donc le nombre de secteurs du carrousel en effectuant ainsi une répartition uniforme du temps de traitement de chaque produit particulier entre tous les arrêts du carrousel pendant le cycle de travail y compris pendant ceux relatifs aux opérations mécaniques et à la décharge du produit fini.

On décrira ci-dessous deux variantes du carrousel appropriées pour la fabrication de plusieurs produits différents demandant des temps de traitement longs ou courts:

Une première variante du carrousel comprenant par exemple quatre secteurs et tournant autour de son propre axe hors du cylindre central et corps cylindrique 6, chaque secteur étant muni d'un moule vertical construit pour la fabrication par exemple de garnitures de frein à tambour. La position de l'unité de travail et du carrousel par rapport au moyen d'alimentation est clairement illustrée à la figure 3;

une deuxième variante du carrousel comprenant par exemple six secteurs, et tournant autour du corps cylindrique 6, cette variante convenant spécialement à la fabrication de:

tuyaux en amiante-ciment en une pièce avec des brides de fixation, soit par compression d'un seul mélange, soit par voie centrifuge d'au moins un mélange, à l'aide de moules verticaux s'ouvrant horizontalement;

pneus d'automobile par compression de mélange de compositions chimiques différentes à l'aide d'un grand nombre demoules horizontaux empilés en colonnes verticales, une pour chaque secteur.

Bien entendu, les exemples de moules donnés sont adaptés aux fabrications d'articles pris comme exemple. Mais, il est possible d'adapter sur cette installation et le carrousel toutes formes de moules des plus simples au plus sophistiquées, s'ouvrant verticalement, horizontalement ou de manière combinée telles que par exemple des moules à deux pièces combinés avec une assiette amovible pour la fabrication de lamelles d'embrayage à plateau en amiante, les moules étant alimentés par deux mélanges de compositions différentes ou des moules adaptés pour la fabrication de produits creux en porcelaine ou analogue. Dans le premier mode de réalisation du carrousel pour la fabrication par exemple de garnitures de frein, et illustré aux figures 1A à 1I, 2A à 2G, 3, 4, le carrousel comprend quatre moules verticaux qui seront déplacés successivement d'un secteur à l'autre de l'unité de travail selon la cadence de travail déterminée par la relation indiquée précédemment. La durée de chaque arrêt dans chaque secteur est égale à la durée de la cadence de travail.

Dans ce mode de réalisation, les moules restent toujours à l'intérieur du carrousel même pendant la décharge des produits finis. Bien entendu, dans l'installation de l'invention, on peut disposer plusieurs unités de travail autour des cylindres 1 et 6 centraux et du moyen d'alimentation. Dans ce cas, le moyen d'alimentation comprendra autant d'orifices de distribution 9 que le nombre d'unités de travail fixées sur les plates-formes 2, 4, 5, 7. Pour plus de simplicité, on considèrera qu'une seule unité de travail est fixée sur les plates-formes 2, 4, 5, 7.

Le carroussel de cette unité de travail comprend une partie immobile et une partie mobile. La partie immobile comprend:

un tambour immobile 200 fixé par des écrous 201 sur la plate-forme immobile 5 du bâti de l'installation. Ce tambour comprend une partie centrale épaisse 202 et une partie mince creuse 203 située à l'opposé permettant la circulation de l'air chaud sortant des moules sous traitement thermique;

un dispositif de guidage à tige 204 saillant de la partie épaisse 202 et deux ouvertures découpées dans la surface de la partie épaisse 202 du tambour 200, la première 205 en dessous de la presse principale, la deuxième 206 située à la place d'arrêt de décharge, cette dernière étant obturée par un couvercle amovible 207 inséré dans l'espace créé par le raccourcissement de la paroi du tambour immobile 200 s'ouvrant au moment de la décharge des produits finis, actionné par une roue dentée 208 emmanchée sur un axe 209 saillant de la surface de la moitié épaisse 202 du tambour 200, et en prise avec une roue dentée 210 d'entraînement calée sur un arbre de commande 211 traversant un orifice perforé dans la surface de la plate-forme 5, cet arbre de commande étant entraîné par des moyens d'entraînement non représentés.

Dans le mode de réalisation illustré et notamment pour la fabrication des blocs de garnitures de frein, la plate-forme immobile comprend au-dessus de la presse auxiliaire une ouverture pour loger un outil femelle 89 formant le fond du moule et constitué par une plaque munie d'une série d'ouvertures configurées à la forme d'un outil mâle fixé sur la plaque 80 du piston outil 77 de la presse auxiliaire. Cet outil mâle comprend une plaque horizontale 81 fixée par les écrous 86 sur le disque 80, et des plaques verticales ou fourchettes 82 espacées les unes des autres et formant un réseau. Avantageusement, un passage d'air chaud 84 est prévu entre la plaque horizontale 81 et le disque 80 et communique avec des canaux de chauffage percés dans le corps desdites fourchettes à travers un orifice 85 percé dans la plaque horizontale 81.

Au-dessous des moules portant les produits finis et situés dans le ou les secteurs de l'unité de travail correspondant au traitement thermique, des alésages 212 reliés au système de chauffage; dans le secteur de décharge de l'unité de travail, une soupape d'aspiration reliée à la pompe de refroidissement de l'air chaud et une ouverture s'étendant en dessous des garnitures en bloc 247 suspendues pour permettre le passage d'un cric hydraulique non représenté situé au dessous de la plate-forme 5 pour provoquer la montée des blocs 247 finis.

La partie mobile du carrousel disposée à l'intérieur du tambour immobile 200 comprend:

un tambour mobile 213 d'un diamètre inférieur au diamètre du tambour immobile 200, muni dans la partie inférieure de sa paroi verticale d'au moins un passage de refoulement de l'air chaud 214, le fond 215 et le couvercle 216 de ce tambour étant reliés en leur centre par un cylindre solidaire 217, chaque couvercle 216 et fond mobile 215 comprenant quatre ouvertures superposées disposées régulièrement dont 218a, 218c supportent par leur bords 219a, 219c les évasements 220a, 220c des moules tandis que les ouvertures inférieures 221a, 221c encerclent étroitement les corps extérieurs 222a, 222c des moules pour les retenir en position verticale et stable. Bien entendu, les deux autres moules du carrousel non illustrés sont supportés d'une manière analogue dans les ouvertures 218b, 218d et 221b, 221d des couvercles et fonds;

un orifice alésé dans le centre du fond 215, superposé à l'orifice central correspondant réalisé dans la surface de la plate-forme circulaire immobile 5 pour ainsi permettre le passage d'un axe central 223 monté à travers le dispositif de guidage à tige 204 du tambour immobile 200 traversant le cylindre interne 217 du tambour mobile 213 solidaire par au moins une clavette 224. La partie inférieure rétrécie 225 de l'axe central 223 est encastrée dans un arbre de commande d'entraînement du carrousel 226 qui est à son tour encastré par sa partie inférieure 227 dans une partie étendue 75 du fond 76 du cylindre guide-outil 73, 73a de la presse auxiliaire, et supporté, par exemple par un roulement à bille 228 encastré dans le fond 76, fixé par les écrous 74 sur la plate-forme 4. Cet arbre comprend une roue dentée 229 en prise avec une roue dentée d'entraînement 230.

Dans ce premier mode de réalisation du carrousel, particulièrement adapté à la fabrication de produits frittés en grande série et par exemple à la fabrication de garnitures de frein, le diamètre du moule ainsi que sa hauteur sont déterminés en fonction des dimensions des produits à fabriquer et du volume de la production désirée. Les éléments constructifs du moule qui peuvent être fixes, mobiles ou amovibles, communs ou propres, une fois qu'ils sont installés, deviennent les éléments de l'installation à l'aide desquels le moule est formé et démonté pendant le processus de travail en synchronisation avec la cadence de travail.

Dans le cas de fabrication de garnitures de frein en bloc, les éléments communs des moules sont l'outil mâle 82 porté par l'outil de presse 77 de la presse auxiliaire, l'outil femelle 89, et le piston outil 188 porté par le piston moteur 176 de la presse principale. Chaque moule comprend des éléments propres et notamment un corps extérieur 222a, c, en forme de cylindre sans fond s'appuyant par un évasement 220a, c, de son couvercle 231c, sur l'ossature 213a, b, c, d, des tambours mobiles 213 du carrousel. Le couvercle 231 glisse étroitement pendant l'avacement du carrousel contre la surface inférieure du fond 107a du récipient de mélange 107, ce couvercle présentant une ouverture par exemple de forme ellipsoïde conjuguée à l'ouverture du fond 107a du récipient 107 pour permettre le passage du bossage 188a du piston outil 188 de la presse principale. Le moule comprend également un cylindre appelé récipient de modelage 232a, b, c, d, sans fond ni couvercle supporté par le couvercle 231, réalisé soit en une seule pièce avec ce couvercle soit soudé ou fixé à celui-ci.

Avant la formation du moule par montée de l'élément mâle 82 sous l'action de la presse auxiliaire, un cadre en fer 237 profilé en U, ouvert du côté concave de la paroi du récipient de modelage 232 est inséré dans celui-ci et posé sur les surfaces horizontales des barres glissières 233, 234, formant saillie sur les parois longitudinales du récipient de modelage 232 pour former entre elles des rainures verticales de guidage des fourchettes 82, les fourchettes extrêmes 82a et les rails de guidage 235, 236 étant avantageusement raccourcis par rapport aux autres fourchettes de manière que, une fois arrivés à leur point mort haut inférieur, ils prennent en charge le cadre en fer 237 pour que la surface supérieure du cadre 237 vienne au même niveau que les surfaces horizontales des fourchettes 82 pour ainsi former avec l'extrémité supérieure de celles-ci une surface unique définissant un fond temporaire amovible d'un récipient de mélange à haute pression 238, entre la surface inférieure du bossage 188a de l'outil de la presse principale et ladite surface. Le fond ainsi formé par les extrémités supérieures des fourchettes 82, les rails de guidage 235, 236 et le cadre en U 237, présente des ouvertures conformes aux dimensions des garnitures en bloc 239 définies entre chaque fourchette 82 et qui seront remplies par le haut à partir du récipient 107 jusqu'à une moyenne pression puis par le mélange contenu dans le récipient à haute pression 238 pendant la phase de haute pression. Ainsi, pendant le moulage on forme une plaque porteuse 240 continue d'épaisseur correspondant à l'espace terminal défini entre la surface inférieure du bossage 188a de l'outil de la presse principale et la surface supérieure des fourchettes 82. Avantageusement, l'outil de presse 188 comprend des chevilles 189a montées de manière oscillante dans des douilles 189 munies de ressorts 189b vissées dans la surface inférieure du bossage 188a du piston outil 188 pour former des orifices 241 dans la plaque porteuse 240, avantageusement un entre chaque fourchette 82, pour permettre le passage de l'air chaud de traitement thermique dans le secteur de traitement thermique de l'unité de travail, de l'ensemble des blocs de garnitures de frein 239 ainsi produites et suspendues par leurs plaques porteuses 240.

Le dispositif de circulation des fluides de traitement dans ce mode de réalisation d'une unité de travail ou de carrousel comprend des chambres de chauffage 242a, b, c, d, du récipient de modelage 232 définies par ce récipient 232 et la paroi des moules 222. Ces chambres de chauffage sont reliées entre elles par des passages d'air 243a, b, c, d, situés à la partie inférieure des moules, et avec l'enceinte du tambour mobile 213 par au moins un passage de sortie d'air 244. De plus, ce système de chauffage comprend une chemise de chauffage 245 définie par un cylindre monté autour de la partie inférieure de l'arbre d'entraînement du carrousel 226 et monté par des écrous 74 sur la partie évasée 75 du fond 76 du cylindre guide-outil 73. Ce réservoir est partagé en deux chambres inférieure et supérieure par une paroi ou diaphragme 246, la chambre supérieure comprenant un conduit 248 d'alimentation en gaz chaud tel que par exemple de l'air chaud, un second conduit 93 de communication avec la chambre supérieure 247 définie par le piston 77 de la presse auxiliaire dans le cylindre guideoutil 73, un troisième conduit 249 équipé avantageusement d'un thermostat 250 reliant cette chambre supérieure au conduit 212 de gaz chaud prévu dans le carrousel et notamment dans le secteur de traitement thermique des produits. La chambre inférieure comprend, quant à elle, un premier conduit 94 de communication avec la chambre 251 inférieure définie par le piston 77 dans le cylindre 73 de la presse auxiliaire, un second conduit d'alimentation 252 par exemple de l'air frais et un troisième conduit 253 de refoulement de gaz chaud, ce troisième conduit étant avantageusement relié au conduit d'alimentation de gaz chaud 248 de la chambre supérieure définie ci-dessus. Avantageusement, ce système de chauffage peut être équipé d'une pompe de circulation d'air chaud et de thermostats. De plus, pour permettre un recyclage de cet air chaud, le tambour immobile 200 est relié par une conduite de refoulement 254 à, par exemple, la pompe à air chaud (non représentée) pour recycler cet air dans la chambre supérieure du cylindre 245.

On décrira maintenant le cycle de travail pour la fabrication d'ensembles de blocs de garnitures de frein réalisés dans l'installation décrite précédemment, en se référant à la figure 5.

Tout d'abord, nous supposerons que la durée nécessaire pour réaliser la transformation d'un mélange à base d'amiante en produit semi-fini sec par voie de pressage et de traitement à chaud est égale à environ 12 mn. Ainsi, d'après la formule indiquée à la page 44 et compte tenu que le carrousel possède quatre secteurs munis de quatre moules verticaux, la cadence de travail sera de 12: 4 = 3 mn.

Bien entendu, il est nécessaire avant de débuter la fabrication proprement dite des garnitures de frein d'alimenter le moyen d'alimentation et de réchauffer les différents éléments de moule du carrousel.

Très brièvement, le moyen d'alimentation est tout d'abord alimenté par charges successives d'amiante qui sont mélangées par les ailettes agitatrices 49 avec les matériaux auxiliaires (eau, laiton, filscoupés, poudre de métal, résine, caoutchouc ou analogue) par les orifices 50 pour ainsi réaliser, à la fin de la charge dans le mélangeur, un mélange prêt à être compressé. Après une homogénéisation suffisante, le fond mobile du mélangeur est entraîné en rotation pour que cette charge soit alimentée dans l'alimentateur de mélange et soit amenée vers le fond de celui-ci par la vis sans fin 30, il est donc possible de réaliser une nouvelle charge d'amiante et de produits auxiliaires dans le mélangeur et de répéter ces opérations jusqu'à ce que l'alimentateur de mélange soit plein. L'alimentation de la charge et son mélange dans le mélangeur, puis son alimentation dans l'alimentateur de mélange sont réalisées pendant une durée de la cadence de travail, c'est-à-dire toutes les trois minutes. Ainsi, chaque fois qu'une charge de produit sera introduite dans un moule à travers le dispositif régulateur de dosage et de refoulement, une nouvelle charge sera alimentée dans l'alimentateur de mélange à partir du mélangeur.

Par ailleurs, la circulation d'air chaud dans le carrousel est réalisée d'une part, par la pompe à air chaud (non représentée) et, d'autre part, par le mouvement du piston 77, qui chasse l'air chaud de la chambre 247 définie dans le guide-outil 73 quand la presse à vis inférieure de la presse auxiliaire est actionnee pour faire monter le piston 77 et l'outil mâle de moule 82 dans le moule 222 du carrousel situé dans le secteur de l'unité de travail comprenant le moyen formaunt presse. Simultanément, ce mouvement du piston 77 aspire de l'air frais dans la chambre inférieure 251 du cylindre guide-outil 73 pour refroidir cette presse.

En conséquence, lorsque tous les éléments de l'installation du système de chauffage sont chauffés à une température prescrite pour le traitement du produit, et qu'un nombre de charges successives suffisantes a été alimenté dans le moyen d'alimentation, la fabrication peut commencer à être réalisée de manière continue et automatique de la manière décrite ci-déssous et représentée dans le diagramme de la figure 5:

De 0 mn à 0,20 mn:

la presse à vis inférieure de la presse auxiliaire est mise en marche pour faire monter vers son point mort haut le piston 77, le disque porteur de l'outil mâle 80 et la plaque horizontale de l'outil mâle 81 à leur point mort haut inférieur situé dans le cylindre guide-outil 73, à une distance suffisamment éloignée de la plaque perforée formant l'outil femelle 89 pour permettre un déplacement des fourchettes 82 au moment du démoulage au-dessus de leur point mort haut supérieur. Les fourchettes 82 qui sont montées à travers l'outil femelle 89 vers leur point mort haut rencontre les rails de guidage 235, 236, et la fourchette marginale 82a vient en contact avec le cadre en fer en U 237 supporté par les barres glissières 233, 234 et le soulève jusqu'au point mort haut supérieur commun de manière que la surface supérieure dudit cadre soit au même niveau que les surfaces horizontales des fourchettes 82 pour former le fond du récipient de mélange à haute pression 238 en dessous du récipient du mélange 107. Avantageusement, un feutre de mouillage 90 retenu par un disque 91 est disposé en dessous de la surface de l'outil femelle 89 pour humidifier et graisser la surface des fourchettes 82 lors de leur montée.

La montée du piston 77 a forcé l'air chaud situé dans la chambre 247 et la chambre supérieure du cylindre 245 à travers l'orifice 92 pratiqué dans la surface de l'outil femelle 89 et à travers le conduit 249 et le thermostat 250 pour faire circuler cet air chaud dans toute l'unité de travail et notamment dans le secteur du traitement thermique de cette unité de travail. Par ailleurs, cette montée du piston 77 provoque l'aspiration de l'air frais contenu dauns la chambre inférieure de l'enceinte 245 pour refroidir la presse auxiliaire. A cet instant, le moule est formé par coopération de l'outil mâle monté par la presse auxiliaire, des éléments de moules 222, 231, 232 du carrousel et de l'outil femelle 89. Le moule ainsi réalisé est prêt à recevoir le mélange alimenté dans le récipient 107 par le moyen d'alimentation.

De 0,20 mn à 1,36 mn:

le double fond mobile de l'alimentateur de mélange est entraîné en rotation pour alimenter en mélange la chambre de dosage du dispositif régulateur de dosage et de refoulement associé à l'orifice de distribution 9 débouchant dans le récipient 107 du secteur de l'unité de travail comprenant le moyen formant presse et le moule formé comme indiqué ci-dessus. Le mélange est ainsi alimenté dans le récipient 107 et l'espace vide du moule. La durée du remplissage est bien entendu fonction du volume du moule à remplir et de la pression d'alimentation. Toutefois, comme l'installation est prévue pour réaliser un procédé à sec, le remplissage du moule sous une basse pression n'est pas suffisant et donc on prévoit un volume du récipient de mélange 107 suffisant pour accumuler une certaine quantité de mélange sous basse pression suffisante pour compléter pendant la phase de la moyenne pression le remplissage d'un moule de volume important ou de forme sophistiquée. Le volume du récipient de mélange 107 peut être réglé soit par raccourcissement de la course du piston outil 188 par abaissement de son point mort haut de départ, soit par la mise en marche de la presse principale pour que le piston outil 188 entre en contact avec le mélange sous basse pression à un moment désiré. Dans la description qui suit, c'est cette deuxième solution qui a été choisie.

De 1,36 mn à 1,56 mn:

la presse à vis inférieure de la presse principale est mise en marche pour abaisser son arbre fileté 157 et ainsi exercer une pression sur l'huile de la pompe à huile et une pression sur le piston moteur 176 par l'intermédiaire du cylindre central mobile 133 sur lequel s'appuie le piston 144 de la pompe à huile.

A cet instant, l'orifice unique du fond rotatif 150 du distributeur d'huile sous pression est arrêté au-dessus du premier vérin hydraulique 123a ce qui soumet le piston différentiel libre 124a de ce vérin à la pression d'huile et entraîne le déplacement de ce piston différentiel vers son point mort bas. Ainsi, ce déplacement du piston diffentiel produit simultanément une pression:

au-dessous de sa tête, déplaçant l'huile sous pression se trouvant dans l'enceinte à volume variable 195c à travers l'ouverture 127a dans le réservoir supérieur 194 à huile sous pression à volume variable, ce qui cause la descente du deuxième disque intermédiaire mobile 128 vers son point mort bas et par conséquent la transmission de la pression sur la partie rétrécie 135 du cylindre central mobile 133 sur lequel il s'appuie, et donc sur le piston moteur 176;

au-dessous du deuxième disque intermédiaire mobile 128 déplaçant l'huile sous pression se trouvant dans le réservoir intermédiaire 196 à huile sous pression à volume variable à travers les passages 121a, 121b dans le réservoir extérieur 197 à huile sous pression à volume variable, exerçant ainsi une pression directe sur le piston moteur 176 par l'intermédiaire de la surface horizontale supérieure de la partie mince 178 de sa paroi verticale, la fuite d'huile de ce réservoir 197 étant récupérée à traversle conduit 101a;

dans l'enceinte inférieure 199a à volume variable, située au-dessous de la tige du piston différentiel 124a formant piston plongeur 126a ce qui augmente la pression de l'huile contenue dans le réservoir inférieur 198 et donc transmet une force d'impulsion directement sur le piston moteur 176.

L'opération décrite ci-dessus se poursuit en continuité pendant 40 secondes, étant donné que chaque piston différentiel atteindra son point mort bas en 5 secondes et que le fond rotatif 150 du distributeur d'huile sous pression tourne à une vitesse synchronisée de manière à ce que la descente du huitième piston différentiel à son point mort bas coïncide avec l'arrivée du piston moteur 176 à son point mort bas. Etant donné que le piston moteur 176 rencontrera pendant sa descente trois résistances différenciées, l'intensité de sa pression sera graduée d'une part à une basse pression, puis à une pression moyenne et enfin à une haute pression conforme à la pression graduée de la presse à vis inférieure de la presse principale programmée de manière convenable.

La descente du piston moteur 176 et de son piston outil 188 dans le récipient 107 sous basse pression chasse tout d'abord l'air et la vapeur provenant du mélange chaud accumulé dans la partie supérieure du récipient 107, dans l'atmosphère à travers les orifices 108 situés à la moitié de la hauteur dudit récipient. Simultanément, comme la presse à vis supérieure de la presse principale est débrayée, l'arbre fileté 167 et le piston central 168 descendent au fur et à mesure de la descente du cylindre central mobile 133, le piston central 168 restant constamment en contact avec la partie rétrécie 135 dudit cylindre central 133.

Pendant les deux premières phases de pression c'est, à-dire l'alimentation du mélange sous basse pression et sous moyenne pression, les fourchettes 82 sont maintenues à leur point mort haut supérieur par le piston 77 de la presse à vis inférieure de la presse auxiliaire. Donc les blocs de garnitures de frein sont modelés sous basse pression dans l'espace situé entre la surface de l'outil femelle 89 et les parois verticales des fourchettes 82 ainsi que les parois intérieures verticales des barres de glissières 233, 234, le récipient de mélange 107 étant avantageusement rempli à la moitié de son volume par le mélange sous basse pression.

A ce moment, la communication entre l'alimentateur de mélange et la chambre de dosage du dispositif régulateur de dosage et de refoulement est fermée, le piston outil 188 est en contact avec le mélange se trouvant dans le récipient du mélange 107 et a obturé par sa partie périphérique la moitié de la hauteur de l'ouverture 9 d'accès du mélange et les orifices 108 de sortie d'air de la vapeur dans l'atmosphère. La phase d'alimentation sous basse pression est donc terminée.

De 1,56 mn à 2,10 mn:

cette période correspond à l'alimentation et la compression sous pression moyenne. Cette pression moyenne est réalisée par l'augmentation de la pression dans le réservoir 151 à huile de la pompe à piston 143 de la presse principale. Cette augmentation de pression est transmise au piston moteur 176 et au piston outil 188 de la même manière qu'indiquée précédemment. Le piston outil 188 exerce donc une pression moyenne sur le mélange contenu dans le récipient 107 permettant ainsi un remplissage complet du moule sans pour cela provoquer une agglomération du mélange dans le moule ou du surplus de mélange contenu dans le récipient 107 en dessous du piston outil 188. La chaleur des éléments de moule et notamment des fourchettes provoque le dégagement de l'air chaud et de la vapeur contenus dans le mélange qui se dégagera dans le récipient 107 avec le surplus de mélange. Ce dégagement de la vapeur et de l'air chaud est possible étant donné que le mélange contenu dans le moule est toujours à l'état malléable.

Quant la pression exercée par le piston outil 188 a dépassé une certaine limite, le ressort à boudin 26a du dispositif régulateur de dosage et de refoulement cède, ce qui provoque l'abaissement de la plaque horizontale 27 de l'oscillateur et donc l'ouverture du passage de refoulement, et le mélange en surplus peut être alors refoulé dans l'alimentateur de mélange par la vis sans fin à pas inverse 31. A ce moment, la phase de remplissage à pression moyenne est terminée.

De 2,10 mn à 2,16 mn

cette période correspond au début de la compression à haute pression du mélange dans le moule, celle-ci est provoquée par l'augmentation de la pression dans le réservoir 151 à huile sous pression de la pompe à piston 143 de la presse principale, cette pression étant transmise sur le piston moteur 176 de la manière décrite précédemment.

Le bossage 188a du piston outil 188 pénètre étroitement dans l'ouverture conforme du récipient de mélange à haute pression 238 défini notamment par l'ouverture du couvercle 231. De ce fait, le dispositif régulateur de dosage et de refoulement du moyen d'alimentation n'est plus en communication avec le moule, et le produit en surplus contenu entre la surface inférieure des évidements périphériques 188b, 188c du piston outil 188 sera automatiquement refoulé dans le moyen d'alimentation étant donné que les orifices de refoulement sont toujours en position ouverte. Donc, seul le mélange contenu dans le moule en dessous de la surface du bossage 188a du piston outil 188 est soumis à une haute pression, le reste du mélange contenu dans l'installation et notamment dans les orifices de distribution et la chambre de dosage du dispositif régulateur de dosage resteront toujours à un état malléable.

La pression exercée par le bossage 188a du piston outil 188 sur le mélange contenu dans le moule et dans le récipient du mélange à haute pression 238 donne à ce mélange une densité définitive spécifique le transformant, à un état presque sec, en une pièce avec une plaque porteuse 240 formée entre le bossage 188a du piston outil 188 situé à son point mort bas et la surface supérieure des fourchettes 82 situées à leur point mort haut.

Le surplus de mélange se trouvant dans le récipient du mélange à haute pression 238 détermine la face portante de la plaque porteuse 240. Les ressorts à boudins 79 maintenant en position écartée la plaque 80 et l'outil mâle 89 du piston 77 de la presse auxiliaire sont calculés pour céder à une certaine valeur de pression pour ainsi faire baisser les fourchettes 82 a leur point mort haut inferieur libérant de ce fait un espace additionnel entre leur extrémité supérieure et le bossage 188a pour la formation d'une plaque porteuse 240 d'épaisseur plus grande, cette augmentation d'épaisseur correspondant sensiblement à la distance entre les guides 83 et 78 respectivement de la plaque 80 et du piston 77.

Pendant cette phase, la pression exercée sur le fond 107a du récipient 107 permet de réaliser une étanchéité parfaite du moule.

De 2,16 mn à 2,20 mn

une haute pression est maintenue pendant 4 secondes puis le piston 144 de la pompe à piston est libéré et la phase à haute pression est terminée. La position des différents éléments de l'installation à cet instant est illustrée sur les figures 2A à 2G et 1F, 1H.

De 2,20 mn à 2,40 mn

le piston moteur 176 et le piston outil 188 de la presse principale sont montés à leur point mort haut provoquant ainsi la séparation du bossage 188a du piston outil 188 de la plaque porteuse 240 des garnitures en bloc 239.

La presse à vis inférieure de la presse auxiliaire est alors mise en marche pour provoquer une montée de quelques millimètres de son arbre fileté 69 pour provoquer la séparation des surfaces inférieures horizontales des garnitures en bloc 239 de l'outil femelle 89 et pour détendre les ressorts à boudins 79 s'ils sont restés à l'état contracté.

La presse à vis inférieure de la presse auxiliaire est alors mise en marche arrière pour entraîner la descente de son arbre fileté et du piston 77 et par conséquent des fourchettes 82 vers leur point mort bas, le cadre en fer 237 profilé en U avec la plaque porteuse 240 collée sur sa surface viendronten butée sur les barres glissières 233, 234 situées au niveau du point mort haut inférieur des fourchettes 82, et ainsi permet tront une séparation entre les fourchettes 82 et les garnitures en bloc 239 qui sont donc démoulées et maintenues suspendues dans le moule par le cadre 237 et les glissières 233, 234.

La descente du piston 77 provoque l'aspiration d'air chaud dans l'enceinte 247 et le refoulement de l'air situé dans le chambre inférieure 251 qui a été ainsi réchauffé et qui pourra être utilisé dans un cycle suivant comme air chaud.

De plus, la montée du piston outil 188 démasque les orifice 108 ce qui permet l'évacuation de l'air et de la vapeur d'eau contenue dans le récipient 107.

De 2,40 mn à 3 mn

l'arbre de commande 226, du carrousel est mis en marche et le tambour mobile 213 tourne d'un pas pour amener l'ensemble de blocs de garnitures de frein ainsi produits dans le secteur de traitement thermique suivant de l'unité de travail, ce déplacement du carrousel entraîne automatiquement l'arrivée de nouveaux éléments de moules dans le secteur comprenant le moyen formant presse de l'unité de travail, et donc l'installation est prête à recommencer un cycle de fabrication selon la cadence de travail indiquée, c'est-à-dire 3 mn.

Ainsi, chaque moule particulier de secteur du carrousel aura un cycle de travail de 12 mn qui correspond à la distribution suivante:

de 0 mn à 3 mn: secteur de travail mécanique comme décrit ci-dessus;

de 3 mn à 11,30 mn: cette durée du cycle de travail correspondau traitement thermique qui consiste en une circulation permanente d'air chaud à une température réglée par le thermostat 250 qui circule entre les garnitures suspendues 239 et passe par les orifices 241 formés dans la plaque porteuse 240 pour être refoulée vers la chambre supérieure du cylindre 245. Ce traitement thermique est réalisé dans les secteurs suivants du carrousel et dans le secteur de décharge des produits semi-finis qui sera décrit ci-dessus.

De 11,30 mn à 12 mn:

cette durée du cycle de travail correspond à la décharge du produit lorsque le carrousel a amené le moule dans le secteur de décharge et de démoulage de l'unité de travail. Ainsi, le moule arrivé dans ce secteur est aligné verticalement avec l'ouverture 206 pratiquée dans la surface de la moitié épaisse 202 du tambour immobile 200 du carrousel tandis que sa partie inférieure est arrêtée au-dessus d'un disque inséré dans le découpage de la plate-forme immobile 5, ce disque étant actionné, par exemple par un cric, hydraulique situé en dessous de la plate-forme 5, et non illustré. L'air chaud se trouvant dans le moule est aspiré par la pompe et recyclé dans la chambre supérieure du cylindre 245. La roue dentée 208 actionnée déplace un couvercle amovible 207 disposé sur le tambour 200, puis le disque pénètre dans le récipient de modelage 232 pour soulever l'ensemble des blocs de garnitures 239 suspendus dans le moule. A cet instant, un dispositif de manutention tel qu'une grue pivotante est accroché sur la cadre en fer 237 de l'ensemble pour soulever celui-ci, le sortir hors du carrousel et le transporter vers une machine pour débiter et façonner cet ensemble de blocs de garnitures de frein pour produire des garnitures de frein à tambour.

Après descente du disque, insertion d'un nouveau cadre en fer 237 profilé en U, et remise en place du couvercle 207 par la roue dentée 208, le secteur de décharge est prêt à recevoir un nouvel ensemble de blocs de garnitures, par rotation de l'arbre de commande 226.

Dans le mode de réalisation de l'installation décrite ci-dessus, et pour adapter cette installation à la fabrication d'un autre produit ou article, par modification du piston outil 188 et des éléments de moule portés par le piston 77, le carrousel peut être éloigné de la presse auxiliaire et de la presse principale par déplacement de son axe central 223 à l'aide de son oreille 255.

On décrira maintenant, en se référant aux figures 6 et 7 un dispositif ou une machine pour débiter l'ensemble de blocs de garnitures de freins en garnitures de frein et les façonner en produit fini. En effet, pour ne pas ralentir la productivité de l'installation, il est nécessaire d'avoir une machine pour produire les garnitures de frein ellesmêmes avec une productivité au moins égale à celle de l'installation. Une telle machine, dans l'exemple illustré permet de traiter simultanément deux ensembles de blocs de garnitures de frein sortis du carrousel avec leur cadre en forme de U 237.

Ainsi, cette machine comprend de manière générale une ossature et des dispositifs de manoeuvre des porte-outils comportant des outils échangeables. L'ossature de la machine est composée d'un cylindre vertical et d'un dispositif horizontal superposé.

Le cylindre vertical 256 est ancré au sol par un évasement inférieur et renferme dans sa partie inférieure (non représentés) trois fonds amovibles, superposés chacun supporté par des rétrécissements respectifs pratiqués dans la paroi intérieure du cylindre 256, chaque fond étant percé dans sa surface périphérique d'au moins deux orifices diamétralement opposés et superposés les uns aux autres pour permettre le montage de deux poteaux 260, 261 de montée et descente d'un cylindre 290 décrit ci-dessous, lesdits poteaux étant fixés en bas sur un cric hydraulique et soudés en haut sur la surface inférieure horizontale d'un tronçon de montée et descente, cette surface étant alésée d'une profonde rainure annulaire. De plus, chacun des trois fonds amovibles indiqués ci-dessus est percé en son centre d'un orifice de passage et de logement d'un arbre de commande et de ses moyens d'entraînement respectifs, et notamment d'un arbre de commande central 257 traversant les trois fonds, d'un arbre de commande intermédiaire 258 emmanché sur ledit arbre central 257 et traversant les deux fonds supérieurs et enfin d'un troisième arbre de commande extérieure 259 emmanché sur ledit arbre intermédiaire 258 et traversant simplement le troisième fond supérieur. La partie supérieure du cylindre 256 est divisée en trois étages 256a, 256b, 256c ayant chacun une hauteur correspondant sensiblement à la hauteur d'un bloc 239 de garnitures de frein.

Le premier étage inférieur 256a comprend deux ouvertures, non représentées, pratiquées dans la paroi du cylindre 256 diamétralement opposées ayant des dimensions suffisamment grandes pour permettre la décharge simultanée de la totalité des garnitures de frein débitées et finies provenant de deux blocs de garnitures de frein débitées et façonnés dans les deux étages supérieurs. De plus, à cet étage, il est avantageusement prévu un évasement intermédiaire 263 pour permettre le montage de machines perforatrices pour usiner les garnitures de frein.

Sur la hauteur du deuxième étage intermédiaire 256b la paroi du cylindre 256 est perforée de trous dans lesquels sont fixés des douilles de guide-outil de forage (non représentées) disposées sous des angles appropriés et en nombre suffisant pour que les machines perforatrices perforent simultanément et tout d'un coup l'ensemble des garnitures de frein débitées de deux blocs de garnitures de frein traités simultanément dans l'étage supérieur 256c et dans cet étage 256b permettant ainsi de réaliser simultanément toutes les ouvertures nécessaires pour la fixation des garnitures finies sur les tambours.

Sur toute la hauteur du troisième étage supérieur 256c le cylindre 256 est découpé des deux côtés opposés de manière à ce qu'il ne reste que deux segments en arc 264, 265 définissant deux ouvertures opposées suffisamment grandes pour permettre à deux blocs de garnitures de frein 239a, 239b provenant de deux ensembles de blocs de garnitures de frein déchargés du carrousel et alimentés simultanément des deux côtés opposés de cette machine par des dispositifs d'alimentation des nsembles de blocs de garnitures de frein comprenant des parois de guidage 266, 267 et permettant d'amener successivement les blocs de garnitures de frein au contact des outils d'usinage centrifuges montés dans le troisième étage supérieur 256c du cylindre 256 et qui sont portés par un arbre porte-outils 301 monté sur l'arbre de commande 257.

Ce dispositif d'alimentation est en fait le dispositif horizontal superposé indiqué auparavant et qui comprend deux glissières de guidage immobiles inférieures 270, 271 fixées sur des évasements 268, 269 par des goujons 272, 273 et dés écrous 274, 275 et deux glissières supérieures 276, 277 superposées, ces quatre glissières comprenant des rainures longitudinales opposées et associées, les rainures inférieures servant de support et de guidage à une paire de crémaillères inférieures 278, 279 et les rainures supérieures à une paire de crémaillères supérieures 280, 281, chaque paire de crémaillères étant soudées en une pièce sur son extrémité extérieure par une bande de jonction (non illustrée) sous forme d'un arc correspondant à l'arc de la plaque porteuse 240 de l'ensemble des blocs des garnitures de frein 239. La bande de jonction supérieure est abaissée sur la face supérieure de la plaque porteuse 240 et les deux paires de crémaillères 278, 280 et 279, 281 sont actionnées et entraînées en sens opposé par des pignons 282, 283 communs soutenus par des pignons libres non illustrés, chacun d'eux étant en prise avec deux crémaillères superposées appuyées contre leurs roulement à galets 284a, b et 285a, b respectifs. Ces crémaillères se déplacent vers le cylindre 256 tout en déplaçant grâce à l'arc de leur bande de jonction la plaque porteuse 240 respective décollée du cadre en fer en U 237 pour faire glisser l'ensemble dans les parois de guidage 266 et 267 respectives. Les deux glissières de guidage supérieures 276, 277 fixées sur toute leur longueur sur les glissières inférieures 270, 271 retiennent les pignons 282, 283 d'entraînement et les pignons libres (non illustrés) dans une position horizontale stable, ces glissières sont soudées entre elles par une bande de jonction 286 située au-dessus du cylindre 256 et elles retiennent par une douille 287 l'extrémité supérieure rétrécie 303 de l'axe 301 porteoutil et par conséquent la partie rétrécie 257a de l'arbre de commande central 257, en position verticale stable.

Par ailleurs, les glissières de guidage 270, 271 portent deux segments arqués 288, 289 coaxiaux situés sur des côtés opposés et suspendus sur toute la hauteur du troisième étage 256c à l'intérieur du cylindre 256 et en parallèle avec les segments 264, 265 de ce cylindre. Ces deux segments arqués 288, 289 sont espacés vis-à-vis des segments 264, 265 pour permettre à deux blocs de garnitures de frein 239a, 239b de s'insérer sur toute la hauteur entre ces deux segments verticaux.

Un dispositif formé par un cylindre 290 sans fond ni couvercle disposé à l'intérieur du cylindre 256 de manière coulissante verticalement et rotative pour former les éléments de support du bloc 239a, 239b, de garnitures de frein séparés de la plaque porteuse pour amener successivement ces blocs de garnitures de frein dans les premier, second et troisième étages du cylindre 256, ce qui se produit de la manière suivante:

le cylindre 290, monté dans la rainure annulaire du tronçon inférieur de montée et descente 262 par une clavette ronde 292 est découpé dans sa partie supérieure sur au moins une hauteur sensiblement égale à la hauteur d'un bloc 239 de garnitures de frein pour former deux segments de cylindre 295, 296 diamétralement opposés, d'une épaisseur plus faible que la paroi du cylindre 290, éloignés l'un de l'autre d'une distance inférieure à la longueur tangentielle des garnitures en bloc 239a, 239b et recouverts du côté interne par une garniture abrasive 297, 298;

le cylindre 290 est entaillé sur toute sa hauteur du côté interne entre les segments 295, 296 de deux rainures verticales diamétralement opposées, logeant deux bras d'entraînement, non représentés, saillants à l'opposé d'une plate-forme d'entraînement et de décharge 299, fixée à clavette 300 sur l'arbre de commande extérieur 259, ce qui permet au cylindre 290 de pouvoir être entraîné en rotation par l'arbre de commande extérieur 259 aussi bien dans sa position d'arrêt que pendant sa montée et sa descente d'un étage à l'autre;

le point de départ du cylindre 290 est son point mort bas dans lequel les extrémités supérieures de ses segments 295, 296 se trouvent au-dessous de la plate-forme 299 et par conséquent au-dessous des ouvertures de décharge des garnitures;

le cylindre 290 ne sera pas mis en marche avant que les blocs de garnitures 239a, 239b ne soient insérés entre les parties des segments 288, 289 solidaires des glissières 270, 271;

montant vers son point mort haut, le cylindre 290 sera mis en rotation au contact des segments 295, 296 avec les extrémités inférieures des deux blocs de garnitures 239a, 239b qui, n'étant pas encore séparés de leur plaque porteuse 240, resteront en position stable pendant que leur surface extérieure sera poncée par la montée des garnitures abrasives 297, 298 fixées sur les segments 295, 296;

la mise en marche des outils centrifuges pour le ponçage de la surface intérieure des blocs de garnitures 239a, 239b et leur séparation de la plaque porteuse 240 est synchronisée de manière que ces opérations soient achevées au moment de l'arrivée des segments 295, 296 et par conséquent du rétrécissement 293 à leur point mort haut. Ainsi, les deux blocs de garnitures 239a, 239b poncés et séparés de la plaque porteuse 240 viennent porter par leur extrémité inférieure sur la surface horizontale du rétrécissement 293 pour être déplacés par coulissement du cylindre 290 depuis l'étage supérieur 256c de la machine dans l'étage intermédiaire 256b où ils seront perforés et sciés en étant toujours retenus dans une position verticale stable par les extrémités latérales des segments 295, 296 et arrêtés dans leur position propre par les extrémités inférieures des segments immobiles 288, 289 et par une rainure annulaire entaillée dans la surface horizontale du rétrécissement 293 recouverte elle aussi avec un matériau abrasif, non représenté;

enfin déplacées par le coulissement suivant du cylindre 290 les garnitures finies arrivent dans l'étage inférieur 256a, en deux piles qui se posent sur la plate-forme d'entraînement et de décharge 299 fixée à clavette 300 sur l'arbre de commande extérieur 259 avec leurs extrémités latérales saillantes hors de l'arc extérieur de cette plate-forme 299 pour que les fourches de deux déchargeurs puissent s'introduire en dessous pour les transporter tout d'un coup hors de la machine à travers les ouvertures du cylindre immobile 256, aussitôt que les segments 295, 296 s'arrêtent dans leur point mort bas. Pour diminuer le poids de la machine, le cylindre 290 peut être découpé sur la hauteur totale des trois étages 256a, 256b, 256 du cylindre 256. Dans ce cas, les deux segments 295, 296 seront retenus dans la même position par le tronçon supérieur rotatif de montée et descente 291, le rétrécissement annulaire 293 sera divisé en deux rétrécissement en arc 293 de même envergure que leurs segments 295, 296 respectifs, formant une surface de support des extrémités latérales des deux blocs de garnitures 239a, 239b, et les retenant dans la position verticale, stable comme décrit ci-dessus pendant toute la durée de finition, les entraînant en rotation et déchargeant les garnitures débitées d'une manière identique au cas précédent.

Les différents outils de façonnage pour débiter les blocs de garnitures de frein disposés dans les étages 256b, et 256c sont actionnés par des porte-outils construits selon le principe des outils centrifuges. Ainsi, quelque soit le type d'outils ils comprennent au moins un dispositif non extensible entraîné en rotation par un arbre de commande solidaire, un mécanisme extensible comprenant une partie intérieure insérée et guidée par le dispositif non extensible et une partie extérieure sous forme d'un porte-outil, les ressorts ou les moyens produisant un effet analogue résistant contre l'extension du mécanisme extensible et la force centrifuge au-dessus d'une limite déterminée, et un frein limitant l'extension du mécanisme extensible de manière à ce que la surface extérieure hémicylindrique de l'outil fixé sur ledit porte-outil ne puisse dépasser la ligne de contact avec l'objet à finir ou à fabriquer, et qui est bien déterminée dans chaque cas particulier.

Dans le mode de réalisation illustré, les deux porte-outils disposés respectivement dans l'étage supérieur et l'étage intermédiaire du cylindre 256 sont représentés selon deux variantes, à titre d'illustration.

Dans le troisième étage supérieur 256c qui comprend un porte-outils de montée et descente rotatif combiné comportant un axe 301 sous forme d'un tube emmanché et fixé par une clavette 302 dans une rainure longitudinale pratiquée dans la partie rétrécie 257a de l'arbre de commande central 257 est maintenu par son extrémité supérieure dans la douille 287. Cet axe 301 est accouplé avec l'arbre de commande central par une rampe hélicoïdale 304, 305 qui permet de faire monter le porte-outil en entier dans la limite du jeu vertical prévu dans la douille 287. Le rétrécissement 306 de l'axe 301 sert de support à une scie circulaire 307 échangeable munie d'une denture verticale 308, celle-ci étant positionée à son point mort haut par le déplacement de l'outil 301 provoqué par la rampe hélicoïdale 304, 305, pour découper les plaques porteuses 240 de l'ensemble des blocs de garnitures de frein amenés contre ces outils en alignement avec les surfaces concaves des blocs de garnitures 239a, 239b suspendus. Des dispositifs de fixation 309, 310 solidaires de l'axe 301 et disposés de manière diamétralement opposée logent les parties extensibles intérieures 311, 312 et extérieues 313, 314 de deux porte-outils centrifuges hémicylindriques, la partie extérieure étant recouverte par des outils de ponçage 315, 316 échangeables combinés avec une scie centrifuge 317, 318 située au niveau des surfaces inférieures des deux plaques porteuses 240 pour ainsi séparer la partie de plaque porteuse 240 du bloc de garnitures de frein.

Dans le deuxième étage intermédiaire 256b, l'arbre de commande intermédiaire 258 comprend deux dispositifs de fixation 319, 320 solidaires fabriqués en une pièce et diamétralement opposés, chacun renfermant dans sa partie extérieure 321, 322 la partie intérieure 323, 324 d'un porte-outils centrifuge hémicylindrique extensible 325, 326 recouvert par un outil de sciage 327, 328, chaque outil étant équipé par exemple de seize scies circulaires centrifuges. De plus, dans cet étage, toutes les garnitures de frein ainsi débitées par les scies circulaires centrifuges sont forées simultanément par les machines perforatrices montées sur les évasements 263 du cylindre 256.

Tous les porte-outils décrits ci-dessus sont équipés de ressorts 329, 330, 331, 332 et de régleurs d'extension 333, 334, 335, 336 échangeables permettant aux scies centrifuges 317, 318, aux outils de sciage 327, 328 et aux outils de ponçage 315, 316 de rester hors de contact avec l'objet à finir jusqu'à l'instant où la rotation accélérée de l'arbre de commande respectif de ces outils ne produise une force centrifuge suffisante pour contracter lesdits ressorts l'extension axiale des outils étant limités par la longueur des régleurs d'extension. De plus, les segments extensibles de chaque outil centrifuge sont liés entre eux par un élément élastique pliable 294 tel qu'un soufflet en caoutchouc ou métallique, par exemple, sur toute la hauteur et entre leur fond et couvercle. Ainsi, l'outil en entier est enfermé dans une chambre étanche protégée contre la poussière provoquée par le ponçage et le sciage des blocs de garnitures de frein. Cette poussière est avantageusement aspirée par une pompe à travers les conduits d'évacuation montés sur l'extérieur de la paroi du cylindre 256, nota ment au niveau du deuxième et du troisième étage.

Ainsi, cette machine peut traiter simultanément les articles ou produits fabriqués par deux unités de travail définies précédemment.

La machine pour débiter et façonner des ensembles de blocs de garnitures de frein fonctionne de la manière suivante:

Les plaques porteuses 240 de deux ensembles de blocs de garnitures de frein sont posées simultanément sur leurs glissières de guidage inférieures 270, 271 respectives, les blocs de garnitures 239a, 239b étant insérés entre les parois de guidage 266, 267 respectives, ces ensembles sont amenés simultanément vers les outils de la machine pour que la surface concave des blocs extrêmes de garnitures de frein viene en contact avec l'extrémité supérieure rétrécie 303 de l'axe 301 au-dessus de la scie circulaire 307. Les cadres en fer en U 237 insérés dans les rainures conformes longitudinales pratiquées dans les glissières de guidage inférieures 270, 271 restant ainsi immobilisés durant tout le procédé de façonnage et de finition.

A ce moment, l'arbre de commande central 257 est mis en marche, la scie circulaire 307 entraînée en rotation est poussée vers le haut par la rampe hélicoïdale 304, 305 et découpe simultanément les parties gênantes surplombantes des deux plaques porteuses 240 les rejetant sur une bande en tôle inclinée (non illustrée). Puis, après arrêt de l'arbre de commande central 257, les pignons 282, 283 sont actionnés pour provoquer le décollement de la plaque porteuse 240 du cadre 237 associé et faire avancer celle-ci vers le centre de la machine jusqu'au moment où les blocs de garnitures extrêmes 239a, 239b s'encastrent entre les segments en arc immobiles 288, 289, suspendus.

Après arrêt des pignons 282, 283, l'arbre de commande central 257 est remis en marche pour actionner la scie circulaire 307 afin de découper les parties restantes des deux plaques porteuses 240 cette fois suivant les arcs intérieurs concaves des blocs encastrés 239a, 239b. La vitesse de rotation de l'arbre de commande central 257 est ensuite augmentée, et l'arbre de commande extérieur 259 est également mis en rotation pour entraîner en rotation le cylindre 290 qui a été poussé vers le haut par la montée du cric hydraulique. Ainsi, les outils de ponçage 297, 298 commencent à poncer la surface extérieure des blocs 239a, 239b, et simultanément les deux scies circulaires centrifuges 317, 318 scient les deux blocs de garnitures 239a, 239b juste en dessous de leur plaque porteuse 240 respective.

Simultanément, les outils de ponçage intérieurs 315, 316 poncent la surface intérieure des blocs de garnitures 239a, 239b.

Ensuite, le cylindre 290 portant les garnitures de frein 239a, 239b poncées et séparées de leur plaque porteuse 240 est descendu jusqu'au niveau du deuxième étage intermédiaire 256b. Dans cet étage, les deux blocs de garnitures sont d'abord perforés par les machines perforatrices non représentées, puis l'arbre de commande intermédiaire 258 est mis en marche pour ainsi provoquer le sciage des deux blocs de garnitures de frein par les outils de sciage centrifuges 327, 328 en garnitures de frein à tambour finies, perforées et poncées. Pour éviter la détérioration des outils de ponçage extérieurs 297, 298, leurs surfaces présentent des rainures relativement profondes correspondant à la position de chaque scie centrifuge 327, 328 du second étage.

Enfin, dans une dernière étape, les deux blocs de garnitures ainsi débités sont amenés au niveau de l'étage inférieur 256a du cylindre 256 par descente du cylindre 290, et sont déchargés simultanément par les ouvertures latérales du cylindre 256 par tous moyens appropriés, et notamment comme décrit ci-dessus.

Après le découpage du dernier bloc de garnitures de frein de l'ensemble de blocs de garnitures de frein, les crémaillères 278, 280, et 279, 281, sont ramenées à leur position de départ et les cadres en fer 237 sont enlevés pour être recyclés dans le carrousel.

Les outils centrifuges décrits ci-dessus peuvent être utilisés également pour la fabrication et la finition combinées de produits plats, ronds, ou creux, avec bordure, canaux ou brides. Un exemple d'utilisation de ces outils pour le façonnage de tubes en amiante-ciment pendant leur fabrication sera indiquée ci-dessous dans la description du second mode de réalisation du carrousel fait en référence à la fabrication de tubes en amiante-ciment comportant des brides de fixation et obtenus par un seul moulage dans des moules verticaux s'ouvrant horizontalement.

Le second mode de réalisation du carrousel selon l'invention, illustré notamment aux figures 9 à 12, 19 à 22, est un carrousel monté dans une unité de travail comprenant six secteurs, le carrousel étant équipé de préférence de six moules qui tournent autour du corps cylindrique 6 de l'installation. Comme dans le premier mode de réalisation, chaque secteur correspond à un procédé technologique bien précis des articles à fabriquer, et au nombre de moyens formant presse disposés autour du corps cylindrique 6. Ainsi, après la distribution des procédés technologiques les secteurs de l'unité de travail peuvent être placés dans trois groupes dénommés:

"secteur mécanique" pour chaque secteur comprenant un moyen formant presse et notamment deux presses superposées dans lesquelles sont réalisés l'alimentation du mélange dans le moule, et éventuellement un traitement partiel et le démoulage des produits se trouvant dans le ou les moules amenés par le carrousel dans ce secteur;

"secteur de traitement" pour chaque secteur situé après un secteur mécanique de l'unité de travail dans la direction de rotation du carrousel et dans lequel, le pro duit ou l'article fabriqué subit un traitement thermique, chimique, combiné ou analogue;

"secteur de décharge" pour chaque secteur de l'unité de travail prévu pour la décharge du produit ou de l'article fini hors du carrousel à la fin du cycle de travail de chaque moule particulier.

Comme dans le premier mode de réalisation, le carrousel comprend une partie immobile insérée dans la plate-forme circulaire immobile inférieure 4 du bâti d'installation et la deuxième plate-forme circulaire immobile supérieure 5, ces deux plates-formes étant emmanchées soit sur le cylindre central 1 du bâti, soit sur le corps cylindrique 6. Ces plates-formes présentent des ouvertures notamment dans les secteurs mécaniques de chaque unité de travail pour permettre le passage des outils de presse respectifs de la presse auxiliaire et de la presse principale, et également supportent des moyens tels qu'un axe 340 dans les secteurs de décharge des unités de travail pour permettre l'entraînement des moyens de décharge du carrousel pour décharger les articles hors de ce carrousel. Ces différents moyens seront décrits ultérieurement.

La partie immobile du carrousel comprend donc un cylindre immobile 337 sans fond ni couvercle emmanché sur le corps cylindrique 6 et fixé à clavette 338, 339 sur la plate-forme 4 et sur la plate-forme 5.

Quant à la partie mobile du carrousel elle est située entre les plates-formes immobiles 4 et 5 autour du cylindre immobile 337 servant d'entretoise entre les deux plates-formes 4 et 5. Avantageusement, la hauteur du cylindre immobile 337 est réglable pour ainsi adapter l'espace entre les plates-formes immobiles 4 et 5 à la dimension des articles ou produits à fabriquer.

Cette partie mobile comprend une plaque circulaire mobile inférieure 343 solidaire d'un cylindre 344 qui est emmanché autour du cylindre immobile 337. Cette plaque circulaire mobile 343 est supportée en rotation par des galets 345 disposés sur la plate-forme immobile 4 tout autour du corps cylindrique 6. Cette plaque circulaire est également découpée sur chacun des six secteurs du carrousel pour permettre le passage des éléments de moule ou autres portés par le disque 71 de la presse à vis supérieure de la presse auxiliaire, comme cela sera décrit ultérieurement.

Cette partie mobile comprend également une plaque circulaire mobile supérieure 361 emmanchée par une ouverture découpée en son centre et fixée à clavette 362 sur le cylindre 344 solidaire de la plaque mobile inférieure 343 et munie sur chaque secteur mécanique d'au moins une ouverture correspondant au diamètre du bossage 188a du piston outil 188 de la presse principale et sur sa surface périphérique, en dehors de l'encombrement de la presse principale de douze orifices étroitement emmanchés sur douze noyaux 360, 384, des moyens de décharge portés par le carrousel et qui seront décrits ci-après en rapport à la fabrication de tubes en amiante-ciment.

Ainsi, les deux plaques mobiles inférieure 343 et supérieure 361 forment ensemble une unité de travail répartie en six secteurs mobiles tournant autour dudit corps cylindrique 6, entraîné en rotation par une roue dentée 355 en prise avec une couronne intermédiaire dentée 354 en synchronisation avec la cadence travail de manière à ce que chaque moule soit arrêté sur le secteur de décharge à la fin de son cycle de travail, tandis que celui déchargé à la fin de la cadence travail précédente sera arrêté sur le secteur mécanique et les autres contenant les produits à traiter sur les secteurs de traitement. Pour diminuer la cadence de travail, il est possible d'effectuer une partie du traitement dans les secteurs mécanique ou de décharge.

Le système de chauffage de chaque secteur particulier est relié avec une source du milieu de chauffage (non représentée) par des canaux 364, 365, 382 avantageusement perforés dans l'arbre de commande pivotant 358, 359, 381, 383, 384 des moyens de décharge portés par le carrousel et dans son pivot 356, 357 solidaire, et reliés à chaque moule particulier, l'alimentation du milieu de chauffage dans chacun de ces canaux étant contrôlés par une soupape à tête ovale 366 actionnée par des creux concaves disposés sur son trajet au niveau de chaque secteur de la plate-forme immobile inférieure 4, chacune étant reliée par une conduite propre 367 soit à un conduit commun d'amenée du milieu de chauffage, soit directement à sa source particulière si les températures de traitement dans des secteurs différents sont différentes ou si le milieu de chauffage ou de traitement est de nature différente. La circulation permanente du milieu de chauffage ou de traitement est assurée par les soupapes de refoulement 368, 369 de même type disposées sur deux trajets parallèles, sur chacun des six secteurs de la plate-forme immobile inférieure 4, et s'alignant pendant chaque arrêt du carrousel dans l'un de ces secteurs avec les sorties de refoulement superposées, soit propres à chaque moule particulier, soit communes à plusieurs moules situés en parallèle ou empilés. Les soupapes situées sur le secteur de décharge sont reliées avantageusement à une pompe à air chaud ou à un condensateur d'une chaudière pour assurer une vidange complète du milieu de chauffage se trouvant dans les moules respectifs avant le commencement de la décharge des articles fabriqués. D'une manière analogue, ce système peut servir de système de refroidissement des parois intérieures des moules, par des conduits 370, 371 respectivement pour l'admission et la sortie de l'air frais disposés le long d'un quatrième trajet intérieur formé sur la plate-forme immobile inférieure 4.

Avantageusement, pour des moules comprenant des éléments mobiles, les arbres de commande pivotants 358, 359 du moyen de décharge de chaque secteur comprenent des canaux 372, 373, 374, 375 reliés entre eux par une rainure en arc 376 située au niveau du pivot 356 et servant d'amenée et de refoulement de l'huile sous pression à travers la conduite 377, la soupape 378 et le canal 372. Avantageusement, un conduit additionnel d'air comprimé 379, 380 est prévu dans chaque arbre de commande pour le nettoyage des moules et éventuellement leur graissage.

Ainsi conçu, le second mode de réalisation du carrousel est plus particulièrement adapté pour la fabrication d'articles demandant des moules sophistiqués de types différents, échangeables et adaptables, par exemple pour la fabrication de produits particuliers, tels que des tuyaux en amianteciment à brides de fixation formées en une seule pièce, selon deux procédés technologiques, à savoir par voie centrifuge ou par voie de pressage simple. On décrira maintenant la forme des moules et des outils de presse pour la fabrication de tuyaux en amiante-ciment par la voie centrifuge avec les moules verticaux disposés en une rangée et s'ouvrant horizontalement, et qui comprennent un élément de moule interne tel que par exemple un élément porte-outil centrifuge ou un tube.

Chaque secteur mobile d'un carrousel, comme illustré aux figures 10 et 19 comprend deux pivots 356, 357 opposés sur lesquels sont emmanchés leurs arbres de commande respectifs 357, 359, 432, 438 qui font sortir les moules hors du carrousel des deux côtés opposés. Cependant, les moules disposés en une rangée (figures 9 et 11) peuvent être avantageusement, déchargés par un seul dispositif de décharge s'appuyant sur un des deux pivots, dans le cas illustré à la figure 12 sur le pivot 356. Ce pivot 356 est emmanché par un arbre de commande inférieur 381 montant jusqu'à la moitié de la hauteur de la partie mobile du carrousel tandis que dans le noyau 383 dudit arbre de commande 381 qui s-étend au-delà de la plate-forme immobile 5 est alésé un canal 382 prolongeant le canal 364 d'amenée du milieu de chauffage. Un deuxième arbre de commande supérieur 384 est emmanché sur le noyau 383 et supporte, par un décrochement de sa face supérieure la plaque mobile supérieure 361 du carrousel, tandis que sa surface supérieure restante sert à l'appui d'une roue dentée 385 d'actionnement fixée par une clavette 386 sur l'arbre de commande 384, cette roue dentée étant également emmanchée sur le noyau 383. Une seconde roue dentée 387 d'actionnement du premier arbre de commande 381 est emmanchée sur la partie de diamètre inférieur 388 du noyau 383. Ce dispositif assure par entraînement dans un même sens des arbres de commande 381, 384 la sortie simultanée des parties de moule associées à chaque arbre de commande par engrènement des roues dentées 385, 387 avec respectivement des moyens d'entraînement fixés par exemple sur la plate-forme 5 de chaque secteur de décharge et comprenant notamment un axe 340 sur lequel sont emmanchées deux roues dentées d'entraînement 341, 342.

Les arbres de commande 381, 384 sont reliés respectivement par des bras 389, 390 superposés à une moitié respective d'une plaque d'un diamètre conforme au diamètre du récipient du mélange 107, coupée en deux parties inférieures 391, 392 définissant la partie inférieure du secteur respectif de l'unité de travail. Chaque partie de ces plaques est équipée d'une surface prévue pour l'aménagement des éléments de moule et d'une paroi verticale 393, 394 soudée, montant jusqu'à la plaque mobile supérieure 361. Sur chacune de ces plaques sont soudés deux segments hémicylindriques 395, 396 respectifs de deux cylindres de même diamètre et de même hauteur, les extrémités supérieures des cylindres étant couvertes par deux parties 397, 398 respectives d'une plaque supérieure découpée exactement de la même manière que la plaque inférieure ci-dessus indiquée, chacune de ces parties de plaques 397, 398 étant alésée autour des segments hémicylindriques 395, 396 pour former une ouverture hémicylindrique supérieure 399, 400 conforme au diamètre et à l'épaisseur de la bride supérieure du tube à fabriquer; des alésages inférieurs 401, 402 identiques sont formés dans l'épaisseur des parties horizontales inférieures 391, 392 pour le logement d'anneaux amovibles 403, 404 d'un diamètre extérieur conforme au diamètre extérieur du tube à fabriquer et comprenant sur leur face supérieure des goujons pour former les trous de fixation dans les brides inférieures des tubes à fabriquer. Ainsi, le moule propre à un secteur d'unité de travail est constitué par deux demi-blocs situés de manière opposée et en parallèle qui sont mis en contact par le mouvement en sens opposé de leur arbre respectif de commande 381, 384 et qui, une fois en contact, renfermant de manière étanche les moitiés respectives des deux cylindres sans fond ni couvercle entourés par des chambres de chauffage communes 405, 406 chacun comprenant des éléments de moule pour le modelage des brides de fixation inférieure et supérieure des tubes à fabriquer. Pour la fabrication des tubes par la méthode centrifuge, il ne reste plus qu'à équiper ces moules d'outils centrifuges portés par un arbre de commande 407, 408 identique pour chaque cylindre et montant jusqu'à la surface des parties supérieures 397, 398 de la plaque supérieure, ces arbres de commande comprenant des alésages axiaux 409, 410, 411, 412 inférieurs et supérieurs pour coopérer d'une part, avec des axes de soutien 425, 426 formés à la surface inférieure du bossage 188a de l'outil de presse supérieure 188 pour maintenir ces arbres de commande en position centrée et verticale, et, d'autre part, avec des moyens d'entraînement en rotation de ces outils centrifuges.

L'entraînement en rotation de ces outils centrifuges est réalisé par un alésage conique découpé dans un tronçon solidaire 413, 414 de chaque arbre de commande 407, 408 qui vient en appui pendant la fermeture des moules contre la partie conique 415, 416 d'une roue dentée 346, 347 montée libre en rotation par les goujons 348, 349 et les boulons 350, 351 sur le piston 71 de la presse à vis supérieure de la presse auxiliaire. Ces roues dentées 346, 347 sont entraînées en rotation par un arbre non fileté 353 qui comprend une extrémité supérieure 352 configurée en roue dentée et dont l'extrémité inférieure est entraînée en rotation par des moyens d'entraînement (non représentés).

Par ailleurs, chaque tronçon 413, 414 de chaque arbre de commande 407, 408 comprend un évasement inférieur 417, 418 servant de support permanent aux anneaux amovibles 403, 404 respectifs qui sont également supportés par les deux parties inférieures 391, 392 pendant la fermeture des moules.

Les porte-outils centrifuges 421, 422 sont emmanchés sur les arbres de commande 407, 408 et maintenus solidaires en rotation avec ces arbres de commande par des clavettes 419, 420. Ces outils centrifuges sont de même type que ceux décrits pour la machine de façonnage des blocs de garnitures de frein, et sont notamment des outils 423, 424 de projection de mélange, extensibles jusqu'à la surface intérieure de la paroi du tube à fabriquer.

Enfin, le piston-outil 188 de la presse principale qui modèle la surface supérieure des tubes à fabriquer a une forme semblable à la forme décrite en première variante pour la fabrication des garnitures de frein et comprend notamment des goujons 189a, pour réaliser des ouvertures dans les brides de fixation des tubes.

Ainsi, l'installation selon ce second mode de réalisation fonctionne comme suit:

Le moyen d'alimentation de l'installation fonctionne à une vitesse adaptée à la cadence de travail de la fabrication des tubes amiante-ciment et assure la préparation, le dosage et le refoulement du mélange dans le réservoir 107 et des moules d'une manière analogue à celle décrite dans le premier mode de réalisation.

Dès que la rotation du carrousel a amené les éléments de moule et les outils centrifuges sur un secteur mécanique, le piston-outil 188 de la presse principale est suffisamment abaissé pour que les axes de soutien 425, 426 pénètrent, dans les alésages de soutien 410, 412 respectifs de arbres de commande 407, 408 pour les maintenir en position verticale et stable pendant leur rotation.

De manière analogue, le piston 71 de la presse à vis, supérieure de la presse auxiliaire est soulevé pour accoupler les deux parties coniques 415, 416 des roues dentées 346, 347 avec les parties coniques des tronçons 413 et 414 des arbres de commande 407, 408, et ainsi pouvoir entraîner en rotation les outils centrifuges par la rotation de l'arbre 353.

Avantageusement, la vitesse de rotation des outils centrifuges est augmentée progressivement en synchronisation avec la descente du piston-outil 188 et donc avec l'augmentation de la pression exercée sur le mélange alimenté depuis le moyen d'alimentation d'une manière sensiblement identique à celle décrite dans le premier mode de réalisation. Egalement, le mélange en surplus sera refoulé à une pression moyenne comme dans la fabrication des garnitures de frein. Toutefois, un surplus éventuel du mélange sous haute pression sera intégré dans les brides supérieures qui auront alors une épaisseur plus importante.

L'arbre de commande 353 est arrêté au moment où le piston-outil 188 arrive à son point mort bas, le piston 71 est alors descendu provoquant la descente des roues dentées 346, 347 au-dessous de la plaque mobile inférieure du carrousel permettant ainsi à celui-ci de tourner vers le secteur suivant avec les tubes moulés et les outils centrifuges disposés à l'intérieur de manière suspendue, après que le piston-outil 188 de la presse principale soit remonté à son point mort haut. La rotation du carrousel est réalisée par l'intermédiaire de la roue d'entraînement dentée 355 et de la partie dentée 354 du cylindre 344.

Le carrousel avance d'un pas pour amener ces moules dans le secteur suivant pour ainsi décrire le cycle de travail qui comprend par exemple quatre secteurs de traitement. Donc, après arrêts consécutifs sur ces secteurs de traitement, le moule et les tubes moulés sont amenés sur le secteur de décharge pour finir le cycle de travail par la décharge des tubes finis qui est réalisée selon le processus suivant:

Les roues dentées 385, 387 associées à ce moule particulier s'engrènent automatiquement avec les roues dentées 341, 342 lorsque le carrousel amène ces moules dans le secteur de décharge. Les roues dentées 341, 342 sont alors entraînées en rotation dans le même sens par un moteur extérieur et provoquent la sortie du moule hors du carrousel par rotation des arbres de commande 381, 384, et des bras 389, 390 les parties inférieures 391, 392 et supérieures 397, 398 reliées par leurs segments hémicylindriques 395, 396 et les parois verticales 393, 394 respectives, en un bloc retenu en position fermée par les tubes 427, 428 collés sur les parois des moules 395, 396 et les anneaux amovibles 403, 404 et, par exemple un cliquet de rappel (non illustré). Ce bloc est arrêté au-dessus de leviers de manoeuvre actionnés par un cric hydraulique non représenté. Avantageusement, comme les tubes en amiante-ciment sont relativement pesants, la plate-forme circulaire immobile 4 comprend une partie extérieure 4a fixée sur l'ossature extérieure de l'installation et comportant au niveau de la plaque de décharge des articles, des ouvertures de passage pour les leviers de manoeuvre précités. Ces leviers de manoeuvre sont actionnés pour venir se verrouiller sur les verrous 409, 411 prévus dans les alésages inférieurs des arbres de commande 407, 408 et prennent donc en charge le support des outils centrifuges et des tubes moulés. A cet instant, les roues dentées 342, 341 sont actionnées en sens inverse pour provoquer la séparation des deux moitiés du bloc laissant ainsi les tuyaux finis 427, 428 démoulés en position verticale stable collés par leur bride inférieure sur les anneaux amovibles 403, 404 supportés par des évasements 417, 418 des tronçons 413, 414 des arbres de commande 407, 408 et donc par les leviers de manoevre. Le démoulage définitif et la décharge sont réalisés par montée des leviers de manoeuvre pour amener l'ensemble tubes-support d'outils centrifuges au niveau d'un bras 429 actionné par un mécanisme hydraulique qui maintiendra ces ensembles en position fixe pendant que les leviers de manoeuvre sont descendus pour séparer les anneaux amovibles 403, 404, et les supports d'outils centrifuges des tubes moulés 427, 428. Enfin le démoulage est complété et terminé par soulèvement des tubes finis 427, 428 par le bras 429 au-dessus dudit bloc pour les disposer dans un transporteur circulaire tandis que les deux moitiés de bloc de moule seront à nouveau mises en contact par actionnement de leur arbre de commande 381, 384 respectifs formant à nouveau le moule autour des dispositifs centrifuges respectifs libérés par la descente des leviers de manoeuvre et supportés par les tranches inférieures 391, 392 du bloc fermé. L'ensemble du bloc est ensuite pivoté par actionnement des arbres de commande 384, 381 dans le carrousel pour être prêt à nouveau à effectuer un cycle de travail.

Bien entendu, il est possible avec une telle installation d'avoir plusieurs rangées parallèles de moules. Dans ce cas, chaque secteur comprend deux pivots 356, 357 chacun servant de base à des moyens de décharge et de support comme illustré sur les figures 10 et 12. Notamment, sur le pivot 357, sont emmanchés deux arbres de commande 381, 384 reliés respectivement par des bras 439, 441 à un segment hémicylindrique extérieur 437 de la première rangée et à un segment hémicylindrique intérieur 440 de la troisième rangée, et sur le pivot 356 sont emanchés deux arbres de commande 381, 384 reliés respectivement par les bras 433 à un segment hémicylindrique double intérieur 430 de la première rangée et extérieur 431 de la deuxième rangée respectivement et par le bras 436 à un segment hémicylindrique double extérieur 434 de la deuxième rangée et extérieur 435 de la troisième rangée, le mouvement des bras 433 et 441 vers la partie centrale de l'installation est limitée par les butées 442, 443. Tous les moules dans leur position fermée sont munis de porte-outils centrifuges 444 et sont entourés par les chambres de chauffage 405, 406, 432, 438 reliées entre elles par les passages 445 et avec la source du milieu de chauffage à travers les canaux 364, 365. Pour le démoulage et la décharge des tubes finis, chaque rangée de moules sera déchargée sur deux places de décharge différentes disposées de part et d'autre du mécanisme de démoulage.

Le fonctionnement du dispositif de décharge décrit ci-dessus pour réaliser la décharge des moules disposés en rangées est identique à celui décrit dans le cas précédent.

La fabrication de tuyaux d'amiante-ciment par la voie de pressage est illustrée sur les figures 11 et 12 et se différencie de la fabrication des tuyaux par la voie centrifuge par les dispositifs suivants:

Les goujons ou axes de soutien 425 montés sur le bossage 188a du piston-outil 188 de la presse principale sont supprimés, la presse principale étant programmée pour que son piston-outil 188 exerce, en synchronisation avec la cadence de travail, un rôle identique à celui pour la fabrication des garnitures de frein dans le premier mode de réalisation du carrousel.

Les outils centrifuges avec leur système d'entraînement sont remplacés pour chaque moule par un cylindre intérieur 446, 447 dont le diamètre extérieur correspond au diamètre intérieur des tubes à fabriquer, fermé en haut par le couvercle 448, 449 et munis en bas d'un fond élevé 450, 451 comprenant en dessous de ce fond une paroi intérieure épaisse usinée sous forme d'une rampe hélicoïdale 452, 453 s'appuyant sur un anneau amovible associé 403, 404 qui est supporté lorsque le moule est fermé, par les parties inférieures 391, 392 et pendant le démoulage et la décharge des produits par unévasement de la partie mâle (non représentée) de la rampe hélicoïdale 452, 453. En effet, pendant le démoulage et la décharge des produits, le cylindre intérieur 446, 447 est soulevé et légèrement tourné autour de son axe par la rampe hélicoïdale 452, 453 pour le séparer de la paroi verticale du tube moulé qui reste encore colléepar sa bride de fixation inférieure sur l'anneau amovible 403, 404 respectif. Pour finir le démoulage et la décharge, le levier coopérant avec la rampe hélicoïdale continuera sa montée pour faire monter le dispositif entier jusqu'à ce que le tube soulevé hors du moule soit saisi et retenu en position fixe par le bras de décharge automatique 429.

L'abaissement des leviers de manoeuvre provoquera grâce à la rampe hélicoïdale 452, 453 l'abaissement du cylindre 446, 447 qui forcera ainsi les anneaux amovibles 403, 404 à se séparer de la bride inférieure du tube fabriqué.

La fermeture des moules vides, le retour dans le carrousel et le raccordement au système de chauffage se déroulent comme dans le cas précédent, tandis que l'alimentation, le passage échelonné et le traitement fonctionnent d'une manière analogue à celle décrite pour la fabrication des garnitures de frein.

Il est également possible de fabriquer avec l'installation de l'invention des tuyaux en amiante-ciment comportant plusieurs couches de mélange de compositions différentes projetées par les outils centrifuges en sens opposé, ce qui permet d'augmenter la qualité des tubes et leur résistance à la pression. A cet effet, avant la décharge des tuyaux finis, leurs porte-outils centrifuges peuvent être rechargés en mélange approprié autant de fois que le nombre de couches désirées doit être appliqué. Ce carrousel décrit ci-dessus peut être utilisé en faisant recommencer à chaque moule un cycle de travail pour chaque couche additionnelle de mélange. Dans ce cas, la productivité de l'installation sera diminuée. Une autre possibilité pour réaliser ces tubes est de disposer autour du moyen d'alimentation plusieurs moyens formant presse définissant ainsi un nombre de secteurs mécaniques égal au nombre de couches additionnelles à appliquer, chaque secteur mécanique étant alimenté à partir du moyen d'alimentation avec le mélange approprié. Dans ce cas, le moyen d'alimentation est avantageusement réalisé selon le second mode de réalisation décrit précédemment, c'est-à-dire comprenant plusieurs compartiments avantageusement un nombre de compartiments égal au nombre de mélanges à alimenter. Dans ce cas, le secteur de décharge est situé juste avant le premier secteur mécanique de l'unité de travail. Par ailleurs, pour l'application de ces couches successives de mélanges, les porte-outils centrifuges peuvent être remplacés avant chaque secteur mécanique ou, selon un mode de réalisation préféré, ces porte-outils peuvent être des outils centrifuges à plusieurs diamètres d'extension, le diamètre d'extension désiré étant sélectionné soit par un dispositif mécanique, un dispositif électronique ou des dispositifs électromagnétiques programmés.

Ainsi, la fabrication de tubes en amiante-ciment décrite ci-dessus, et notamment la fabrication par voie centrifuge représente par rapport à la technologie actuelle des avantages indiscutables tels que par exemple une réduction des frais d'infrastructure, un équipement plus efficace, moins coûteux et moins encombrant ainsi qu'une manipulation simplifiée tout en augmentant la productivité, l'automation et la continuité de la fabrication.

Le second mode de réalisation de l'installation décrit ci-dessus est également particulièrement adapté pour la fabrication de pneus de manière continue avec une productivité élevée.

En effet, l'installation décrite ci-dessus peut être adaptée à la fabrication des pneus par simple remplacement des éléments formant le moule portés par le carrousel et les outils de presse des presses principale et auxiliaire par des éléments de moule adaptés pour la fabrication de pneus.

De plus, comme la fabrication de pneus demande l'alimentation de deux mélanges de compositions différentes, un mélange pour former le corps du pneu et notamment la surface de roulement et un autre mélange pour former les flancs du pneu, on décrira ci-dessous les modifications apportées aux presses principale et auxiliaire pour réaliser l'alimentation successive d'au moins deux mélanges.

On décrira maintenant les éléments de moule portés par le carrousel et disposés dans un seul secteur de l'unité de travail. De préférence, de tels éléments de moule sont disposés dans chaque secteur de l'unité de travail.

Par ailleurs, chaque secteur peut comprendre plusieurs moules superposés en une colonne verticale comme dans le mode de réalisation illustré, ou plusieurs colonnes verticales de moules superposés. Chaque moule d'une colonne verticale, comme illustré aux figures 16, 17, 18, 19, 20, comprend:

Un porte-moule supérieur 488, 489 formant un bloc de relativement forte épaisseur qui est alésé à sa partie supérieure et inférieure pour permettre le logement du moule proprement dit et le coulissement des éléments mobiles du moule. Ce porte-moule supérieur est relié par un bras 490, 491 soudé sur son côté extérieur à un cylindre 492, 493 qui est fixé par une clavette 494 sur son arbre de commande 358, 359. Cet arbre de commande 358, 359 permet de déplacer hors du carrousel les moules arrivés du le secteur de décharge, par entraînement des roues dentées 342, 341 d'une manière sensiblement analogue à celle décrite pour la décharge des tubes en amiante-ciment. Toutefois, avantageusement, chaque secteur comprend deux arbres de commande solidaires 358, 359 reliés respectivement par les cylindres respectifs 492, 493 des bras 490, 491, pour le premier arbre de commande aux porte-moules de nombre pair de la colonne verticale de moules, et pour l'autre arbre de commande aux porte-moules supérieurs des moules de nombre impair de la colonne verticale de moules, comme illustré à la figure 22 qui comprend simplement deux moules empilés l'un sur l'autre. Avantageusement, chaque cylindre 492, 493 est muni d'une encoche 495 pour la fixation du moule sous-jacent solidaire. Dans le corps de chaque bras 490, 491 est foré un conduit 496 d'amenée du milieu de chauffage pour relier les conduits 364, 365 formés dans l'arbre de commande à une conduite circulaire horizontale 497, 498 formée dans le corps des porte-moules supérieurs 488, 489. Cette conduite circulaire est en communication avec des conduits horizontaux 499, 500 et verticaux 639, 639a, 640, 640a, tous reliés pendant la fermeture du moule aux canaux de chauffage et de vidange combinés 501, 502 situés dans les disques 587, 588, qui définissent tous ensemble le système de chauffage et débouchent à la face inférieure du bloc de support de moules supérieur. Le bloc de support de moules supérieur 488, 489 comprend sur sa paroi interne et sa partie centrale une rainure circulaire à bords coniques et des forages débouchant dans le fond de cette rainure pour le logement des tiges-guides des segments formant le corps du moule décrit ci-après. De plus, le support de moules supérieur 488, 489 comprend sur toute sa hauteur et sur sa face extérieure quatre larges rainures 523, 524, 525, 526 opposées deux à deux et réparties régulièrement sur le pourtour du bloc 488, 489 et sur sa face inférieure d'au moins une gorge arquée 527, 528, 529, 530 reliée à un conduit circulaire d'air comprimé 505, 506 relié par un conduit d'alimentation en air comprimé non représenté, au conduit 379, 380.

Un corps central de moule composé par un nombre de segments horizontaux arqués intérieurs 531, 532, 533, 534 et extérieurs 535, 536, 537, 538, définissant assemblés ensemble un anneau. Ces segments présentent des faces supérieures et inférieures biseautées ainsi que des faces latérales biseautées pour coulisser les uns par rapport aux autres et par rapport à la paroi conique de la rainure interne du bloc de support de moules supérieur 488, 489, de manière sensiblement étanche comme illustré aux figures 18 et 19. Chaque segment a une face interne configurée en forme de matrice à empreintes multiples 539, 540, 541, 542 pour former la structure de la bande de roulement du pneu fabriqué. Chaque segment comprend sur sa face extérieure une tige poussoir 543, 544, 545, 546, 547, 548, 549, 550 qui est montée coulissante dans les forages du bloc de support de moules supérieur et débouchante dans le fond de la rainure centrale conique, ces tiges poussoir pénétrant dans des cylindres 507 à 514 formés sur la face extérieure du bloc 488, 489, chaque piston 551 à 558 de ces cylindres étant emmanchés sur la tige poussoir 543 à 550. Chaque cylindre est fermé par un couvercle 515 à 522 qui est traversé de manière étanche par la tige de piston et la tige poussoir associée. Ainsi, les pistons 551 à 558 divisent les cylindres en deux enceintes à volume variable, une extérieure 559 à 566 et une intérieure 567 à 574, chacune des enceintes est reliée à une source d'huile sous pression par des conduits d'amenée et de refoulement 503, 504 forés dans les blocs 488, 489 de support de moules supérieur, et étant toutes reliées entre elles par des conduites extérieures 575, 576 respectives (figure 16) pour ainsi, par l'alimentation de l'huile sous pression provoquer le coulissement simultané de tous les segments vers l'intérieur pour former un anneau de dimension déterminée.

Un couvercle supérieur mobile 577, 578 inséré de manière étanche par sa paroi latérale dans l'alésage du bloc 488, 489 du support de moules supérieur, sa face inférieure latérale étant biseautée sous un angle configuré à l'angle des faces supérieures des segments arqués 531 à 538 pour ainsi s'appuyer et coulisser de manière étanche sur la face supérieure de ces segments, la face intérieure restante du couvercle étant configurée à la forme du flanc ou de la bande de côté du pneu à fabriquer à partir de la jante jusqu'à la ligne de contact avec la bande de roulement. La face supérieure du couvercle comprend un disque 579, 580 formant saillie au-dessus de la face supérieure du bloc 488, 489 d'une hauteur correspondant sensiblement à la course de glissement du couvercle 577, 578 sur la face supérieure des segments. Le disque 579, 580 comprend au moins deux languettes horizontales (non illustrées) coulissant verticalement dans les rainures 581, 582 associées découpées dans la surface du corps 488, 489, chacune de ces languettes étant munie à son extrémité d'un élément 583, 584 formant jambe soudé et inséré dans la rainure précitée verticale 523, 525 de la face externe du bloc 488, 489 pour maintenir en position le couvercle 577, 578. Ce couvercle est également foré de conduits horizontaux 499, 500 communiquant dès la fermeture du moule avec la conduite circulaire horizontale commune 497, 498. Le couvercle du moule supérieur situé en haut de la colonne des moules entassés est muni d'au moins deux bossages 585, 586 saillants au-dessus du disque 578 avec une hauteur correspondant au parcours du disque depuis son point mort haut à son point mort bas, ces bossages ayant une dimension configurée aux ouvertures de la plaque mobile supérieure 361 du carrousel pour coopérer avec les bossages 701, 702 de l'outil 188 de la presse principale et 686, 687 du récipient de mélange mobile.

Un porte-moules inférieur visible dans les figures 16 à 18 et 24 ayant la forme d'un disque 587, 588 d'un diamètre conforme au diamètre du bloc 488, 489 du porte-moules supérieur, chaque disque étant relié à un bras 589, 590 soudé sur une barre extérieure 591, 592, la barre 591 étant commune pour les porte-moules inférieurs des moules impairs de la colonne de moules, par exemple, tandis que la barre 592 est commune aux porte-moules inférieurs des moules impairs de la colonne de moules. Ces barres communes s'abritent pendant la fermeture du moule dans une ouverture périphérique (non illustrée) de la plaque circulaire, mobile inférieure 343 et glissent pendant l'avancement du carrousel et la sortie des moules hors du carrousel sur la surface de la plate-forme circulaire immobile 4. Les barres communes 591, 592 sont supportées par des cylindres 593, 594 faisant partie d'une paire de deux cylindres associés, l'autre cylindre de chaque paire 595, 596 étant emmanché sur les cylindres 492, 493 des porte-moules supérieurs pour ainsi permettre aux barres communes de tourner horizontalement. L'extrémité supérieure des barres communes 591, 592 est munie d'une transmission à levier 597 qui est montée pivotante sur le noyau 360 des arbres de commande 358, 359, ce levier comprenant une partie dentée 599 qui vient en prise avec la roue dentée 342 située dans la secteur de décharge de l'unité de travail. Les barres communes 591, 592 coulissant verticalement dans le levier 597 par une rainure 600 et sous l'action d'un levier 598 d'un mécanisme hydraulique non représenté. Le disque 587, 588 est découpé dans sa partie centrale d'une ouverture sur le pourtour de laquelle est soudé un cylindre d'alimentation 601, 602 (figure 24), la surface supérieure de ce cylindre arrivant au niveau du couvercle supérieur 577, 578 lorsque celui-ci est à son point mort haut. Un cylindre interne coaxial 603, 604 est fixé par deux anneaux immobiles 605, 606, 607, 608 à l'intérieur des cylindres d'alimentation 601, 602, chacun de ces anneaux immobiles comprenant sur sa face externe un anneau amovible 609, 610, 611, 612 traversé par un listel étroit qui est ainsi appuyé contre la surface de son anneau immobile respectif enfermant sur celui-ci la partie mince de sa surface deux passages arqués 613, 614, 615, 616 en communication avec des passages de même section percés au même niveau dans la paroi du cylindre d'alimentation immobile 601, 602 et du cylindre coaxial 603, 604 créant ainsi des passages de dosage et de refoulement du mélange fermés de manière étanche par les boulons à écrous 617, 618 et le tube taraudé 619, 620 qui sert également d'amenée d'air frais de refroidissement, chaque tube de chaque moule s'emmanchant dans le tube du moule superposé dans la colonne de moules pour former ainsi un conduit d'amenée d'air frais sur toute la hauteur de la colonne de moules entassés, refoulé à travers les orifices 621, 622, 623, 624. Par ailleurs, le cylindre d'alimentation immobile 601, 602 comprend un conduit vertical d'amenée d'air comprimé 625, 626 débouchant vers l'extérieur du cylindre avantageusement sous un angle droit, et plusieurs conduits verticaux de distribution d'agent de séparation des pneus finis 627, 628 aménagés à distance égale l'un de l'autre, et débouchant également vers l'extérieur du cylindre 601, 602 sous un angle d'inclinaison adapté pour pulvériser ces agents. Ces différents conduits verticaux sont reliés entre eux par un conduit circulaire commun 629, 630 horizontal, chacun des conduits circulaires étant en parallèle avec le canal à air comprimé 625, 626 à travers le disque 587, 588 et le bras 589, 590 avec les canaux verticaux 631, 632, 633, 634 respectifs formés dans la barre commune extérieure débouchant sur des soupapes à tête ovale 635, 636 respectives et s'ouvrant au moment de l'arrivée du carrousel dans un secteur au-dessus de dépressions concaves associées pratiquées dans la surface horizontale du levier 598 dont les canaux 637 et 638 sont reliés respectivement à des sources d'air comprimé, d'agent de séparation des pneus finis, comme illustré à la figure 21. Chaque cylindre d'alimentation 601, 602 comprend une rampe hélicoïdale 641, 642 pour permettre le montage de la jante du pneu qui sera décrite ci-dessous.

Un couvercle inférieur mobile 643, 644 qui a une forme analogue à celle du couvercle supérieur 577, 578, et qui s'insère de manière étanche par sa paroi latérale dans l'alésage inférieur du bloc 488, 489 du porte-moules supérieur, et par sa partie inférieure dans un alésage annulaire usiné dans la surface du disque 587, 588. Chaque couvercle inférieur comprenant sur sa face extérieure périphérique au moins deux barres verticales arquées 645, 646, 647, 648 d'une hauteur correspondant à la hauteur du moule entier se trouvant en position ouverte, ces barres étant soudées sur des languettes 649, 650, 651, 652 respectives, et étant coulissantes dans les rainures verticales 524, 526 formées sur le pourtour du bloc du support de moules supérieur au fur et à mesure de la montée et de la descente du couvercle 643, 644. Le couvercle inférieur du moule du bas de colonne de l'entassement de moules comprend deux bossages 653, 654, ces bossages étant insérés dans l'alésage annulaire du disque 587 et faisant saillie en dessous de la face inférieure du disque 587 d'une hauteur correspondant au parcours du couvercle 643 et donc de tous les couvercles superposés 644 entre leurs point mort bas et point mort haut et s'encastrant pendant l'alimentation et la fermeture des moules arrêtéssur ce secteur mécanique de l'unité de travail, dans des orifices conjugués pratiqués dans la plaque circulaire mobile inférieure 343 pour permettre aux bossages 655, 656 du disque de montée 71 (figure 11) de la presse à vis supérieure de la presse auxiliaire de soulever ces couvercles inférieurs en synchronisation avec l'alimentation des moules en mélange de composition déterminée sous basse et moyenne pression et d'exercer une haute pression pendant la fermeture définitive de la partie inférieure des moules. Le couvercle inférieur 643, 644 comprend sur sa face supérieure une partie biseautée conjuguée à la face inférieure des segments arqués 531 à 538 du corps de moule.

Une jante 657, 658 sous forme d'un cylindre dont la, rampe hélicoïdale 659, 660 s'encastre dans la contre-pente de la rampe hélicoïdale 641, 642 usinée dans la paroi extérieure du cylindre d'alimentation 601, 602 pour que, une fois emmanché, l'alésage 661, 662 soit situé automatiquement en vis-a-vis de l'ouverture du canal d'amenée d'air comprimé 625, 626. Des alésages 663 identiques sont disposés à distance égale l'un de l'autre tout autour du côté intérieur de la jante 657, 658 pour loger des boulons 664 saillants d'une bande circulaire par exemple en tôle élastique 665, 666 insérée dans une chambre à air 667, 668 pour retenir les épaulements 669, 670, 671, 672 de cette chambre à air contre la surface extérieure de la jante 657, 658. Cette chambre à air 667, 668 est reliée à l'alésage 661, 662 et donc au canal d'amenée d'air comprimé 625, 626 par une soupape (figure 25) dont l'enveloppe extérieure 673 fait partie de la bande en tôle 665, 666 et est fixée dans l'alésage 661, 662 par un contre-écrou 674, 675, tandis que son enveloppe intérieure 676 en forme de fourchette traverse le fond du tube extérieur 673, et est soumis à une pression constante par le ressort 678, réglable par l'écrou 681 retenant les passages de l'air comprimé 679, 680 en position fermée. De plus, la partie supérieure de la jante 657, 658 comprend une rainure annulaire 682, 683 pour permettre l'encastrement au moment de la décharge automatique d'un bras 429 comme indiqué à la figure 24.

Ainsi conçu, le moule fonctionnant en synchronisation avec les autres éléments de l'installation adaptés au besoin permet la fabrication de pneus selon les procédés technologiques différents dont les trois principaux seront décrits ci-dessous.

Les matériaux de départ de compositions chimiques difrétentes sont alimentés par le moyen d'alimentation décrit précédemment et notamment par le moyen d'alimentation selon le second mode de réalisation décrit précédemment et représenté aux figures 13 et 14. Toutefois, les mélanges alimentés doivent être très précisément dosés et donc il est préférable de les préparer, homogénéiser et malaxer par des machines spéciales extérieures à l'installation.

L'alimentation des moules sous basse et moyenne pressions est réalisée à partir des moyens d'alimentation par la presse principale et diffère des dispositifs d'alimentation décrits dans le premier mode de réalisation en ce que le récipient de mélange 107 est remplacé par un récipient de mélange mobile dont la paroi extérieure 684, munie d'une butée de soulèvement 697, 698 fixée par des écrous 699, 700, coulisse de manière étanche contre la paroi intérieure de l'élargissement 106 du cylindre extérieur 95 de la presse principale. Son enceinte est reliée à l'atmosphère avant la descente du piston outil 188 à travers les fentes 703 et les orifices 103. Son fond 685 est avantageusement muni de deux bosses 686, 687 disposées au-dessus des bossages 585, 586 du couvercle supérieur 578, et est découpé en son centre d'une ouverture autour de laquelle est disposé un cylindre 688 pour recevoir de manière coulissante l'arbre 167 de la presse principale qui comprend à son extrémité inférieure un réservoir d'alimentation formé par un cylindre 689, fermé par un fond 696. Le cylindre 688 comprend une ouverture 691 d'alimentation de mélange dans le réservoir 689 de l'arbre fileté 167. De manière analogue, le cylindre 688 du réservoir mobile 684 reçoit le second réservoir d'alimentation du second mélange constitué par un cylindre 704 fixé à l'extrémité supérieure de l'arbre fileté 69 de la presse à vis inférieure de la presse auxiliaire et fermé surson extrémité supérieure par un couvercle 706. Le piston outil 188 de la presse principale comprend deux bossages 701, 702 destinés à venir appuyer sur les bossages du couvercle supérieur 578 pour la compression du mélange dans le moule sous haute pression et à assurer le refoulement du surplus du mélange à l'état malléable. De manière analogue, le piston de montée 71 de la presse à vis supérieure de la presse auxiliaire est équipé de deux bossages 655, 656 (figure 11) venant en contact avec les bossages 653, 654 du couvercle inférieur 643. Ainsi, avec un tel dispositif pour alimenter un premier mélange dans les moules empilés, ce mélange est alimenté depuis le premier compartiment du moyen d'alimentation représenté aux figures 13 et 14 à travers la chambre de dosage associée, le dispositif régulateur de dosage et de refoulement mobile associé dans le récipient 684, l'arbre fileté 167 de la presse principale est alors descendu à son point mort bas de manière que l'orifice d'alimentation 690 de son réservoir 689 s'aligne avec l'ouverture rectangulaire d'alimentation 691 du réservoir 684 et ses ouvertures 692 à 695 s'alignent avec les ouvertures 613 à 616 des cylindres d'alimentation 601, 602 et des moules pour alimenter le mélange dans chaque moule. Comme dans les deux premiers modes de réalisation, pendant la phase de compression à haute pression, les récipients 684 et 689 sont isolés de l'enceinte du moule pour ainsi éviter tout risque de compactage du surplus de mélange ou du mélange contenu dans le récipient 689 et les ouvertures 613 à 616 des cylindres d'alimentation 601, 602. Le surplus de mélange contenu dans le récipient 684 est refoulé dans le moyen d'alimentation de la même manière que celle décrite précédemment. Avantageusement, le premier mélange permet de réaliser le corps du pneu et la surface de roulement.

Après avoir réalisé cette première opération, le piston 188 est remonté ainsi que l'arbre 167 à sa position haute. Le moyen d'alimentation est mis en rotation pour permettre l'alimentation du second mélange à partir du deuxième compartiment d'alimentation à travers sa propre chambre de dosage à volume variable 16, 27 du régulateur de dosage et de refoulement associé dans le récipient mobile 684 vide. L'arbre fileté 69 de la presse à vis inférieure de la presse auxiliaire est monté à son point mort haut pour que l'orifice d'alimentation 705 du récipient situé à proximité de son couvercle 706, s'aligne avec l'orifice de distribution 691 du récipient 684 et que les orifices de distribution 707 à 710 de ce récipient 704 s'alignent avec les orifices 613 à 616 d'alimentation de chaque moule particulier pour ainsi relier l'enceinte du récipient 684 avec l'intérieur des moules. Ce second mélange permet notamment de réaliser les flancs du pneu. L'alimentation de ce second mélange est réalisé selon un procédé identique à celui du premier mélange par le piston 188 de la presse principale l'arbre central 167 de cette presse restant à son point mort haut.

Par ailleurs, une telle installation comprend des moyens pour alimenter l'huile dans les chambres des cylindres 507 à 514 de manière synchronisée avec le fonctionnement des moyens d'alimentation de la presse principale et de la presse auxiliaire pour provoquer le déplacement des segments arqués 531 à 538 de manière à exercer une pression extérieure sur le mélange injecté dans le moule, tandis que la pression intérieure est exercée par l'air contenu dans la chambre à air 667, 668 et les pressions inférieure et supérieure par les outils de presse 188 et 71 respectivement de la presse principale et de la presse auxiliaire par l'intermédiaire des couvercles inférieur et supérieur et de leur jambage vertical associé.

Dans le cas de la fabrication de pneus à partir de carcasses, ces carcasses sont fixées avant leur introduction dans le moule sur les jantes 657, 658 enveloppant ainsi la chambre à air 667, 668. Ces carcasses seront étendues à la configuration désirée par la pression d'air contenue dans les chambres à air 667, 668.

Les différents systèmes d'alimentation d'air, d'huile de l'installation sont programmés pour permettre une fermeture lente et continue du moule au cours de laquelle, le surplus de mélange est extraît hors des moules et de la manière décrite ci-après.

Par ailleurs, les traitements chimiques, thermiques des pneus seront réalisés par l'alimentation de milieu de traitement ou de chauffage approprié par l'intermédiaire des différents conduits décrits précédemment qui sont alimentés de manière programmée, notamment par des soupapes actionnées par des surfaces de cames prévues sur la plate-forme immobile 4 dans les différents secteurs de l'unité de travail. Puis, après que l'ensemble de moules particuliers du carrousel ait été déplacé dans tous les secteurs de traitement thermique de l'installation, il est amené dans le secteur de décharge dans lequel simultanément on décharge l'ensemble des pneus et on recharge les moules avec de nouvelles carcasses, comme cela sera décrit ultérieurement en référence à la figure 23.

L'installation équipée de moules décrits ci-dessus est susceptible d'être utilisée pour la fabrication de pneus de construction différente par simple programmation de son fonctionnement suivant le procédé technologique approprié. Cette adaptation sensiblement automatique résulte des traits caractéristiques de l'installation et en particulier des moules integrés qui offrent les avantages suivants:

l'installation est adaptable à la production de pneus de toutes dimensions par simple échange des moules,

l'augmentation du volume de production peut être adaptée au besoin par l'échange ou le prolongement des éléments portant les moules 350, 357, 591, 592 et une augmentation correspondante du nombre de moules, tandis que la diminution de la production est obtenue par la fermeture d'un nombre désiré des passages de mélange 692 à 695 et 707 à 710 situés au fond des cylindres d'alimentation supérieure 689 et inférieure 704,

l'alimentation des moules peut être accélérée par accélération de la cadence de travail de moyens d'alimentation illustrés dans les figures 13, 14, 15, l'entrée dans le moule étant suffisamment grande pour absorber le mélange pénétrant sous basse et moyenne pression en rejetant le surplus éventuel à travers les petits orifices 711 et les fentes 712, 713 de sortie de l'air et de surplus du mélange,

l'alimentation des moules peut être effectuée en plusieurs couches de compositions différentes par l'installation de moyens formant presse sur un ou plusieurs secteurs immobiles suivants du carrousel, accompagnée par une augmentation correspondante des compartiments d'alimentation illustrés dans les figures 13, 14, 15,

le degré de l'ouverture et de la fermeture du moule qui est échelonné en espace et temps, est parfaitement contrôlable. Ainsi, malgré la pression du mélange pendant l'alimentation contre le fond 685 du récipient mobile 684, celui-ci ne s'abaissera pas avant que les poussoirs 543 à 550 des segments 531 à 538 ne soient poussés vers le centre du moule,

la fermeture du moule est programmée d'après les exigences du procédé technologique dans chaque cas particulier. Elle peut être opérée pendant l'alimentation en plusieurs étapes, par fermetures et ouvertures successives synchronisées avec le programme d'alimentation, le surplus du mélange étant toujours refoulé du côté intérieur vers les moyens d'alimentation et du côté extérieur vers la bouche 714 reliant les gorges arquées 527 à 530 d'évacuation de l'air et de surplus du mélange,

au moment du commencement de la fermeture définitive du moule sous la haute pression, les voies de refoulement sont fermées, la quantité du mélange renfermé dans le moule correspondant exactement au poids du pneu fini, l'air comprimé commence à circuler à travers le conduit 631, 633, 625, 626, 601, 602 et la soupape 679, 680 associée à la chambre à air 667, 668, en synchronisation avec la pression extérieure exercée par les segments 531 à 538 convergents et les couvercles supérieurs 577, 578 et inférieurs 643, 644 soumis à la pression respectivement des bossages 701, 702 du piston-outil 188 de la presse principale 686, 687 du récipient du mélange mobile 684 et des bossages de soulèvement 655, 656 du disque de montée 71 de la presse à vis supérieure de la presse auxiliaire.

Avant le retour de ces bossages dans leur position initiale, les arbres de commande 358, 359 respectifs des porte-moules supérieurs sont mis en marche synchronisée dans le sens opposé pour s'arrêter chacun contre une butée, non représentée, aussitôt que les bosses 585, 586 du moule se trouvant au sommet de la colonne de moules et celles 653, 654 du moule se trouvant à la partie inférieure de la colonne, se trouvent respectivement en-dehors des ouvertures associées de la plaque mobile supérieure 361 et de la plaque mobile inférieure 343. Ces plaques mobiles 361, 343 retiendront ainsi tous les moules entassés dans la colonne respective en position fermée pendant toute la durée du traitement, amenant, en même temps, les canaux verticaux de refoulement de la vapeur 501, 502 et de l'air de refroidissement 370, 371 des moules au-dessus des ouvertures de refoulement analogues percées dans la plaque mobile inférieure 343, pour les aligner au cours de leur avancement solidaire durant chaque arrêt du carrousel avec les ouvertures correspondantes 370, 371 et les soupapes associées 368, 369 de la première plate-forme circulaire immobile 4.

Pour la fabrication de pneus, la cadence de travail de l'installation est surtout déterminée en fonction de la durée des traitements thermiques, chimiques ou analogues, augmentées pour la durée des traitements mécanique ou de décharge. De ce fait, chaque pneu particulier doit rester dans son moule pendant toute la durée du traitement, thermique, chimique ou analogue, l'occupation du moule étant prolongée pour la durée la plus longue parmi la durée du traitement mécanique et la durée de décharge. La durée totale du cycle de travail de chaque moule particulier divisée par le nombre de secteurs du carrousel donne la durée de la cadence de travail, également valable pour chaque secteur, respectivement pour tous les moules empilés sur chaque secteur particulier. Cela signifie que la productivité de l'installation augmentera avec l'augmentation du nombre de moules également disposés sur tout les secteurs du carrousel. Par exemple, pour un carrousel à six secteurs, chacun équipé d'une colonne comprenant 25 moules empilés pour la fabrication de pneus, demandant une durée de traitement thermique-chimique de 20 mn, une durée de l'alimentation et de traitement mécanique de 2 mn et un temps de décharge de 2 mn, la cadence de travail sera fixée à 4 minutes, le traitement thermique-chimique commençant déjà dans le secteur mécanique et se terminant dans le secteur de décharge. L'installation livrera toutes les 4 minutes 25 pneus finis, c'est-à-dire 375 pneus/heure, 9000 pneus/jour et 3.150.000 de pneus finis en 350 jours pour un travail continu.

Si on veut augmenter le volume de production de la même installation à 5.000.000 de pneus par an, il faut empiler sur chacun des six secteurs, 40 moules au lieu de 25 dans le cas précédent, ce qui entraînera une augmentation de la hauteur des colonnes de 60 % et par conséquent une manipulation compliquée sinon plus prolongée pendant l'alimentation et la décharge. Pour pallier cet inconvénient, l'installation doit être équipée d'un carrousel à dix secteurs, chacun comprenant une colonne de 25 moules empilés tournant autour du corps cylindrique 6 à une cadence de travail de 144 secondes, avec la même durée de traitement mécanique et de décharge de 2 mn, avec une durée de traitement thermique-chimique de 20 minutes, opérée d'une manière identique au cas précédent, l'installation produira pendant 350 jours de travail 5.040.000 pneus finis, ce qui repésente une augmentation de la productivité de 60 %, l'installation étant alors de la même hauteur, tandis que son diamètre entier ne sera augmenté que de 2 mètres par rapport au carrousel à six secteurs, l'encombrement et le nombre des autres éléments de l'installation tels que le moyen formant presse, le moyen d'alimentation et le dispositif de décharge n'étant pas modifié.

Ceci montre bien l'avantage important de l'installation de la présente invention dans la réduction de l'infrastructure nécessaire pour la fabrication en continu et avec un grand volume de production d'articles moulés, tout en réduisant la main d'oeuvre par une automatisation complète de cette installation permettant en même temps l'application de technologies différentes dont on expliquera à titre d'exemple quelques variantes se rapprochant le plus de la technologie conventionnelle:

chaque moule est muni d'une carcasse fabriquée de manière conventionnelle ou d'un pneu vétuste à régénérer, enveloppé dans une bande en caoutchouc, l'alimentation est supprimée et le rôle de l'installation réduit à la vulcanisation des carcasses, respectivement des pneus s'y trouvant avec une durée de traitement mécanique réduite à 10 secondes, le temps de décharge étant de 2 mn et une cadence de travail de 133 secondes, l'installation à 10 secteurs équipée et opérant comme décrit ci-dessus produira pendant 350 jours de travail 5.682.600 de pneus finis.

chaque moule est muni d'une carcasse métallique réalisée par brasage de fils métalliques, reposant sur toute sa surface intérieure sur une toile caoutchoutée conforme, dont les ourlets sont empâtés des deux côtés dans des couches épaissies de caoutchouc et repliés vers le haut ensemble avec les ourlets de la carcasse métallique autour des bourrelets pour être fixés tous ensemble, dans lesdites couches de caoutchouc par une presse de préfabrication agissant simultanément des deux côtés opposés de la carcasse, l'installation étant équipée, au choix du constructeur de pneu, d'un ou plusieurs moyens formant presse disposés autour du corps cylindrique 6 pour ainsi permettre de noyer cette carcasse dans un nombre de couches de mélanges de compositions différentes, injectés successivement, si nécessaire vulcanisées par étape, les unes sur les autres, pour ainsi former un pneu de qualité désirée,

dans un autre cas, la carcasse est préfabriquée sur la même presse susmentionnée, sans carcasse métallique qui est alors remplacée par une chambre à air à paroi épaisse, posée sur ladite toile caoutchoutée, définitivement gonflée à une pression déterminée, d'une forme et d'une hauteur adaptées aux dimensions et au profil du pneu à fabriquer, ses ourlets étant repliés ensemble vers le haut avec les ourlets de la toile autour des bourrelets et fixés comme dans le cas précédent pour former ainsi la base du pneu qui sera réunie par étape avec les couches suivantes des mélanges de compositions appropriées, vulcanisées successivement l'une sur l'autre. Ce genre de carcasse est susceptible d'être préfabriqué en une pièce avec sa propre jante ce qui rend possible la fabrication du pneu en position montée sur sa jante qui sera simplement emmanchée et fixée sur la roue d'une automobile.

Bien entendu, de nombreuses autres solutions peuvent être envisagées. Cependant, le but de la présente invention est d'offrir aux constructeurs de pneus, un outil à l'aide duquel ils peuvent réaliser un nouveau pneu d'après leurs propres idées.

On décrira maintenant en référence à la figure 23, le fonctionnement des dispositifs de décharge des pneus contenus dans les moules entassés dans une colonne particulière d'un secteur du carrousel.

Arrivée dans le secteur de décharge la colonne s'arrête avec les canaux de refoulement de la vapeur 501, 502 situés au-dessus et reliés par les ouvertures solidaires de la plaque inférieure mobile 343 avec les conduits 368, 369 à travers leurs soupapes à tête ovale, ouvertes au moment de cet arrêt. Puis, éventuellement, pendant un certain temps, les articles subissent la dernière phase du traitement thermique, chimique ou analogue. A la fin de ce traitement la soupape d'aspiration du condensateur de la chaudière, non représentés est ouverte et la quantité totale de la vapeur contenue dans les moules de la colonne entière est refoulée, les arbres de commande sont alors mis en marche, l'arbre de commande 358 entraînant l'ensemble des moules fermés de nombre impair avec leur barre commune extérieure droite 591 vers la place de décharge droite et l'arbre de commande 359 entraînant l'ensemble des moules de nombre pair avec leur barre commune exterieure gauche 592 vers la place de décharge gauche, ces deux barres communes 591, 592 glissant sur la surface de la plate-forme immobile inférieure 4. Ainsi, la colonne unique de moules se sépare en deux demi-colonnes comprenant des moules suffisamment éloignés les uns des autres pour permettre le démoulage de pneus par coulissement des segments 531 à 538 vers l'extérieur et par la montée du couvercle supérieur 577, 578 et la descente du couvercle inférieur 643, 644 ce qui permet à la partie inférieure de s'abaisser par abaissement des barres communes 591, 592 au moyen des leviers hydrauliques 598 et ainsi séparer les pneus 725, 726 du corps de moule et du couvercle supérieur étant donné qu'ils sont entraînés avec la partie inférieure par la jante. Les arbres de commande 358, 359 sont alors mis en marche arrière pour faire retourner les parties supérieures des moules libérées dans le carrousel où elles seront éventuellement humidifiées par des agents contre l'adhésion à l'aide d'un pulvérisateur 727 illustré sur la figure 22.

Simultanément, les pneus finis 725, 726 portés par leur jante 657, 658 échelonnés en hauteur sur leur disque 587, 588 solidaire respectivement des barres communes 591, 592 sont disposés à leur place de décharge respective à distance égale d'un moyen porte-carcasses 719, 720 amovible par coulissement de son cylindre 721, 722 sur l'arbre 723, 724 immobile et d'une tour de décharge commune 728 constituée par un colimaçon transporteur mobile 729 et d'un arbre immobile 730, 731. Sur cet arbre immobile 730, 731 est emmanché un cylindre 732, 733 mobile, muni de paires de bras disposés en hauteur à distance égale à celle séparant chaque disque porte-moule inférieur 587, 588 et les disques 717, 718 du moyen porte-carcasse 719, 720. Tous les bras de ces différentes paires de bras ont une même longueur et comprennent à leur extrémité une partie arquée, notamment hémicylindrique de diamètre interne sensiblement égal au diamètre externe des jantes. Sous l'effet de la rotation du cylindre 732, les premiers bras 429a, 429c de chaque paire de bras viennent en contact avec les jantes 657, 658 portant les pneus finis 725, 726, comme illustré à la figure 24, les deuxièmes bras 734, 735 de chaque paire de bras prennent simultanément les jantes non numérotées munies de nouvelles carcasses 715, 716 disposées sur le moyen porte-carcasses 719, 720. Après une montée du cylindre porte-bras 732, 733 par un système hydraulique (non représenté) et par coulissement sur l'arbre de support immobile 730, 731, les bras 429a, 429c, séparent respectivement les pneus finis du couvercle inférieur de moule et ceux 734, 735 simultanément les jantes portant les nouvelles carcasses de leur support 719, 720. Une nouvelle rotation du cylindre porte-bras 732, 733 permettra d'amener les pneus finis avec leurs jantes respectives, au-dessus du transporteur 728 et les jantes avec les nouvelles carcasses au-dessus des supports des moules inférieurs. Puis après dépôt des pneus finis avec leur jante dans la tour de décharge 728 et des jantes avec les nouvelles carcasses dans les supports de moules inférieurs 587, 588, le cylindre porte-bras 732, 733 sera pivoté à sa position initiale et les arbres de commande 358, 359 amèneront de nouveau les parties supérieures des moules à leur place de décharge pour les unir avec leur partie inférieure respective munie de nouvelles carcasses et enfin pour retourner les deux demi-colonnes de moule ainsi reformées dans le carrousel pour former une colonne unique de moules.

Avantageusement, la partie inférieure de chaque moule sera humidifiée par des agents contre l'adhésion après l'enlèvement des produits finis. Les exemples de fabrication très diversifiés donnés ci-dessus illustrent la grande adaptabilité de l'installation de l'invention pour la fabrication de tout type d'articles, sans pour cela nuire à la productivité de ces articles. Cette adaptation est simplement réalisée par le remplacement ou la modification de certains éléments facilement accessibles. Donc une telle installation est très appropriée pour un atelier de fabrication devant produire au cours d'une année plusieurs articles ayant des formes différentes ou demandant des traitements variés.

**Revendications**

1. Installation pour la fabrication en continu et automatisée d'articles agglomérés, frittés, vulcanisés ou pressés à partir de minéraux, matières plastiques, mélanges, métaux ou alliages comprenant notamment au moins un moyen formant presse (69, 168) pour presser le matériau introduit dans un moule (232) par au moins un moyen d'alimentation (6), au moins un moyen (92, 241, 367, 501) pour les traitements thermique, chimique, mécanique ou semblable des produits pressés, et au moins un dispositif de decharge (207, 587) de produits finis, caractérisée en ce que le dispositif d'alimentation (6) des matériaux est monté dans une position fixe sur le bâti de l'installation constitué par un cylindre central (1) et des plates-formes (2, 4, 5, 7) d'espacement réglable afin d'alimenter une ou simultenément plusieurs unités de travail positionnées sur le bâti autour des éléments du dispositif d'alimentation (6), chaque unité de travail étant divisée en secteurs fixes par rapport au bâti de l'installation, chacun d'eux comportant un moyen formant presse (69, 168), un moyen de traitement (92) et un moyen de déplacement ou de décharge (207, 587) du produit du moule, tous étroitement fixés sur le bâti de l'installation, le moyen formant presse étant constitué par une presse auxiliaire (69) montée d'en bas sur les plates-formes inférieures (2, 4) et une presse principale (168) montée à l'opposé d'en haut sur les plates-formes supérieures (5, 7) de manière que dans l'espace entre les deux presses et au-dessus des autres secteurs fixes tourne un carrousel (223) nanti du même nombre de secteurs mobiles, transportant des éléments des moules (232, 395) ou le moule (531 à 538), ou bien des articles formées (725, 726) d'un secteur fixe d'une unité de travail au prochain secteur fixe de l'unité de travail.

2. Installation selon la revendication 1, caractérisée en ce que des moules (232, 531 à 538) des articles à produire sont formés par cooperation entre les éléments de moule d'une unité de travail et des outils (188, 82) d'une presse principale (168) et d'une presse auxiliaire (69), leur assemblage et fermeture étant synchronisés avec le commencement de l'alimentation.

3. Installation selon la revendication 2, caractérisée en ce que la communication entre le moyen d'alimentation (6) et le moule (232, 531 à 538) formé par coopération entre les moyens formant presse et les éléments de moule de l'unité de travail, coupée au moment d'achèvement de l'alimentation est automatiquement rétablie, en sens inverse, aussitôt que la pression exercée par le matériau alimenté contre le dispositif régulateur (19 à 29, 36) de dosage et de refoulement s'approche à la pression à laquelle ce matériau s'agglomère.

4. Installation selon la revendication 1, caractérisée en ce que le bâti de l'installation comprend un cylindre central (1) qui supporte deux plates-formes (4, 5) et un corps cylindrique (6) qui à son tour supporte une troisième plate-forme (7) et faisant partie du moyen d'alimentation (6) comprend au moins un orifice (9) de distribution des matériaux, formé et réparti selon une section transversale dans son enveloppe extérieur, au moins un de ces orifices de distribution débouchant dans le secteur d'une unité de travail comportant un moyen formant presse.

5. Installation selon la revendication 4 caractérisée en ce que les plates-formes (4, 5, 7) font les éléments intégraux de l'installation, portant les moyens d'entraînement et d'alimentation (6) et le systèmes de conditionnement des carrousels (223), logeant les outils des moules (232) et formant les portes de communications entre ces outils et ceux de la presse auxiliaire, supportant la presse principale (168) et l'installation entière s'appuyant par leur circonférence périphérique sur une infrastructure verticale (1) du support (3).

6. Installation selon la revendication 5, caractérisée en ce que l'outil de presse (82) la presse auxiliaire (69) comprend des éléments de moule (232) destinéés à coopérer avec les éléments de moule du carrousel.

7. Installation selon la revendication 6, caractérisée en ce que la fermeture de la communication entre le moyen d'alimentation (6) du matériau et le moule pendant la phase de compression à pression élevée est réalisée par l'outil de presse (188) de la presse principale (168).

8. Installation selon la revendication 6, caractérisée en ce que la presse auxiliaire est fixée en dessous du carrousel (223) et comprend un cylindre (73), un piston (77) contenu dans ce cylindre et portant de manière amovible un outil de presse (82), ce piston étant actionné par une presse à vis comportant une roue dentée. (57) en prise avec une roue dentée (58) d'entraînement, une vis de montée (59) en prise avec un arbre fileté (69) reliée à ce piston (77), l'extrémité inférieure de cet arbre étant bridée sur la chassis fixe de la presse auxiliaire.

9. Installation selon la revendication 8, caractérisée en ce que l'outil de presse (82) est monté coulissant sur le piston (77), et est maintenu élastiquement, dans sa position éloignée par raport au piston par example, par des ressorts.

10. Installation selon l'une des revendications 8 ou 9, caractérisée en ce que la presse auxiliaire (69) comprend une seconde presse à vis disposée entre le piston (77) et a roue dentée (57) de la première presse à vis, cette seconde presse à vis comportant un piston (71) de forme adaptable, un roue dentée (64) en prise avec une roue dentée d'entraînement (65), une vis (66) de monté d'un arbre fileté (72) relie au piston (71).

11. Installation selon la revendication 7, caractérisée en ce que la presse principale (168) est une presse hydraulique, pneumatique, ou hydraulique pneumatique ou pneumatique/à explosion combinée, comprenant un outil de presse portant des éléments de moule destinés à coopérer avec les éléments de moule du carrousel et les éléments de moule portés par le piston (77) de la presse auxiliaire pour former un moule, et une enveloppe définissant à son extrémité inférieure, au dessus des éléments de moule du carrousel, un récipient (107) dans lequel débouche au moins un orifiece de distribution (9) du moyen d'alimentation, cet orifice étant partiellement isolé du moule par l'outil de presse de la presse principale pendant la phase de compression à pression élevée du produit.

12. Installation selon la revendication 11, caractérisée en ce que la presse principale précitée comprend un cylindre extérieur (95) formant l'enveloppe extérieure de la presse, cette enveloppe étant fixée sur l'une des plates-formes du bâti de l'installation, et à l'intérieur de laquelle sont disposés une pompe à piston à huile, un cylindre central, plusieurs vérins (123a, b, c, d, e, f, g, h) disposés en couronne autour du cylindre central et alimentés en huile sous pression par la pompe à piston, chaque vérin agissant sur un piston moteur (176) de la presse, ce piston moteur portant l'outil de presse (188) de forme adaptable selon l'article à fabriquer.

13. Installation selon la revendication 12, caractérisée en ce que la pompe à huile comprend un distributeur d'huile dans les vérins hydrauliques (123) disposés en forme de couronne, ce distributeur d'huile étant constitué par un cylindre intérieur à la pompe ayant sur sa paroi verticale (147) une denture en prise avec une roue dentée (149) d'entraînement et un fond rotatif (150) muni d'un seul orifice pour alimenter successivement chaque vérin hydraulique.

14. Installation selon la revendication 12 ou 13, caractérisée en ce que le piston (144) de la pompe à huile d'alimentation des vérins hydrauliques (123) est actionné par une presse à vis comportant une roue dentée (152) en prise avec une roue dentée (153) d'entraînement et un vis (156) en prise sur un arbre fileté (157) relié au piston (144) de la pompe a huile.

15. Installation selon la revendication 13, caractérisée en ce que la presse principale comprend une deuxième presse à vis pour déplacer le piston (168) du cylindre central de cette presse principale.

16. Installation selon la revendication 12, caractérisée en ce que la presse principale comprend au moins un cylindre (102) comportant une chambre d'explosion (742), un piston (180), des soupapes d'admission et déchappement (736, 738) des moyens d'allumage et d'alimentation en carburant du cylindre, et un dispositif d'alimentation en air comprimé de chaque cylindre (102) constitué par une soupape (746) d'admission d'air frais logée dans l'extrémité inférieure du cylindre central de la presse principale reliée au cylindre par un conduit d'alimentation d'air (187b), l'air étant comprimé par le piston (168) de ce cylindre central.

17. Installation selon la revendication 16, caractérisée en ce que la tige (739) de la soupape d'échappement (738) du cylindre (102) traverse le piston moteur (176) de la presse principale et comprend un organe formant butée (743) sur sa partie faisant saillie au-delà du piston moteur (176) pour provoquer l'ouverture de la soupape d'échappement après une course prédéterminée du piston moteur (176).

18. Installation selon la revendication 16 ou 17, caractérisée en ce que la soupape d'admission (736) du cylindre (102) comprend un alésage longitudinal dans lequel est monté coaxialement de manière coulissante le corps (740) de la soupape d'échappement (738) du cylindre (102).

19. Installation selon la revendication 12 caractérisée en ce que le moyen d'alimentation des matériaux dans le secteur d'unité de travail comportant un moyen formant presse, comprend un cylindre extérieur (6) formant l'enveloppe extérieure du moyen d'alimentation, fixé sur le cylindre (1) du bâti d'alimentation et successivement depuis sa partie supérieure, logés dans le cylindre extérieur (6), au moins une trémie (53) ou goulotte d'alimentation des matériaux, au moins un mélangeur, au moins un alimentateur de mélange et au moins un dispositif régulateur de dosage et de refoulementdes matériaux associé à chaque orifice de distribution (9) formé dans le cylindre extérieur (6).

20. Installation selon la revendication 19, caractérisée en ce que le mélangeur précité communique avec l'alimentateur de mélange à travers un double fond muni d'au moins un orifice, (40, 46) l'un (39) des fonds étant fixe et l'autre (45) étant entraîné en rotation, par exemple, par une roue dentée (52).

21. Installation selon la revendication 19 ou 20, caractérisée en ce que l'alimentateur de mélange précité communique avec chaque dispositif régulateur de dosage et de refoulement à travers un double fond muni d'au moins un orifice (17, 16a), l'un des fonds (18) étant fixe tandis que l'autre (16) est entraîné en rotation, par exemple, par une roue dentée (15).

22. Installation selon les revendications 19 à 21 caractérisée en ce que le dispositif régulateur de dosage et de refoulement comprend une chambre de dosage à volume variable délimitée par un piston (27) supporté par des moyens élastiques, dans laquelle débouche l'orifice de distribution (9), l'orifice d'alimentation (16a), et également un orifice de refoulement (21a) mettant en communication la chambre de dosage avec l'alimentateur de mélange quand la pression appliquée sur le matériau alimenté dans le moule est supérieur à la force de ressort réglable des moyens élastiques supportant le piston.

23. Installation selon la revendication 22, caractérisée en ce que le piston (27) comprend une partie de jupe (29) formant dossier et faisant saillie dans la chambre de dosage pour venir masquer périodiquement l'orifice de refoulement (21a).

24. Installation selon l'une des revendications 19 à 23, caractérisée en ce que l'alimentateur de mélange comprend un arbre (32) sur la plus grande partie duquel est fixée une vis sans fin (30) pour amener le mélange vers les orifices d'alimentation (16, 17, 16a) de son double fond, la partie inférieure de l'arbre (32) située en regard des orifices de refoulement (21a) des dispositifs régulateur de dosage et de refoulement comprend une vis sans fin (31) de pas inverse à celui de la vis sans fin (30) d'alimentation.

25. Installation selon l'une des revendications 19 à 24 ou 25 caractérisée en ce que le mélangeur et l'alimentateur de mélange sont divisés en au moins deux compartiments verticaux comportant chacun une vis sans fin (475, 476), d'entraînement des matériaux pour alimenter deux mélanges différents dans les dispositifs régulateurs de dosage et de refoulement respectifs solidaires en rotation avec un cylindre mobile (13) entraîné en rotation par une roue dentée (15).

26. Installation selon la revendication 1, caractérisée en ce que le carrousel est entraîné par un arbre (226) central supporté en rotation par l'une (4) des plates-formes de l'installation et comprend au moins un cadre de support (213) d'un moule ou d'élément de moule, solidaire de l'arbre (226) central.

27. Installation selon la revendication 26, caractérisée en ce que le carrousel comprend un nombre d'éléments de moule égal au nombre de secteurs de l'unité de travail correspondants.

28. Installation selon la revendication 26 ou 27 caractérisée en ce qu'un cylindre (245) formant réservoir de gaz est disposé autour de la partie inférieure de l'arbre d'entraînement du carrousel (226) ce réservoir étant partagé en deux chambres inférieure et supérieure, la chambre supérieure comprenant un premier conduit (248) d'alimentation en gaz chaud tel que par exemple de l'air chaud, un second conduit (93) de communication avec la chambre supérieure (247) définie par le piston (77) dans le cylindre (73) de la presse auxiliaire, un troisième conduit (249), reliant les conduits de gaz chaud disposés dans le secteur de lunité de travail constituant le moyen de traitement thermique des articles.

29. Installation selon la revendication 28, caractérisée en ce que la chambre inférieure du réservoir de gaz comprend un premier conduit (94) de communication avec la chambre (251) inférieure définie par le piston (77) dans le cylindre (73) de la presse auxiliaire, un second conduit d'alimentation (252) en gaz frais, par exemple de l'air frais, un troisième conduit (253) de refoulement de gaz chaud, ce troisième conduit étant avantageusement relié au conduit d'alimentation en gaz chaud (248) de la chambre supérieure du réservoir.

30. Installation selon les revendications 1 à 25 caractérisée en ce que l'axe de rotation du carrousel est l'axe de symétrie du cylindre (1) du bâti et du moyen d'alimentation de matériaux, le carrousel comprenant un nombre d'éléments de moule de préférence égal au nombre de secteur de toutes les unités de travail montées autour du cylindre (1) du bâti de l'installation.

31. Installation selon les revendications 26 à 30, caractérisée en ce que le carrousel précité comprend un caisson ou tambour (200) en forme de couronne monté fixement sur le bâti de l'installation autour de l'arbre d'entraînement (223, 226) du carrousel, les cadres de support d'éléments de moule étant déplacés à l'intérieur du tambour (200) d'un secteur à l'autre de l'unité de travail correspondante, le couvercle et le fond du tambour (202, 205) comportant des ouvertures appropriées dans les secteurs de l'unité de travail comprenant respectivement un moyen formant presse et un moyen de décharge ou démoulage.

32. Installation selon la revendication 31, caractérisée en ce que les cadres de support d'éléments de moule sont constitués par un tambour (213) monté à l'intérieur du tambour fixe (200) du carrousel et entraîné en rotation par l'arbre d'entraînement (223, 226) du carrousel, ce tambour (213) comprenant à ses parties supérieure et inférieure des ouvertures opposées dans lesquelles sont disposés les éléments de moule.

33. Installation selon la revendication 32, notamment utilisée pour la fabrication d'articles frittés tels que garnitures de frein, caractérisée en ce que les élémets de moule du carrousel sont constitués par un cylindre sans fond (222) reposant par sa partie supérieure évasée sur le tambour mobile (213) du carrousel, et supportant un couvercle (231) muni d'une ouverture conjuguée à la forme des éléments de moule portés par l'outilde presse de la presse principale et d'un cylindre de modelage (232) disposé à l'intérieur du cylindre sans fond (222), chaque outil de presse respectivement de la presse principale et de la presse auxiliaire comprenant respectivement des éléments de moule coopérant avec le couvercle (231), le cylindre de modelage (232) pour former le moule des garnitures de freins.

34. Installation selon la revendication 33 caractérisée en ce que les éléments de moule portés par la presse auxiliaire sont constitués par une pluralité de plaques verticales ou fourchettes (82) espacées les unes des autres pour définir entre elles un espace de forme correspondant à un bloc de garnitures de frein, ces fourchettes étant disposées dans le cylindre de modelage (232) par la montée du piston (77) de la presse auxiliaire à travers des ouvertures conjuguées d'un outil femelle disposé dans l'ouverture du fond (205) du tambour fixe (200), les éléments de moule portés par la presse principale sont constitués par une plaque comportant un bossage de forme conjuguée à l'ouverture du couvercle (231) des éléments de moule du carrousel pour ainsi former en matériau pressé, une plaque porteuse (240) des blocs de garnitures de frein définis entre chaque fourchette (82), d'épaisseur correspondant à l'écartement final entre les extrémités supérieures des fourchettes (82) et la surface inférieure du bossage porté par l'outil de la presse principale.

35. Installation selon la revendication 34, caractérisée par un cadre profilé en U (237) disposé à l'intérieur de la partie supérieure du cylindre de modelage (232) pour former une surface de guidage des fourchettes (82) externes, ce cadre étant pris dans le matériau pressé formant la plaque porteuse (240) des blocs de garnitures de freins (239) pour former un moyen de préhension pour la manutention de l'ensemble de blocs de garnitures de frein.

36. Installation selon la revendication 35, caractérisée en ce qu'elle comprend un dispositif pour usiner et débiter à grande vitesse au moins un ensemble de blocs (239) de garnitures de frein reliés entre elles par leur bande porteuse (240), supporté par le cadre profilé en U (237) et déchargé du carrousel d'une unité de travail, ce dispositif comprend un cylindre (256) dont la partie supérieure est divisée en trois étages superposés (256a, 256b, 256c) ayant chacun une hauteur correspondant sensiblement à la hauteur d'un bloc (239) de garnitures de frein, un arbre central (257) supportant des arbres (258, 259, 301) formant support-outils d'outils d'usinage centrifuges des blocs (239) de garnitures de frein, un dispositif fixé sur la partie supérieure du cylindre (256) pour amener avantageusement deux ensembles de blocs (239) de garnitures de frein avec leur bande porteuse (240) respectivement dans deux ouvertures opposées du cylindre (256) au niveau du troisième étage supérieur (256c), et un dispositif de décharge des garnitures de frein usinées et débitées, monté sur le cylindre (256) au niveau du premier étage inférieur (256a) pour décharger simultanément toutes les garnitures de frein produites par l'usinage d'un bloc (239) de garnitures de frein.

37. Installation selon la revendication 36, caractérisée en ce que le dispositif d'alimentation des ensembles de blocs de garnitures de frein comprend des parois de guidage (266, 267) et un système à crémaillères (278, 279, 280, 281, 282, 283) pour amener le bloc externe de chaque ensemble de blocs de garnitures de frein au contact des outils d'usinage centrifuges montés dans le troisième étage supérieur (256c) du cylindre (256) et portés par l'arbre porte-outil, (301).

38. Installation selon la revendication 36 ou 37 caractérisée en ce qu'un cylindre (290) est disposé à l'intérieur du cylindre (256) de manière coulissante verticalement et rotatif pour former un élément de support des blocs (239a, 239b) de garnitures de frein séparés de la plaque porteuse (240), et amener successivement ces blocs de garnitures de frein dans les premier, second et troisième étages du cylindre (256).

39. Installation selon la revendication 38, caractérisée en ce que le cylindre (290) est découpé à sa partie supérieure et sur au moins une hauteur sensiblement égale à la hauteur d'un bloc (239) de garnitures de frein pour définir deux segments de cylindre (291, 292) opposés formant surface de support, une partie sensiblement centrale de ces segments (295, 296) étant de plus faible épaisseur, et étant munie sur sa surface intérieure d'une garniture abrasive (297).

40. Installation selon l'une des revendications 36 à 39, caractérisée en ce que l'arbre (301) porte-outils disposé dans le troisième étage supérieur (256c) du cylindre (256) est emmanché de manière coulissante sur l'arbre principal (257) et accouplé à cet arbre (257) par une rampe hélicoïdale (305) pour provoquer un déplacement vers le haut de l'axe porte-outils (301) selon un jeu prédéterminé.

41. Installation selon la revendication 39, caractérisée en ce que les outils centrifuges portés par l'axe (301) porte-outils sont essentiellement des scies ou outils de coupe centrifuges et des outils abrasifs de ponçage.

42. Installation selon l'une des revendications 36, à 40, caractérisée en ce que les outils centrifuges disposés dans le deuxième étage intermédiaire (256b) du cylindre (256) sont constitués essentiellement par des outils de coupe et de forage, et sont portés par l'arbre porte-outils (258) qui est emmanché sur l'arbre principal (257) et est entraîné en rotation de manière indépendante.

43. Installation selon la revendication 1 à 25 et 30 caractérisée en ce que le carrousel comprend un cylindre (344) emmanché de manière rotative autour du moyen d'alimentation et supporté entre deux plates-formes intermédiaires (4, 5) du bâti de l'installation, ce cylindre comprend un fond (343) comportant, par secteur du carrousel, deux orifices, ces orifices étant configurés à la dimension des éléments de moule portés par l'outil (71) de la presse auxiliaire, et un couvercle (361) muni par secteur du carrousel d'une ouverture de diamètre correspondant au diamètre de l'outil de presse (188) de la presse principale, le cylindre (344) étant entraîné en rotation autour du moyen d'alimentation par un dispositif d'entraînement tel qu'un système d'engrenages à roues dentées (354, 355).

44. Installation selon la revendication 43, caractérisée en ce que le couvercle (361) du cylindre (344) comprend dans chaque secteur du carrousel deux ouvertures situées en dehors de l'encombrement de la presse principale par rapport au moyen d'alimentation pour permettre le passage d'un noyau (360, 384) d'arbre de commande (358, 359) reliés respectivement à une partie des éléments de moule du même secteur, pour ainsi provoquer la sortie des moules hors du carrousel et le démoulage des produits dans le secteur de décharge et démoulage d'une unité de travail, par mise en rotation des arbres de commande (358, 359) par un système d'entraînement fixé sur une ou plusieurs plates-formes du bâti de l'installation.

45. Installation selon la revendication 44, caractérisée en ce que le système d'entraînement des arbres de commande (358, 359) dans chaque secteur de décharge et de démoulage de chaque unité de travail comprend une roue dentée (341, 342) s'engageant avec une roue dentée (363) fixée sur chaque noyau (360) des arbres de commande (358, 359), quand le carrousel amène les articles à démouler ou à décharger dans un secteur de décharge et de démoulage d'une unité de travail.

46. Installation selon la revendication 44 ou 45, caractérisée en ce que chaque secteur du carrousel comprend un système de canalisation de fluide, par exemple d'air chaud, relié à une source de fluide approprié par des canaux (363, 365) forés dans les arbres de commande (358, 359) respectifs, ces canaux comprenant respectivement un moyen formant soupape (366) pour contrôler automatiquement l'alimentation en fluide des moules selon le traitement désiré dans chaque secteur du carrousel.

47. Installation selon la revendication 43 à 46, notamment utilisée pour la fabrication de tubes, par exemple en amiante-ciment, comportant des brides, caractérisée en ce que les éléments de moule dans chaque secteur du carrousel sont constitués par des éléments de moule verticaux hémicylindriques (395, 396) disposés en deux rangées pour former par coopération les moules de un ou plusieurs tubes, chaque élément de moule d'une même rangée étant relié à un bras de manoeuvre solidaire de l'arbre de commande (358, 359), et d'un tube ou cylindre (446, 447) disposé à l'intérieur de chaque moule et ayant un diamètre extérieur correspondant au diamètre intérieur du tube à fabriquer, ce tube ou cylindre (446, 447) est maintenu de manière amovible sur le fond (343) du cylindre (344) du carrousel par des anneaux amovibles (403, 404) l'outil de presse (71) de la presse auxiliaire comprenant deux bossages (655, 656) de diamètre conjugué au diamètre intérieur des cylindres (446, 447) pour former des éléments de maintien et de centrage des cylindres (446, 447) pendant la phase de moulage des tubes à fabriquer, l'outil de la presse principale comprenant des dispositifs pour former les trous de fixation dans les brides des tubes à fabriquer.

48. Installation selon la revendication 43 à 45, notamment utilisée pour la fabrication de tubes en amiante-ciment par une méthode centrifuge, caractérisée en ce que les cylindres intérieurs (446, 447) sont constitués par des arbres porte-outils (407, 408) pourvus à leur périphérie d'outils centrifuges, chaque arbre porte-outils comprenant des alésages axiaux (409, 410, 411, 412) coopérant respectivement avec des axes de maintien (425, 426) formés sur l'outil de presse (188) de la presse principale, et des axes de maintien, et d'entraînement en rotation (415, 416) portés par l'outil de presse (71) de la presse auxiliaire.

49. Installation selon la revendication 48 caractérisée en ce que les axes d'entraînement (415, 416) montés sur l'outil de la presse auxiliaire comportent des roues dentées entraînées en rotation par une roue dentée (352) solidaire de l'axe (69, 353) de la presse à vis inférieure de la presse auxiliaire.

50. Installation selon la revendication 1 à 25 et 30 à 32, notamment utilisée pour la fabrication de pneus par moulage, avec ou sans carcasse, caractérisée en ce que chaque secteur du carrousel comprend plusieurs moules empilés en au moins une colonne verticale, chaque moule comprenant un conduit central d'alimentation (601, 602, 603, 604) autour duquel est disposé un corps central constitué par plusieurs segments horizontaux ou adjacents (531 à 538) et définissant un anneau; ces segments présentant des parois supérieure et inférieure biseautées ainsi que des parois latérales biseautées pour coulisser les uns par rapport aux autres de manière sensiblement étanche, un couvercle supérieur mobile (577, 578) ayant une face inférieure biseautée et de forme conjuguée à la face supérieure biseautée des segments (531 à 538), un couvercle inférieur mobile (643, 644) de forme identique à celle du couvercle supérieur, et une jante (657, 658) en forme de cylindre comportant une rampe hélicoïdale (659, 660) coopérant avec une rampe hélicoïdale (641, 642) conjuguée formée sur la paroi extérieure du cylindre d'alimentation (601, 602) associé, chaque corps central et couvercle supérieur d'un moule étant montés dans un bloc formant un porte-moule supérieur (488, 489) relié par un bras (490, 491) solidairement à l'arbre de commande (358, 359) pour provoquer la rotation du bloc hors du carrousel dans le secteur de décharge ou démoulage, tandis que chaque couvercle inférieur d'un moule et le cylindre d'alimentation (601, 602, 603, 604) associé sont montés dans un disque (587, 588) formant porte-moule inférieur relié par un bras (589, 590) à un cylindre (593, 594) de chaque secteur du carrousel disposé en dehors de l'encombrement de la presse principale pour faire pivoter le porte-moule inférieur en dehors du carrousel dans le secteur de décharge ou de démoulage d'une unité de travail.

51. Installation selon la revendication 50, caractérisée en ce que chaque segment (531 à 538) formant le corps central d'un moule est relié à une tige d'un piston monté dans un cylindre correspondant formé dans le porte-moule supérieur (488, 489) le mouvement horizontal du segment (531 à 538) étant provoqué par le déplacement des pistons dans le cylindre associé par l'alimentation d'un fluide tel que de l'huile sous pression dans des conduits d'amenée et d'échappement d'huile forés dans le porte-moule supérieur (488, 489), le bras (490, 491) et l'arbre de commande.(358, 359).

52. Installation selon la revendication 50 ou 51, caractérisée en ce que chaque couvercle supérieur et inférieur (577, 578, 643, 644) comprend un bossage (585, 586, 653, 654) formant surface d'appui du ou des bossages correspondant des outils de presse (188, 71) respectifs de la presse principale et de la presse auxiliaire pour déplacer verticalement ces couvercles et comprimer le matériau contenu dans le moule.

53. Installation selon la revendication 50 et 51, caractérisée en ce que deux matériaux, tels que des mélanges préparés préalablement sont alimentés successivement dans les moules, un premier mélange pour former par exemple le corps et la surface de roulement des pneus et un second mélange pour former les flancs du pneu, le premier et le second mélange étant contenus respectivement dans le premier et le second compartiment d'alimentation de mélange du moyen de mélange de l'installation.

54. Installation selon la revendication 53, caractérisée en ce qu'elle comprend un réservoir mobile d'alimentation du premier mélange formé par un cylindre (689) fixé à l'extrémité inférieure de l'arbre fileté de la presse à vis supérieure de la presse principale et comprenant des orifices (690, 692 à 695), ce réservoir d'alimentation étant déplacé successivement depuis une position haute à une position basse d'alimentation du melange afin que le premièr melange entre par ce réservoir (689) dans les cylindres d'alimentation (601, 602, 603, 604) et les moules, et de nouveau vers sa position haute, par la presse à vis supérieure de la presse principale, et un second réservoir d'alimentation mobile du second mélange formé par un cylindre (704) fixé à l'extrémité supérieure de l'arbre fileté (69) de la presse à vis inférieure de la presse auxiliaire et comprenant des orifices (707, 708, 709, 710), ce second réservoir d'alimentation étant déplacé, après la phase d'alimentation du premier mélange, depuis une position basse à une position, haute, d'alimentation du second mélange afin que le second melange entre par ce réservoir (704) dans les cylindres d'alimentation (601, 602, 603, 604) et dans les moules, et enfin de nouveau vers sa position basse.

55. Installation selon l'une des revendications 50 à 54 caractérisée en ce qu'elle comprend dans chaque secteur de décharge et de démoulage un dispositif comprenant au moins un arbre vertical (732, 733) monté sur un support de manière pivotante et coulissant verticalement, cet arbre portant au moins une paire de bras (429, 734) pour simultanément décharger le produit fini du moule amené dans la place de décharge respective et charger dans ce moule une nouvelle carcasse.

**Patentansprüche**

1. Einrichtung zur Herstellung agglomerierter, gesinteter, vulkanisierter oder gepreßter Gegenstände aus Mineralien, Kunststoffen, Mischungen, Metallen oder Legierungen, insbesondere mit mindestens einem Mittel zum Bilden einer Presse (69) zum Pressen des in die Form (232) durch mindestens eine Fülleinrichtung (8) eingefüllten Materials und mindestens einem Mittel (92, 241, 367, 501) zur thermischen, chemischen, mechanischen oder ähnlichen Behandlung der gepreßten Produkte und mit mindestens einer Entnahmevorrichtung (207, 587) für die fertiggestellten Produkte, dadurch gekennzeichnet, daß die Fülleinrichtung (6) für das Material in einer festen Position auf dem Maschinengestell montiert ist, welches von einem Zentralzylinder (1) und Plattformen (2, 4, 5, 7) gebildet ist, die in regelmäßigen Abständen voneinander angeordnet sind, damit eine oder gleichzeitig mehrere Arbeitseinheiten gefüllt werden können, die auf dem Maschinengestell um die Fülleinrichtungen herum angeordnet sind, wobei jede Arbeitseinheit in Bezug zum Maschinengestell in feste Sektoren unterteilt ist, die jeweils ein Mittel zum Bilden einer Presse (69, 168), ein Mittel zur Behandlung (92) und ein Mittel zum Verschieben oder Entnehmen (207, 587) des Produktes aus der Form aufweist und jeweils dicht am Maschinengestell montiert sind, wobei die Mitte zum Bilden einer Presse, eine Hilfspresse (69) aufweisen, die unten auf den unteren Plattformen (2, 4) montiert sind und eine Hauptpresse (168) dem gegenüber oben auf den oberen Plattformen (5, 7) derart vorgesehen ist, daß ein Zwischenraum zwischen den beiden Pressen und oberhalb der anderen feststehenden Sektoren ein Karussell (223) mit der gleichen Anzahl beweglicher Sektoren läuft, welches die Formelemente (232, 395) oder Formen (531—538) transportiert oder die in einem feststehenden Sektor erzeugten Gegenstände (725, 726) von einer Arbeitseinheit zum nächsten feststehenden Sektor der Arbeitseinheit befördert.

2. Einrichtung nach Anspruch 1, dadurch gekennzeichnet, daß die Formen (232, 531—538) der zu produzierenden Gegenstände durch Formelemente gebildet sind, die auf einer Arbeitseinheit und durch die Werkzeuge (88, 82) einer Hauptpresse (168) und einer Hilfspresse gebildet sind, wobei das Öffnen und Schließen mit dem Beginn des Befüllens synchronisiert ist.

3. Einrichtung nach Anspruch 2, dadurch gekennzeichnet, daß die Verbindung zwischen dem Befüllungsmittel (6) und der Form (232, 531—538) durch das Zusammenwirken der die Presse bildenden Mittel und der Formelemente der Arbeitseinheit gebildet ist und im Augenblick der Befüllung abbricht und sich umgekehrt automatisch wieder herstellt, sobald der durch das Füllmaterial auf den Dosier- und Förderregler (19—29, 36) ausgeübte Druck sich dem Druck nähert, bei welchem das Material agglomeriert.

4. Einrichtung nach Anspruch 1, dadurch gekennzeichnet, daß das Maschinengestell einen Zentralsylinder (1) aufweist, der zwei Plattformen (4, 5) und einen zylindrischen Körper (6) trägt, welcher seinerseits eine dritte Plattform (7) trägt und Teil der Fülleinrichtung (6) ist und mindestens eine Verteilungsöffnung (9) für das Material vorgesehen ist, die in einem querverlaufenden Abschnitt in der äußeren Umfassung gebildet und angeordnet ist, wobei mindestens eine Verteilöffnung in dem Sektor einer Arbeitseinheit mündet, die ein Mittel zum Bilden einer Presse enthält.

5. Einrichtung nach Anspruch 4, dadurch gekennzeichnet, daß die Plattformen (4, 5, 7) integrale Teile der Einrichtung bilden und Abtriebsmittel für die Fülleinrichtung (6) und die Konditioniereinrichtungen des Karussells (223) sowie die Formwerkzeuge (232) aufnehmen und Verbindungswege zwischen diesen Werkzeugen und denen der Hilfspresse bilden und die Hauptpresse (168) und die gesamte Einrichtung aufnehmen, die sich mit ihrem Außenrand auf einer senkrechten Struktur (1) des Prägers abstützt.

6. Einrichtung gemäß Anspruch 5, dadurch gekennzeichnet, daß das Presswerkzeug (82) der Hilfspresse (69) Formelemente (232) aufweist, die dazu bestimmt sind mit den Formlementen des Karussells zusammenzuarbeiten.

7. Einrichtung nach Anspruch 6, dadurch gekennzeichnet, daß das Unterbrechen der Verbindung zwischen dem Befüllungsmittel (6) und der Form während der Kompressionsphase bei erhöhtem Druck durch das Presswerkzeug (188) der Hauptpresse (168) erfolgt.

8. Einrichtung nach Anspruch 6, dadurch gekennzeichnet, daß die Hilfspresse unter dem Karussell (223) angeordnet ist und einen Zylinder (73), einen Kolben (77) in dem Zylinder aufweist, welcher das bewegliche Presswerkzeug (82) trägt, wobei der Kolben durch eine Schraubenpresse betätigt wird, welche ein Zahnrad (57) aufweist, welches mit einem Antriebszahnrad (58) in Verbindung steht und eine Schraube (59) mit einem Gewindeende (69) an dem Kolben (77) in Verbindung steht, wobei sich das untere Ende des Gewindeteiles (69) auf dem festen Chassis der Hilfspresse abstützt.

9. Einrichtung nach Anspruch 8, dadurch gekennzeichnet, daß das Presswerkzeug (82) verschiebbar auf dem Kolben (77) angeordnet ist und auf seiner dem Kolben abgekehrten Seite, beispielsweise durch Federn elastisch gehalten ist.

10. Einrichtung nach einem der Ansprüche 8 oder 9, dadurch gekennzeichnet, daß die Hilfspresse (69) eine zweite Schraubenpresse aufweist, die zwischen dem Kolben (77) und dem Zahnrad (57) der ersten Schraubenpresse angeordnet ist, wobei diese zweite Presse einen Kolben (71) mit einstellbarer Form aufweist und wobei ein Zahnrad (64) mit einem Antriebszahnrad (65) in Verbindung steht und eine Schraube mit einem Gewindeende (72) am Kolben (71) befestigt ist.

11. Einrichtung nach Anspruch 7, dadurch gekennzeichnet, daß die Hauptpresse (168) eine hydraulische, pneumatische oder hydraulisch-pneumatische oder eine pneumatische Explosionspresse ist, deren Presswerkzeug Formelemente aufweist, die mit den Elementen des Karussells und den Formelementen an den Kolben (77) der Hilfspresse zusammenarbeitet, um eine Form zu bilden und am Unterrand oberhalb der Formelemente des Karussells eine Aufnahme (107) gebildet ist, in welche die Verteilungsöffnung (9) des Befüllungsmittels mündet, wobei diese Öffnung teilweise vom Presswerkzeug der Hauptpresse während der Druckphase bei erhöhtem Druck getrennt ist.

12. Einrichtung nach Anspruch 11, dadurch gekennzeichnet, daß die vorgenannte Hauptpresse einen äußeren Zylinder (95) aufweist, der eine äußere Umfassung der Presse bildet, wobei diese Umfassung an einer der Plattformen (7) der Einrichtung befestigt ist, wobei im Inneren eine Ölkolbenpumpe, ein Zentralzylinder, mehrere Zylinder (123a, b, c, d, e, f, g, h) die kronenförmig um den Zentralzylinder und um die Druckölversorgung mit der Kolbenpumpe angeordnet sind, wobei jeder Zylinder auf einen Kolben (156) der presse einwirkt, wobei der Antriebskolben das Presswerkzeug (188) trägt, welches der Form des herzustellenden Gegenstandes entspricht.

13. Einrichtung nach Anspruch 12, dadurch gekennzeichnet, daß die Ölpumpe einen Ölverteiler in die kronenförmig angeordneten Hydraulikzylinder (123) aufweist, wobei dieser Ölverteiler aus einem inneren Zylinder der Pumpe gebildet ist, welcher an seiner senkrechten Seitenwand (147) eine Verzahnung aufweist, die mit einem Antriebszahnrad (149) in Eingriff steht und der drehbare Boden (150) mit nur einer Öffnung zum aufeinanderfolgenden Befüllen jedes Hydraulikzylinders (123) ausgestattet ist.

14. Einrichtung nach einem der Ansprüche 12 oder 13, dadurch gekennzeichnet, daß jeder Kolben (144) der Ölpumpe, der Hydraulikzylinder (123) durch eine Schraubenpresse betätigt ist, die ein Zahnrad (152) aufweist, welches mit einem Antriebszahnrad (153) in Eingriff steht und ein Gewindeende (157) über eine Schraube (156) mit dem Kolben (154) der Ölpumpe in Verbindung steht.

15. Einrichtung nach Anspruch 13, dadurch gekennzeichnet, daß die Hauptpresse eine zweite Schraubenpresse aufweist, um den Kolben (168) des Zentralzylinders der Hauptpresse zu verschieben.

16. Einrichtung nach Anspruch 12, dadurch gekennzeichnet, daß die Hauptpresse mindestens einen Zylinder (102) aufweist, mit einer Explosionskammer (742), einem Kolben (180), mit Ein- und Auslaßventilen (736, 738), Mitteln zum Zünden und Befüllen des Zylinders mit Brennstoff und mit einer Druckluftquelle für jeden Zylinder (102), mit einem Ventil (146) für Frischluft im unteren Ende des Zentralzylinders der Hauptpresse, die mit dem Zylinder (102) durch eine Luftversorgungsleitung (187b) verbunden ist, wobei die Luft durch den Kolben (186) des Zentralzylinders komprimiert wird.

17. Einrichtung nach Anspruch 16, dadurch gekennzeichnet, daß der Ansatz (739) des Auslaßventils (738) des Zylinders (102) über den Antriebskolben (176) der Hauptpresse hinwegreicht und einen Anschlag (743) bildet, an seinem über dem Antriebskolben (176) hinwegreichenden Ende, um nach einem vorherbestimmten Weg des Antriebskolbens (176) das Einlaßventil zu öffnen.

18. Einrichtung nacheinem der Ansprüche 16 oder 17, dadurch gekennzeichnet, daß das Einlaßventil (736) des Zylinders (102) eine Längsöffnung aufweist, in welcher koaxial verschiebbar der Körper (740) des Auslaßventils (738) des Zylinders (102) geführt ist.

19. Einrichtung nach Anspruch 12, dadurch gekennzeichnet, daß die Befüllungsmittel für das Material im Sektor der Arbeitseinheiten Mittel für eine Presse enthalten, wobei ein äußerer Zylinder (6) vorgesehen ist, der eine äußere Umfassung für die Befüllungsmittel bildet und am Zylinder (1) der Befüllungseinrichtung befestigt ist und mit seinem oberen Ende im äußeren Zylinder (6) angeordnet ist und mindestens ein Fülltrichter oder Hals (53) und mindestens ein Mischer und mindestens eine Fülleinrichtung und mindestens eine Dosiereinrichtung vorgesehen sind, die jeweils mit einer Verteilungsöffnung im äußeren Zylinder (6) verbunden sind.

20. Einrichtung nach Anspruch 19, dadurch gekennzeichnet, daß der vorgenannte Mischer mit der Fülleinrichtung über einen doppelten Boden in Verbindung steht, welcher mit mindestens einer Öffnung (40, 46) versehen ist und einer der Böden (39) feststeht und der andere Boden (45) beispielsweise durch ein Zahnrad (52) in Rotation versetzt ist.

21. Einrichtung nach einem der Ansprüche 19 oder 20, dadurch gekennzeichnet, daß die vorgenannte Fülleinrichtung mit jeder Dosiereinrichtung über einen doppelten Boden in Verbindung steht, welcher mindestens mit einer Öffnung (17, 16a) versehen ist, wobei der Boden (18) fest steht während der andere beispielsweise durch ein Zahnrad (15) in Rotation versetzt ist.

22. Einrichtung nach einem der Ansprüche 19—21, dadurch gekennzeichnet, daß die Dosiereinrichtung eine Dosierkammer aufweist, deren Volumen variabel ist und durch einen Kolben (27) begrenzt ist, welcher auf elastischen Einrichtungen sitzt, in denen die Verteilöffnung (9), die Versorgungsöffnung (16a) und die Öffnung (21a) münden, welche mit der Dosierkammer und mit der Fülleinrichtung in Verbindung stehen, wenn der auf das zugeführte Material ausgeübte Druck einstellbar die Federkraft der elastischen Einrichtungen des Kolbens überschreitet.

23. Einrichtung nach Anspruch 22, dadurch gekennzeichnet, daß der Kolben (27) einen glockenartigen Abschnitt (29) aufweist, welcher eine Dosiereinrichtung bildet und in die Dosierkammer vorspringt und periodisch die Öffnung (21a) abschließt.

24. Einrichtung nach einem der Ansprüche 19—23, dadurch gekennzeichnet, daß die Fülleinrichtung eine Achse (32) aufweist, die über den größten Teil ihrer Länge eine Schnecke (30) trägt, welche die Mischung den Füllöffnungen (16, 17, 16a) im doppelten Boden zuführt, wobei das untere Ende der Achse (32) an den Füllöffnungen (21a) der Dosiereinrichtungen gelegen ist, die eine Schnecke (31) aufweist, deren Steigung der der Schnecke (30) entgegengesetzt ist.

25. Einrichtung nach einem der Ansprüche 19—24 oder 25, dadurch gekennzeichnet, daß die Misch-und Fülleinrichtung in mindestens zwei senkrechte Abteile unterteilt sind, die jeweils Schnecken (475, 476) aufweisen, die das Material zweier unterschiedlicher Mischungen in die Dosiereinrichtung fördern und drehbar mit einem beweglichen Zylinder (13) in Verbindung stehen, der durch ein Zahnrad (15) in Bewegung gesetzt ist.

26. Einrichtung nach Anspruch 1, dadurch gekennzeichnet, daß das Karussell von einer Zentralachse (226) angetrieben ist, die von einer der Plattformen (4) aus angetrieben wird und mindestens einen Stützrahmen (213) für die Form oder Formelemente aufweist, welcher mit der Zentralachse (226) befestigt ist.

27. Einrichtung nach Anspruch 26, dadurch gekennzeichnet, daß das Karussell Formelemente aufweist, deren Anzahl der Zahl der Sektoren der entsprechenden Arbeitseinheiten entspricht.

28. Einrichtung nach einem der Ansprüche 26 oder 27, dadurch gekennzeichnet, daß ein Zylinder (245) einen Gasbehälter bildet, der um das untere Ende der Antriebsachse des Karussells (226) angeordnet ist, wobei der Behälter in zwei Kammern, nämlich einer unteren und einer oberen aufgeteilt ist, wobei die obere Kammer eine erste Gasversorgungsleitung (248) aufweist, die für Heißgas, beispielsweise heiße Luft, ausgelegt ist und eine zweite Leitung (93) vorgesehen ist, die mit der oberen Kammer (247) in Verbindung steht und durch den Kolben (77) im Zylinder (73) der Hilfspresse gebildet ist und eine dritte Leitung (249) vorgesehen ist, die das Heißgas im Sektor einer Arbeitseinheit fördert, welches zur thermischen Behandlung der Gegenstände dient.

29. Einrichtung nach Anspruch 28, dadurch gekennzeichnet, daß die untere Kammer des Gasbehälters eine erste Verbindungsleitung (94) zur Kammer (251) aufweist, die durch den Kolben (77) im Zylinder (73) der Hilfspresse gebildet ist und eine zweite Versorgungsleitung (252) für Frischgas, beispielsweise Frischluft, vorgesehen ist und eine dritte Leitung (253) für Heißgas vorgesehen ist, wobei die dritte Leitung vorzugsweise an die Heißgasquelle (248) der oberen Kammer des Behälters angeschlossen ist.

30. Einrichtung nach einem der Ansprüche 1—25, dadurch gekennzeichnet, daß die Rotationsachse des Karussells die Symmetrieachse des Zylinders (1) der Einrichtung und der Fülleinrichtung ist und daß das Karussell eine Anzahl Formelemente aufweist, wobei die Anzahl vorzugsweise der Zahl der Sektoren der Arbeitseinheiten entspricht, die um den Zylinder (1) der Einrichtung herum angeordnet sind.

31. Einrichtung nach einem der Ansprüche 26—30, dadurch gekennzeichnet, daß das vorgenannte Karussell eine Kammer oder Trommel (200) aufweist, die kronenförmig ausgebildet ist und fest auf der Einrichtung um die Antriebsachse (223, 226) des Karussells herum befestigt ist, und der Tragrahmen für die Formelemente im Innern der Trommel (200) vorgesehen ist, und zwar jeweils vor den entsprechenden Arbeitseinheiten, wobei der Deckel und der Boden der Trommel (202, 205) geeignete Öffnungen bei den Arbeitseinheiten aufweist und eine Presse bildende Teile sowie Einrichtungen zum Entformen aufweist.

32. Einrichtung nach Anspruch 31, dadurch gekennzeichnet, daß die Tragrahmen der Formelemente aus einer Trommel (213) im Innern der festen Trommel (200) des Karussells gebildet sind und durch die Antriebsachse (223, 226) des Karussells in Drehung versetzt sind, wobei die Trommel (213) am oberen und unteren Ende Öffnungen aufweist, die den Formelementen jeweils gegenüberliegen.

33. Einrichtung nach Anspruch 32 zur Herstellung gesinterter Teile wie Bremseinrichtungen, dadurch gekennzeichnet, daß die Formelemente des Karussells aus einem Zylinder (222) ohne Boden gebildet sind, der sich mit seinem oberen Ende auf der beweglichen Trommel (213) des Karussells abstützt und einen Deckel (231) trägt, der eine Öffnung aufweist, deren Form der Formelemente der Presswerkzeuge der Hauptpresse entspricht und ein Formzylinder (232) im Innern des bodenlosen Zylinders (222) vorgesehen ist, wobei jedes Presswerkzeug der Hauptpresse und der Hilfspresse Formelemente aufweist, die mit dem Deckel (231) des Formzylinders (232) zusammenarbeiten und eine Form für die Bremseinrichtungen bilden.

34. Einrichtung nach Anspruch 33, dadurch gekennzeichnet, daß die Formelemente der Hilfspresse aus einer Vielzahl senkrechter Platten oder Gabeln (82) gebildet sind, die im Abstand voneinander angeordnet sind und zwischen sich einen Raum abgrenzen, dessen Form einem ganzen Block von Bremseinrichtungen entspricht, wobei diese senkrechten Gabeln im Formzylinder (232) angeordnet sind und durch den Kolben (77) der Hilfspresse gehalten sind, der durch Öffnungen einer Matrize geführt ist, welche in der Öffnung des Bodens (205) der festen Trommel (200) vorgesehen ist, wobei die von der Hauptpresse getragenen Formteile aus einer Platte gebildet sind, die eine Formwölbung aufweist, die der Öffnung des Deckels (231) der Formelemente des Karussells entspricht, um gepreßtes Material zu bilden und wobei eine Tragplatte (240) für die Bremseinrichtungsblöcke zwischen jeder senkrechten Platte (82) vorgesehen ist, wobei die Stärke den oberen Enden der senkrechten Gabeln (82) der unteren Oberfläche vom Werkzeug der Hauptpresse entspricht.

35. Einrichtung nach Anspruch 34, dadurch gekennzeichnet, daß ein U-Profilrahmen (237) im Innern des oberen Teiles des Formzylinders (232) vorgesehen ist, um eine Führungsfläche für die äußeren senkrechten Gabeln (82) zu bilden, wobei der Rahmen in dem Material sitzt, welches die Tragplatte (240) für den Bremseinrichtungsblock (239) bildet, um eine Greifeinrichtung für die Handhabung des gesamten Bremseinrichtungsblocks zu schaffen.

36. Einrichtung nach Anspruch 35, dadurch gekennzeichnet, daß eine Vorrichtung zum Bearbeiten und schnellen Weiterreichen einer Anordnung von Blocks (239) von Bremseinrichtungen vorgesehen ist, die untereinander durch das Trägerband (240) verbunden sind und durch den U-Profilrahmen (237) gestützt sind und vom Karussell an einer Arbeitseinheit entnommen werden, wobei diese Einrichtung einen Zylinder (256) aufweist, dessen oberer Teil in drei übereinanderliegenden Etagen (256a, 256b, 256c) eingeteilt ist, deren Höhe jeweils der Höhe eines Blocks (239) von Bremseinrichtungen entspricht, wobei eine Zentralachse (257), Achsen (259, 258, 301) trägt, die Werkzeugträger bilden für Werkzeuge zum Ausschleudern der Blocks (239) der Bremseinrichtungen, wobei eine Vorrichtung am oberen Teil des Zylinders (256) befestigt ist, welche vorzugsweise zwei Blockanordnungen (239) der Bremseinrichtungen versorgt, die durch die Tragbänder (240) bzw. die beiden einander gegenüberliegenden Öffnungen des Zylinders (256) in Höhe der dritten oberen Etage (256c) in Verbindung stehen und wobei eine Vorrichtung zum Entnehmen der Bremseinrichtungen und zum Weiterreichen am Zylinder (256) in Höhe der ersten unteren Etage (256a) vorgesehen ist, mit welcher gleichzeitig alle Bremseinrichtungen eines Blocks (239) entnommen werden können.

37. Einrichtung nach Anspruch 36, dadurch gekennzeichnet, daß die Fülleinrichtung für die Blocks der Bremseinrichtungen Führungswände (266, 267) aufweisen und eine Zahnstangenvorrichtung (278, 279, 280, 281, 282, 283) vorgesehen ist, um den äußeren Block jeder Blockanordnung der Bremseinrichtungen in Kontakt mit den Schleuderwerkzeugen zu bringen, die in der dritten oberen Etage (256c) des Zylinders (256) angeordnet und vom Werkzeugträger (301) gehalten sind.

38. Einrichtung nach einem der Ansprüche 36 oder 37, dadurch gekennzeichnet, daß ein Zylinder (290) im Innern des Zylinders (256) vorgesehen ist, der senkrecht verschiebbar und drehbar ist und ein Tragelement für die Blocks (239a, 239b), der durch die Tragplatten (240) getrennten Bremseinrichtungen bildet und diese Blocks aus Bremseinrichtungen nacheinander in die erste, zweite und dritte Etage des Zylinders (256) bringt.

39. Einrichtung nach Anspruch 38, dadurch gekennzeichnet, daß der Zylinder (290) in seinem oberen Abschnitt mindestens in Höhe etwa der Höhe eines Blocks (239) von Bremseinrichtungen abgeschnitten ist und zwei gegenüberliegende Zylindersegmente (291, 292) gebildet sind, die eine Stützfläche bilden und ein Abschnitt etwa in der Mitte dieser Segmente (295, 296) von geringerer Stärke ist, wobei die Unterfläche abrasiv ausgestattetist.

40. Einrichtung nach einem der Ansprüche 36—39, dadurch gekennzeichnet, daß die Achse des Werkzeugträgers (301) in der dritten oberen Etage (256c) des Zylinders (256) so ausgebildet ist, daß sie zur Hauptachse (257) verschiebbar ist und sich mit dieser Achse (257) über eine schraubenförmige Rampe (205) kuppeln läßt, um eine Verschiebung des Werkzeugträgers (301) nach oben mit festgelegtem Spiel zu ermöglichen.

41. Einrichtung nach Anspruch 39, dadurch gekennzeichnet, daß die am Werkzeugträger (301) vorgesehenen Schleuderwerkzeuge im wesentlichen Sägen oder Schneidwerkzeuge und Schleifwerkzeuge sind.

42. Einrichtung nach einem der Ansprüche 36—40, dadurch gekennzeichnet, daß die Schleuderwerkzeuge, die in der zweiten mittleren Etage (256b) des Zylinders (256) angeordnet sind im wesentlichen Schneid- und Bohrwerkzeuge sind, die am Werkzeugträger (258) sitzen, welcher mit der Hauptachse (257) in Verbindung steht und unabhängig in Rotation versetzt sind.

43. Einrichtung nach einem der Ansprüche 1—25 und 30, dadurch gekennzeichnet, daß das Karussell einen Zylinder (344) aufweist, welcher um die Fülleinrichtung drehbar angeordnet ist und zwischen zwei mittleren Plattformen (4, 5) des Maschinengestells angeordnet ist, wobei dieser Zylinder einen Boden (343) aufweist, der auf seinem Karussellabschnitt zwei Öffnungen enthält, die in ihren Abmessungen den Formelementen der Werkzeuge (71) der Hilfspresse entsprechen, wobei am Sektor des Karussells ein Deckel (361) vorgesehen ist, für eine Öffnung, deren Durchmesser dem Presswerkzeug (188) der Hauptpresse entspricht, wobei der Zylinder (344) durch eine Antriebseinrichtung wie ein Getriebe mit Zahnrädern (354, 355) in Rotation um die Fülleinrichtung gebracht ist.

44. Einrichtung nach Anspruch 43, dadurch gekennzeichnet, daß der Deckel (361) des Zylinders (344) in jedem Sektor des Karussells zwei Öffnungen besitzt, die außerhalb der Kammern der Hauptpresse angeordnet sind und die den Durchtritt des Kernes (360, 384) der Steuerachse (358, 359) erlauben, die mit den Formelementen des gleichen Sektors in Verbindung steht und das Verlassen der Formen aus dem Karussell und das Entformen der Produkte ermöglicht, und zwar im Sektor für das Entnehmen und Entformen einer Arbeitseinheit, was durch Drehen der Steuerachse (358, 359) erfolgt, die mit einer Antriebseinrichtung auf einer oder mehreren Plattformen des Maschinengestells in Verbindung steht.

45. Einrichtung nach Anspruch 44, dadurch gekennzeichnet, daß die Antriebseinrichtung der Steuerachse (358, 359) in jedem Sektor für das Entnehmen und Entformen in jeder Arbeitseinheit ein Zahnrad (341, 342) aufweist, welches mit einem Zahnrad (363) in Verbindung steht, welches auf jedem Kern (360) der Steuerachse (358, 359) befestigt ist, wenn das Karussell die zu entformende oder zu entladenden Gegenstände in einen Sektor zum Entladen und Entformen einer Arbeitseinheit fördert.

46. Einrichtung nach einem der Ansprüche 44 oder 45, dadurch gekennzeichnet, daß jeder Sektor des Karussells eine Leitungsanordnung enthält, beispielsweise für Heißluft, welche an eine Druckmittelquelle über Kanäle (364, 365) angeschlossen ist, die innerhalb der Steuerachse (358, 359) verlaufen, wobei diese Leitungen jeweils ein Mittel zur Bildung eines Ventils (366) enthalten, welches selbsttätig die Füllung der Formen gemäß der im jeweiligen Sektor des Karussells gewünschten Behandlung steuert.

47. Einrichtung nach einem der Ansprüche 43—46 insbesondere zur Herstellung von Rohren, beispielsweise aus Asbestzement mit Lanschen, dadurch gekennzeichnet, daß die Formelemente in jedem Sektor des Karussells aus senkrecht stehenden halbzylindrischen Formelementen (395, 396) gebildet sind, die in zwei Reihen angeordnet sind, so daß sie zusammen jeweils Formen für ein oder mehrere Rohre bilden, wobei jedes Formelement einer Reihe mit einem Manövrierarm verbunden ist, der an der Steuerachse (358, 359) befestigt ist, und ein Rohr oder Zylinder (446, 447) im Innern jeder Form vorgesehen ist, dessen Außendurchmesser dem Innendurchmesser der herzustellenden Rohre entspricht, wobei das Rohr oder der Zylinder (446, 447) auf dem Boden (343) des Zylinders (344) des Karussells durch bewegliche Ringe (403, 404) beweglich gehalten ist und wobei das Presswerkzeug (71) der Hilfspresse zwei Ausnehmungen (655, 656) enthält, deren Durchmesser dem Innendurchmesser des Zylinders (446, 447) entspricht, um Elemente zu bilden, die die Zylinder (446, 447) halten und zentrieren während des Formvorganges der herzustellenden Rohre und wobei das Presswerkezug der Hauptpresse Einrichtungen aufweist, die in den Flanschen der zu fertigenden Rohre Befestigungsöffnungen einbringt.

48. Einrichtung nach einem der Ansprüche 43—45 insbesondere zur Herstellung von Rohren aus Asbestzement mit Hilfe eines Schleuderverfahrens, dadurch gekennzeichnet, daß die inneren Zylinder (446, 447) aus Werkzeugträgern (407, 408) gebildet sind, die am Rand Schleuderwerkzeuge tragen, wobei die Werkzeugträger (407, 408) axiale Leitungen (409, 410, 411, 412) aufweisen, die mit den Hauptachsen (425, 426) des Presswerkzeuges (188) der Hauptpresse zusammenfallen, wobei die Haupt- und Versorgungsachsen (415, 416) des Werkzeugträgers (170) von der Hilfspresse in Rotation versetzt sind.

49. Einrichtung nach Anspruch 48, dadurch gekennzeichnet, daß die Antriebsachsen (415, 416) am Werkzeug der Hilfspresse angeordnet sind und Fernräder zum Antrieb aufweisen, wobei das Zahnrad (352) fest auf der Achse (353, 69) der inneren Schraubenpresse der Hilfspresse sitzt.

50. Einrichtung nach einem der Ansprüche 1—25 und 30—32 insbesondere zur Herstellung von Reifen mit oder ohne Karkasse, dadurch gekennzeichnet, daß jeder Sektor des Karussells mehrere übereinanderliegende Formen und mindestens eine senkrechte Säule aufweist, wobei jede Form eine zentrale Fülleitung (601, 602, 603, 604) aufweist, um welche herum sich ein zentraler Körper erstreckt, der durch mehrere horizontale oder benachbarte Segmente (531—538) gebildet ist, so daß ein Ring erzeugt ist, wobei diese Segmente obere und untere Wände mit abgeschrägten Kanten aufweisen, und Seitenwände mit ebenfalls abgeschrägten Kanten vorgesehen sind, wobei die Wände gegeneinander dichtend verschiebbar sind, wobei ein oberer beweglicher Deckel (577, 578) vorgesehen ist, dessen abgeschrägte Innenfläche der Oberkante der abgeschrägten Segmente (531—538) entspricht und wobei ein beweglicher unterer Deckel (643, 644) vorgesehen ist, dessen Form identisch der des oberen Deckels ist und wobei ein Kranz (657, 658) in Form eines Zylinders mit einer schraubenförmigen Rampe (659, 660) vorgesehen ist, die mit einer schraubenförmigen Rampe (641, 642) entsprechender Form auf der Außenseite des Füllzylinders (601, 602) zusammenarbeitet, wobei der zentrale Körper und der obere Deckel einer Form in Form eines Blocks angeordnet sind und einen oberen Formträger (488, 489) bilden, der mit einem Arm (490, 491) an der Steuerachse (358, 359) in Verbindung steht, um den Block im Karussell im Entlade- oder Entformsektor in Drehung zu versetzen wobei jeder untere Deckel einer Form und der, Füllzylinder (601, 602, 603, 604) in einer Scheibe (587—588) fest angeordnet sind und ein unterer Formträger gebildet ist, welcher durch einen Arm (589, 590) mit einem Zylinder (593, 594) in jedem Sektor des Karussells in Verbindung steht und außerhalb der Kammer der Hauptpresse angeordnet ist, so daß sich der untere Formträger aus dem Karussell heraus in den Entlade- oder Entformsektor einer Arbeitseinheit schwenken läßt.

51. Einrichtung nach Anspruch 50, dadurch gekennzeichnet, daß jedes Segment (531—538), welches den Zentralkörper einer Form bildet, mit der Kolbenstange eines entsprechenden Zylinders verbunden ist, der im oberen Formträger (488, 489) vorgesehen ist, wobei die horizontale Bewegung des Segmentes (531—538) durch die Verschiebung des Kolbens im Zylinder durch Einleiten von Drucköl in die Ölleitungen im oberen Formträger (488, 489) im Arm (491, 490) und in der Steuerachse (358, 359) erfolgt.

52. Einrichtung nach einem der Ansprüche 50 oder 51, dadurch gekennzeichnet, daß jeder obere und untere Deckel (577, 578, 643, 644) eine Ausnehmung (585, 586, 653, 654) aufweist, die eine Oberfläche bildet, die der oder den entsprechenden Ausnehmungen des Presswerkzeuges (188, 71) der Hauptpresse oder der Hilfspresse entspricht und sich die Deckel senkrecht verschieben lassen, um das Material in der Form zusammenzupressen.

53. Einrichtung nach einem der Ansprüche 50 und 51, dadurch gekennzeichnet, daß zwei Materialien wie z.B. vorbereitete Mischungen nacheinander in die Formen eingebracht werden, wobei die erste Mischung beispielsweise den Körper und die Lauffläche des Reifens bildet und die zweite Mischung für die Flanken des Reigens vorgesehen ist, wobei die erste und zweite Mischung jeweils in einem ersten und zweiten Mischbehälter mit Mischungseinrichtungen enthalten ist.

54. Einrichtung nach Anspruch 53, dadurch gekennzeichnet, daß ein beweglicher Behälter für die Mischung vorgesehen ist, welcher aus einem Zylinder (689) gebildet ist, welcher am unteren Ende einer Gewindestange der oberen Schraubenpresse der Hauptpresse befestigt ist, und Öffnungen (690, 692—695) aufweist, wobei dieser Behälter von einer hohen Position in eine niedrige Position gebracht wird, damit die erste Mischung aus dem Behälter (689) in die Zylinder (601, 602, 603, 604) der Formen gegeben wird und anschließend erneut in seine hohe Position gebracht wird, was mit der oberen Schraubenpresse der Hauptpresse erfolgt, wobei der zweite bewegliche Behälter der zweiten Mischung durch einen Zylinder (704) gebildet ist, der am oberen Ende der Gewindestange (69) der unteren Schraubenpresse der Hilfspresse befestigt ist und Öffnungen (707, 708, 709, 710) aufweist, wobei dieser zweite Behälter nach der Füllphase der ersten Mischung aus einer niedrigen Position in eine hohe Position gebracht wird damit die zweite Mischung aus dem zweiten Behälter (704) in die Füllzylinder (601, 602, 603, 604) in den Formen eingefüllt wird, woraufhin er wieder in die niedrige Position zurückläuft.

55. Einrichtung nach einem der Ansprüche 50—54, dadurch gekennzeichnet, daß in jedem Entlade- und Entformsektor eine Vorrichtung vorgesehen ist, die mindestens eine senkrechte Achse (732, 733) aufweist, die schwenkbar und senkrecht verschiebbar auf einem Träger vorgesehen ist, wobei diese Achse mindestens ein Paar Arme (429, 734) aufweist, die zugleich ein fertig gestelltes produkt an der Entladestelle entnimmt und zugleich eine neue Karkasse in die Form eingelegt.

**Claims**

1. A plant for the continuous and automated manufacturing of agglomerated, sintered, vulcanised or pressed articles from minerals, plastic materials, mixtures, metals or alloys, notably comprising at least one element acting as a press (69, 16) to press materials fed into a mould (232) by at least one feeding element (6), at least one element (22, 241, 367, 501) for the thermal, chemical, mechanical or similar treatment of pressed articles and at least one device (207, 587) to remove finished products, and characterised by the fact that the device (6) for feeding the materials is mounted in a fixed position on the frame of the plant. The frame is formed by a central cylinder (1) and platforms (2, 4, 5, 7), which are adjustable in order to feed one or more working units positioned on the frame around the feeding elements of the feeding device (6), whereby each working unit is divided into fixed sectors in relation to the plant frame, each comprising an element acting as a press (69, 168), a treatment element (92) and an element for moving or removing the product from the mould, which are all tightly fixed on the plant frame. The element acting as a press is made up of an auxiliary press (69) mounted from the bottom on the lower platforms (2, 4) and a main press (168) mounted from the top on the upper platforms (5, 7) so that a carousel (223) may revolve in the space between the two presses and above the other fixed sectors. The carousel is equipped with an equal number of mobile sectors for transporting mould elements (232, 395) or the mould (531 to 538), or even the formed articles (725, 726) from one fixed sector of a working unit to the next fixed sector of the working unit.

2. A plant as defined in claim 1, characterised by the fact that the moulds (232, 531 to 538) for the articles to be manufactured are formed by cooperation between the mould elements of a working unit and the tools (188, 82) of a main press (168) and an auxiliary press (69), whereby their assembly and closure are synchronised with the start of the feeding process.

3. A plant as defined in claim 2, characterised by the fact that the communication between the feeding device (6) and the moulds (232, 531 to 538) formed by cooperation between the elements acting as a press and the mould elements of the working unit, which is interrupted at the end of the feeding process, is automatically re-established in the opposite direction as soon as the pressure exerted by the fed material on the device for regulating the dosage and backpressure approximates the pressure at which this material agglomerates.

4. A plant as defined in claim 1, characterised by the fact that the plant frame comprises a central cylinder (1) which supports two platforms (4, 5) and a cylindrical body (6) which in turn supports a third platform (7) and, as a component of the feeding device (6), has at least one opening (9) to distribute the material formed and divided according to a cross section in the outer casing, with at least one of these distribution openings emerging into the sector of a working unit comprising an element acting as a press.

5. A plant as defined in claim 4, characterised by the platforms (4, 5, 7) being the integral part of the plant, whereby they carry the driving and feeding elements (6) and the conditioning systems of the carousels (223), accommodate the mould tools (232) and form the communicating doors between these tools and those of the auxiliary press, and support the main press (168) and the whole plant since they rest on the vertical substructure (1) of the supporting frame (3) with their outer circumference.

6. A plant as defined in claim 5, characterised by the press tool (82) of the auxiliary press (69) having mould elements (232) designed to cooperate with the mould elements of the carousel.

7. A plant as defined in claim 6, characterised by the fact that the communication between the material feeding element (6) and the mould is shut off during the high pressure compression phase by the press tool (188) of the main press (168).

8. A plant as defined in claim 6, characterised by the fact that the auxiliary press is fixed underneath the carousel (223) and comprises a cylinder (73) and a piston (77) contained in this cylinder and carrying a detachable press tool (82), whereby this piston is activated by a feed screw press consisting of a toothed wheel (57) in contact with a pinion drive (58), and a lead screw (59), connected to this piston, in contact with a threaded shaft (69), the bottom end of this shaft being flanged on the fixed frame of the auxiliary press.

9. A plant as defined in claim 8, characterised by the fact that the the press tool (82) is slidingly mounted on the piston (77), and is elastically held in a distant position, in relation to the piston, by springs, for example.

10. A plant as defined in either claim 8 or 9, characterised by the fact that the auxiliary press (69) comprises a second feed screw press situated between the piston (77) and the toothed wheel (57) of the first feed screw press, whereby this second feed screw press comprises an adjustable piston (71), a toothed wheel (64) in contact with a pinion drive (65), and a lead screw (66) of a thread shaft (72) connected to the piston (71).

11. A plant as defined in claim 7, characterised by the fact that the main press (168) is a hydraulic, pneumatic or hydraulic-pneumatic or combined pneumatic/explosion press, which has a press tool carrying mould elements designed to cooperate with the mould elements of the carousel and the mould elements carried by the piston (77) of the auxiliary press in order to form a mould, and a casing defining at its lower end, above the mould elements of the carousel, a container (107) into which at least one distribution opening (9) of the feeding element emerges, whereby the opening is partially isolated from the mould by the press tool of the main press during the high-pressure compression phase of the product.

12. A plant as defined in claim 11, characterised by the fact that the aforementioned main press has an outer cylinder (95) forming the outer casing of the press, whereby this casing is fixed on to one of the platforms of the plant frame, and on the inside of which an oil reciprocating pump, a central cylinder and several pressure cylinders (123a, b, c, d, e, f, g, h) are positioned, the pressure cylinders being arranged in a crown shape around the central cylinder and fed with oil under pressure by the reciprocating pump. Each pressure cylinder operates on a driving piston (176) of the press, whereby this driving piston carries the press tool (178), the form of which is adaptable according to the article to be manufactured.

13. A plant as defined in claim 12, characterised by the fact that the oil pump has an oil distributor in the hydraulic pressure cylinders (123), which are arranged in a crown shape, whereby this oil distributor consists of a cylinder inside the pump which has on its vertical wall (147) a toothing in contact with a pinion drive (149) and a rotating base (150) which is provided with a single opening for the consecutive feeding of the hydraulic pressure cylinders.

14. A plant as defined in claim 12 or 13, characterised by the fact that the piston (144) of the oil feeding pump to the hydraulic pressure cylinders (123) is activated by a feed screw press which consists of a toothed wheel (152) in contact with a pinion drive (153) and a screw (156) in contact with a thread shaft (157) connected to the piston (144) of the oil pump.

15. A plant as defined in claim 13, characterised by the fact that the main press comprises a second feed screw press for displacing the piston (168) of the central cylinder of the main press.

16. A plant as defined in claim 12, characterised by the fact that the main press has at least one cylinder (102), comprising an explosion chamber (742), a piston (180), inlet and outlet valves (736, 738), the ignition and fuel feeding elements of the cylinder, and a device to feed compressed air to each of the cylinders (102) which is formed by a fresh air inlet valve (746) situated at the bottom end of the central cylinder of the main press and lined to the cylinder by an air feeding line (187b), whereby the air is compressed by the piston (168) of the central cylinder.

17. A plant as defined in claim 16, characterised by the fact that the stem (739) of the outlet valve (738) of the cylinder (102) penetrates the driving piston (176) of the main press and comprises an element which forms at a part protruding above the driving piston (176) a stop motion device (743) which causes the outlet valve to open after a predetermined stroke of the driving piston (176).

18. A plant as defined in claim 16 or 17, characterised by the fact that the inlet valve (736) of the cylinder (102) has a longitudinal opening into which the body (740) of the outlet valve (738) of the cylinder (102) is coaxially mounted in a sliding manner.

19. A plant as defined in claim 12, characterised by the fact that the element for feeding the materials into the sector of a working unit comprising an element acting as a press, has an outer cylinder (6) forming the outer casing of the feeding element, fixed on to the cylinder (1) of the feeding element frame, and, in order, from the upper section, which is housed in the outer cylinder (6), at least one feeding funnel (53) or channel for the materials, at least one mixer, at least one mixture feeder and at least one device for controlling dosage and backpressure of the materials, linked to each distribution opening (9) formed in the outer cylinder (6).

20. A plant as defined in claim 19, characterised by the fact that the aforementioned mixer is connected to the mixture feeder by a double base provide with at least one opening (40, 46), whereby one of the bases (39) is fixed and the other (45) is set in rotation, for example, by a toothed wheel.

21. A plant as defined in claim 19 or 20, characterised by the fact that the aforementioned mixture feeder is connected to each device for controlling the dosage and backpressure by a double base provided with at least one opening (17, 16a), whereby one of the bases (18) is fixed whereas the other (16) is set in rotation, for example, by a toothed wheel (15).

22. A plant as defined in claims 19 to 21, characterised by the fact that the device for controlling the dosage and backpressure comprises a variable volume dosage chamber which is delimited by a piston (27) supported by elastic elements, into which the distribution opening (9) emerges, the feeding opening (16a), and also a backpressure opening (21a), thereby connecting the dosage chamber with a mixture feeder when the pressure applied to the material fed into the mould exceeds the power of the adjustable spring of the elastic elements carrying the piston.

23. A plant as defined in claim 22, characterised by the fact that the piston (27) has a skirt (29) forming a back which protrudes into the dosage chamber, thereby covering periodically the backpressure opening (21a).

24. A plant as defined in one of the claims 19 to 23, characterised by the fact that the mixture feeder has a shaft (32) on the larger part of which an endless screw (30) is fixed in order to transport the mixture to the feeding openings (16, 17, 16a) of its double base. The lower section of the shaft (32), situated facing the backpressure openings (21a) of the devices for controlling dosage and backpressure, has an endless screw (31), the lead of which is opposite to that of the aforementioned endless screw (30) designed for transporting the mixture.

25. A plant as defined in one of the claims 19 to 24 or 25, characterised by the fact that the mixer and the mixture feeder are divided into at least two vertical compartments, each comprising an endless screw (475, 476) for transporting the material in order to feed two different mixtures into the respective devices for controlling dosage and backpressure, which are connected in a fixed manner and which rotate with a free cylinder (13) which is rotated by a toothed wheel.

26. A plant as defined in claim 1, characterised by the fact that the carousel is driven by a central shaft (226) which is held during its rotation by one (4) of the platforms of the plant and comprises at least one supporting frame (213) for a mould or mould elements, firmly attached to the central shaft (226).

27. A plant as defined in claim 26, characterised by the fact that the carousel comprises a number of mould elements equal to the number of corresponding sectors of the working unit.

28. A plant as defined in claim 26 or 27, characterised by the fact that a cylinder (245), acting as a gas tank, divided into a lower and an upper chamber, is fitted around the lower section of the drive shaft of the carousel (226). The upper chamber has a first pipe (248) for the feeding of hot gas, such as hot air for example, a second pipe (93) forming a connection with the upper chamber (247) defined by the piston (77) in the cylinder (73) of the auxiliary press, and a third pipe (249), connecting the hot gas pipes in the sector of the working unit acting as the article heat treatment element.

29. A plant as defined in claim 28, characterised by the fact that the lower chamber of the gas tank has a first pipe (94) forming a connection with the lower chamber (251) defined by the piston (77) in the cylinder (73) of the auxiliary press, a second pipe (252) for the feeding of cool gas, such as cool air for example, and a third pipe (253) for the backpressure of hot gas. This third pipe is advantageously connected to the hot gas feeding pipe (248) of the upper chamber of the tank.

30. A plant as defined in claims 1 to 25, characterised by the fact that the axis of rotation of the carousel is the axis of symmetry of the cylinder (1) of the plant frame and of the material feeding element, whereby the carousel preferably has the same number of mould elements as there ae sectors in all the working units assembled around the cylinder (1) of the plant frame.

31. A plant as defined in claims 26 to 30, characterised by the fact that the aforementioned carousel has a vessel or drum (200) in the shape of a crown fixed to the plant frame around the drive shaft (223, 226) of the carousel, whereby the mould element support frames are moved inside the drum (200) from one sector of the corresponding working unit to another, and the cover and the base of the drum (202, 205) have suitable openings in the sectors of the working unit, each having an element acting as a press and an unloading or removal device.

32. A plant as defined in claim 31, characterised by the fact that the mould element supporting frames comprise a drum (213) assembled inside the fixed drum (200) of the carousel and set in rotation by the drive shaft (223, 226) of the carousel, whereby the upper and lower sections of this drum (213) have opposite openings in which the mould elements are provided.

33. A plant as defined in claim 32, used notably for the manufacture of sintered articles, such as brake linings, characterised by the fact that the mould elements of the carousel are formed by a bottomless cylinder (222), the upper flanged part of which is held by the movable drum (213) of the carousel, which carries a cover (231) provided with an opening equal to the form of the mould elements which are held by the press tool of the main press and with a shaping cylinder (232) positioned inside the bottomless cylinder (222), whereby each press tool of the main and auxiliary press respectively has mould elements which cooperate with the cover (231) and the shaping cylinder (232) in order to form the mould for the brake linings.

34. A plant as defined in claim 33, characterised by the fact that the mould elements carried by the auxiliary press are formed by several vertical plates or forks (82) positioned at a distance from each other to create a space between them, the form of which corresponds to that of a brake lining block, and whereby these forks are pushed through openings into the shaping cylinder (232) by the upstroke of the piston (77) of the auxiliary press. The said openings connected with a female tool provided in the opening in the base (205) of the fixed drum (200). The mould elements carried by the main press are formed by a plate with a boss, the form of which is equal to that of the opening in the cover (231) of the mould elements of the carousel, so that the pressed material thereby forms a supporting plate (240) for the brake lining blocks defined between each fork (82), the thickness of which corresponds to the final distance between the upper ends of the forks (82) and the inside surface of the boss carried by the tool of the main press.

35. A plant as defined in claim 34, characterised by the fact that a U-shaped frame (237) is provided inside the upper section of the shaping cylinder (232) in order to form a guideway for the outer forks (82), whereby this frame is held by the pressed material which forms the supporting plate (240) for the brake lining blocks (239) in order to create a gripping device for the handling of all the brake lining blocks.

36. A plant as defined in claim 35, characterised by the fact that it comprises a device for the high-speed machining and preparation of at least one set of brake lining blocks (239), interconnected by their supporting tape (240), which is supported by the U-shaped frame (237) and unloaded from the carousel of a working unit. This device comprises a cylinder (256), the upper part of which is divided into three levels (256a, 256b, 256c) situated above each other, the height of each level corresponding approximately to the height of a brake lining block (239), a central shaft (257) supporting further shafts (258, 259, 301) forming tool carriers for the tools for the centrifugal machining of the brake lining blocks (239), a device fitted to the upper section of the cylinder (256) advantageously for taking two sets of brake lining blocks (239) and their supporting tape respectively into two opposite openings of the cylinder (256) at the height of the third upper level (256c), and an unloading device for machined and prepared brake linings which is mounted on the cylinder (256) at the height of the first lower level (256a) for the simultaneous unloading of all the brake linings produced by the machining of brake lining block (239).

37. A plant as defined in claim 36, characterised by the fact that the device for feeding the brake lining block sets comprises guide walls (266, 267) and a rack-and-pinion system (278, 279, 280, 281, 282, 283) in order to bring the outer block of each set of brake lining blocks into contact with the centrifugal machining tools which are mounted in the upper third level (256c) of the cylinder (256) and carried by the tool-carrier shaft (301).

38. A plant as defined in claim 36 or 37, characterised by the fact that a cylinder (290) is provided to slide vertically and in rotation inside the cylinder (256) in order to form a supporting element for the brake lining blocks (239a, 239b) separated from the supporting plate (240), and to bring these brake lining blocks into the first, second and third levels of the cylinder (256).

39. A plant as defined in claim 38, characterised by the fact that the cylinder (290) is cut out in the upper section thereof at a height which is at least roughly equal to the height of a brake lining block (239) in order to define two opposing cylinder segments (291, 292) forming a supporting area, whereby a roughly central part of these segments (295, 296) has a smaller thickness, and is provided with an abrasive lining on its inner surface.

40. A plant as defined in one of the claims 36 to 39, characterised by the fact that the tool-carrier shaft (301) provided in the third upper level (256c) of the cylinder (256) is slidingly fitted to the main shaft (257) and connected with this shaft (257) by a helicoidal ramp (305) which causs the tool-carrier shaft (301) to move upwards, as predetermined.

41. A plant as defined in claim 39, characterised by the fact that the centrifugal tools held by the tool-carrier shaft (301) are essentially centrifugal saws or cutting tools and abrasive grinding tools.

42. A plant as defined in one of the claims 36 to 40, characterised by the fact that the centrifugal tools provided in the second middle level (256b) of the cylinder (256) are essentially made up of cutting and drilling tools, and are held by the tool-carrier shaft (258) which is fitted to the main shaft (257) and is set in rotation in an independent manner.

43. A plant as defined in claims 1 to 25 and 30, characterised by the fact that the carousel has a cylinder (344) fitted in a rotating manner around the feeding element and held between two central platforms (4, 5) of the plant frame, whereby this cylinder has a base (343) with two openings for each sector of the carousel, which are set up, according to the dimensions of the mould elements carried by the tool (71) of the auxiliary press, and a cover (361) which is provided with one opening for each sector of the carousel, the diameter of this opening corresponding to the diameter of the press tool (188) of the main press. The cylinder (344) is set in rotation around the feeding element by a driving device such as a toothed wheel gearing system (354, 355).

44. A plant as defined in claim 43, characterised by the fact that the cover (361) of the cylinder (344) comprises two openings in each sector of the carousel, these openings being positioned outside the space required by the main press with respect to the feeding element to allow the passage of a core (360, 384) of a drive shaft (358, 359), connected respectively with a part of the mould elements in the same sector, whereby the discharge of the moulds from the carousel and the removal of the products from the moulds in the unloading and removal sector of a working unit may be performed by setting the drive shafts (358, 359) in rotation by a driving system which is fixed to one or more platforms of the plant frame.

45. A plant as defined in claim 44, characterised by the fact that the driving system for the drive shafts (358, 359) comprises, in each unloading and removal sector of each working unit, a toothed wheel (341, 342) which comes into contact with a toothed wheel (363), fixed to each core (360) of the drive shafts (358, 359), when the carousel brings the articles to be removed from the moulds into an unloading and removal sector of a working unit.

46. A plant as defined in claim 44 or 45, characterised by the fact that each sector of the carousel has a channelling system for a medium, such as hot air, connected to a suitable medium source by channels (363, 365) bored into the respective drive shafts (358, 359), whereby these channels each have an element acting as a valve (366) for the automatic regulation of the feeding of the moulds with this medium, according to the treatment desired in each sector of the carousel.

47. A plant as defined in claims 43 to 46, used particularly for the manufacture of flanged tubes, made for instance of asbestos cement, characterised by the fact that the mould elements in each sector of the carousel are formed by vertical, semi-cylindrical mould elements (395, 396) arranged in two rows to form, in a cooperative manner, the moulds for one or more tubes, whereby each mould element in a same row is connected to a manoeuvre arm which is firmly attached to the drive shaft (358, 359), and by a tube or cylinder (446, 447) provided on the inside of each mould and having outer diameter which adapted to the inner diameter of the tube to be manufactured, whereby this tube or cylinder (446, 447) is held in a removable way by detachable rings (403, 404) on the base (343) of the cylinder (344) of the carousel, and whereby the press tool (71) of the auxiliary press has two bosses (655, 656), the diameter of which is adapted to the inner diameter of the cylinders (446, 447) in order to form elements for retaining and centring the cylinders (446, 447) during the moulding phase in the moulding phase of the tubes to be manufactured, whereby the tool of the main press has devices to make mounting holes in the flanges of the tubes to be manufactured.

48. A plant as defined in claim 43, 45, used particularly for the manufacture of asbestos cement tubes by a centrifugal process, characterised by the fact that the inner cylinders (446, 447) are formed by tool-carrier shaft (407, 408) which are provided with centrifugal tools around their circumference, whereby each tool-carrier shaft has axial boring holes (409, 410, 411, 412) which cooperates respectively with retention axes (425, 426) formed on the press tool (188) of the main press, and by axes for retention and rotation (415, 416) which are carried by the press tool (71) of the auxiliary press.

49. A plant as defined in claim 48, characterised by the fact that the driving shafts (415, 416) which are mounted on the tool of the auxiliary press have toothed wheels which are set in rotation by a toothed wheel (352) which is firmly attached to the axis (69, 353) of the lower screw press of the auxiliary press.

50. A plant as defined in claims 1 to 25 and 30 to 32, and used particularly for the manufacture of tyres, with or without carcasses, by a moulding process, characterised by the fact that each sector of the carousel has several mould which are stacked to form at least one vertical column, whereby has a central feeding pipe (601, 602, 603, 604) around which a central body is arranged which is formed by several horizontal or adjacent segments (531 to 538) defining a ring, whereby these segments have upper and lower bevelled walls, as well as bevelled side walls, in order to slide with regard to each other in a roughly sealed manner, an upper movable cover (577, 578) the lower surface of which is bevelled and the shape of which is adapted to the bevelled upper surface of the segments (531 to 538), a lower movable cover (643, 644) which is identical in form to the upper cover, and a rim (657, 658) in the form of a cylinder, comprising a helicoidal ramp (659, 660) which cooperates with an equal helicoidal ramp (641, 642), formed on the outer wall of the corresponding feeding cylinder (601, 602), whereby each central body and upper movable cover of a mould are assembled in a block which forms an upper mould carrier (488, 489) firmly connected to the drive shaft (358, 359) by an arm (490, 491) which causes the block to rotate out of the carousel and into the unloading or removal sector, whereas each lower cover of a mould and the corresponding feeding cylinder (601, 602, 603, 604) are assembled in a plate (587, 588) which forms a lower mould carrier which is connected by an arm to a cylinder (593, 594) of each sector of the carousel outside the space required by the main press in order to make the lower mould carrier swing out of the carousel and into the unloading or removal sector of a working unit.

51. A plant as defined in claim 50, characterised by the fact that each segment (531 to 538) forming the central body of a mould is connected to a piston rod which is mounted in a corresponding cylinder formed in the upper mould carrier (488, 489), whereby the horizontal movement of the segment (531 to 538) is caused by the movement of the pistons in the allocated cylinder by feeding a medium, such as oil, under pressure in to the oil feeding and discharge pipes which are bored into the upper mould carrier (488, 489), the arm (490, 491) and the driving shaft (358, 359).

52. A plant as defined in claim 50 or 51, characterised by the fact that each upper and lower cover (577, 578, 643, 644) has a boss (585, 586, 653, 654) which forms the supporting area for the corresponding boss(es) of the press tools (188, 71) of the main press and the auxiliary press respectively for the vertical movement of these covers and for compressing the material contained in the mould.

53. A plant as defined in claim 50 or 51, characterised by the fact that two materials, such as previously prepared mixtures, are fed successively into the moulds, whereby a first mixture may form, for instance, the body and the thread of the tyre, and a second mixture may form the walls of the tyre, and whereby the first and the second mixtures are contained respectively in the first and second mixture feeding compartments of the mixture device of the plant.

54. A plant as defined in claim 53, characterised by the fact that it comprises a movable feeding tank for the first mixture which is formed by a cylinder (689) fixed at the lower end of the threaded shaft of the upper screw press of the main press and provided with openings (690, 692 to 695), whereby this feeding tank is successively moved from an upper to a lower mixture feeding position so that the first mixture may pass from this tank (689) into the feeding cylinders (601, 602, 603, 604) and the moulds, and then back to its upper position, by the upper screw press of the main press. The plant also comprises a second movable feeding tank for the second mixture which is formed by a cylinder (704) fixed to the upper end of the threaded shaft (69) of the lower screw press of the auxiliary press and provided with openings (707, 708, 709, 710), whereby this second feeding tank is moved, after the feeding phase of the first mixture, from a lower to an upper second mixture feeding position so that the second mixture may pass from this tank (704) into the feeding cylinders (601, 602, 603, 604) and into the moulds, and then back to its lower position.

55. A plant as defined in claims 50 to 54, characterised by the fact that it has a device in each unloading and removal sector, whereby this device has at least one vertical shaft (732, 733) which is mounted in a pivoting and vertically sliding manner, and whereby this shaft carries at least one pair of arms (429, 734) which simultaneously removes the end product from the mould, which has been brought into the respective removal area, and to load a new carcass into the mould.

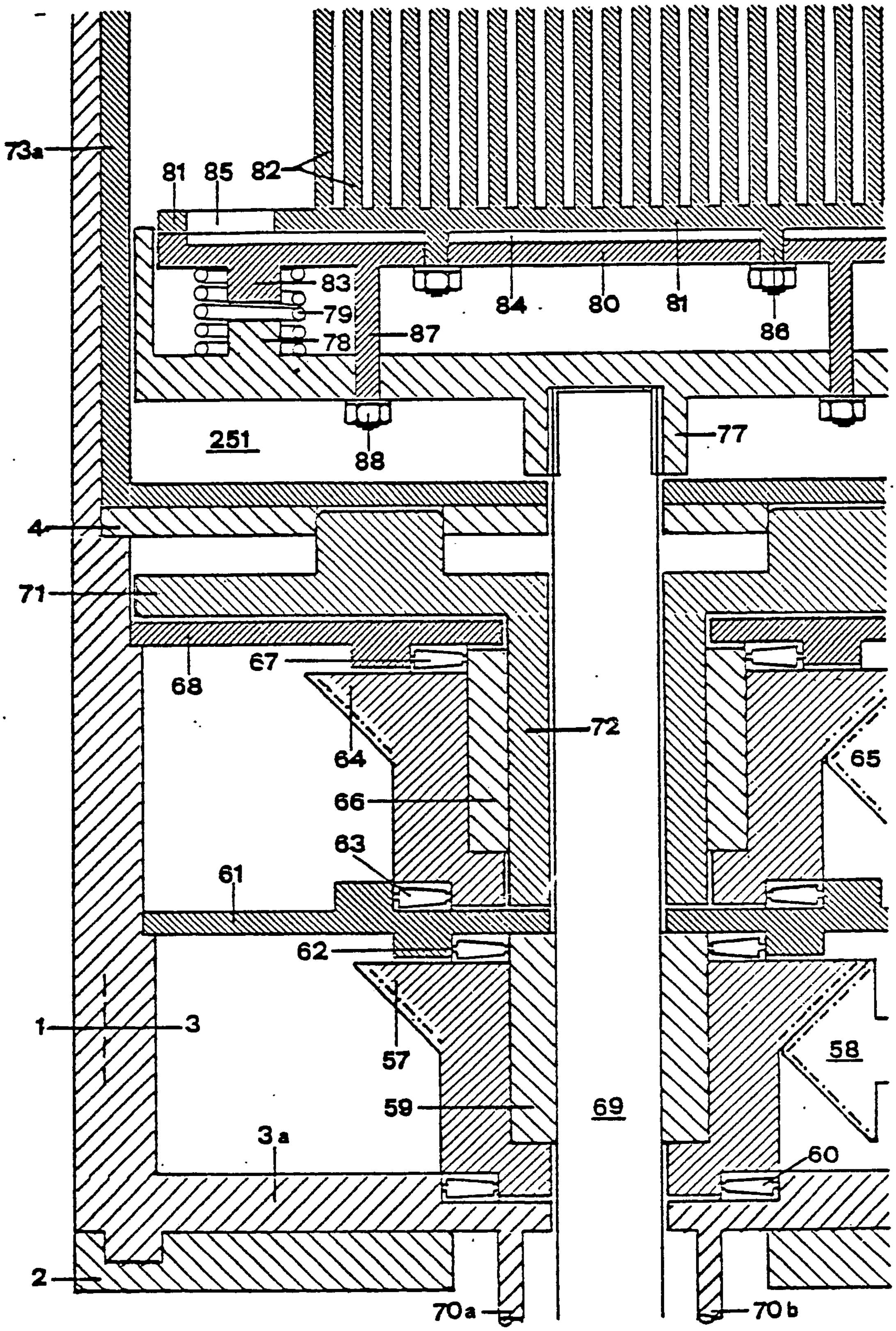

73a
81
85
82
83
79
78
87
84
80
81
86
251
88
77
4
71
67
68
72
64
65
66
63
61
62
1
3
57
58
59
69
3a
60
2
70a
70b


FIG.1A

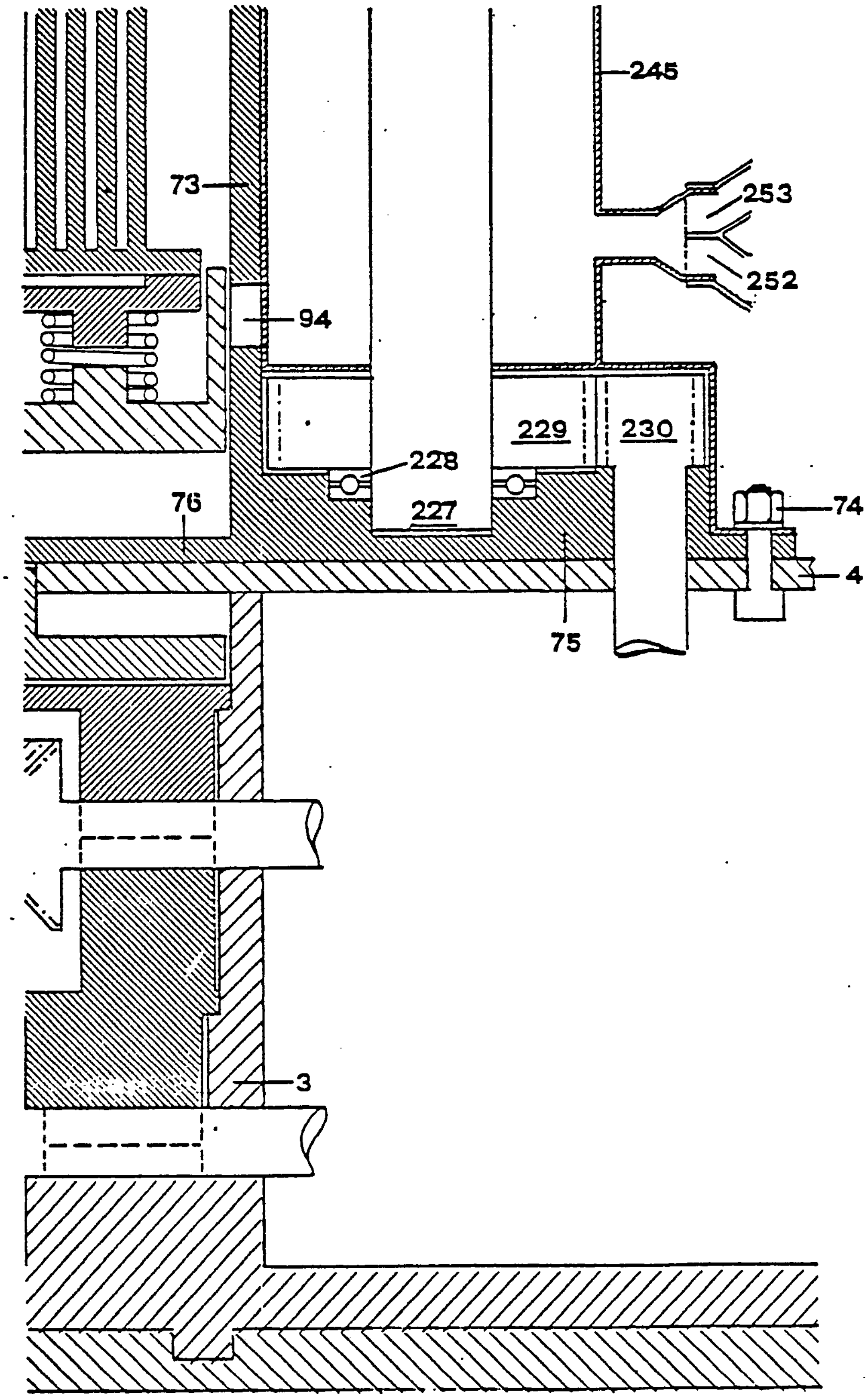


FIG. 1B

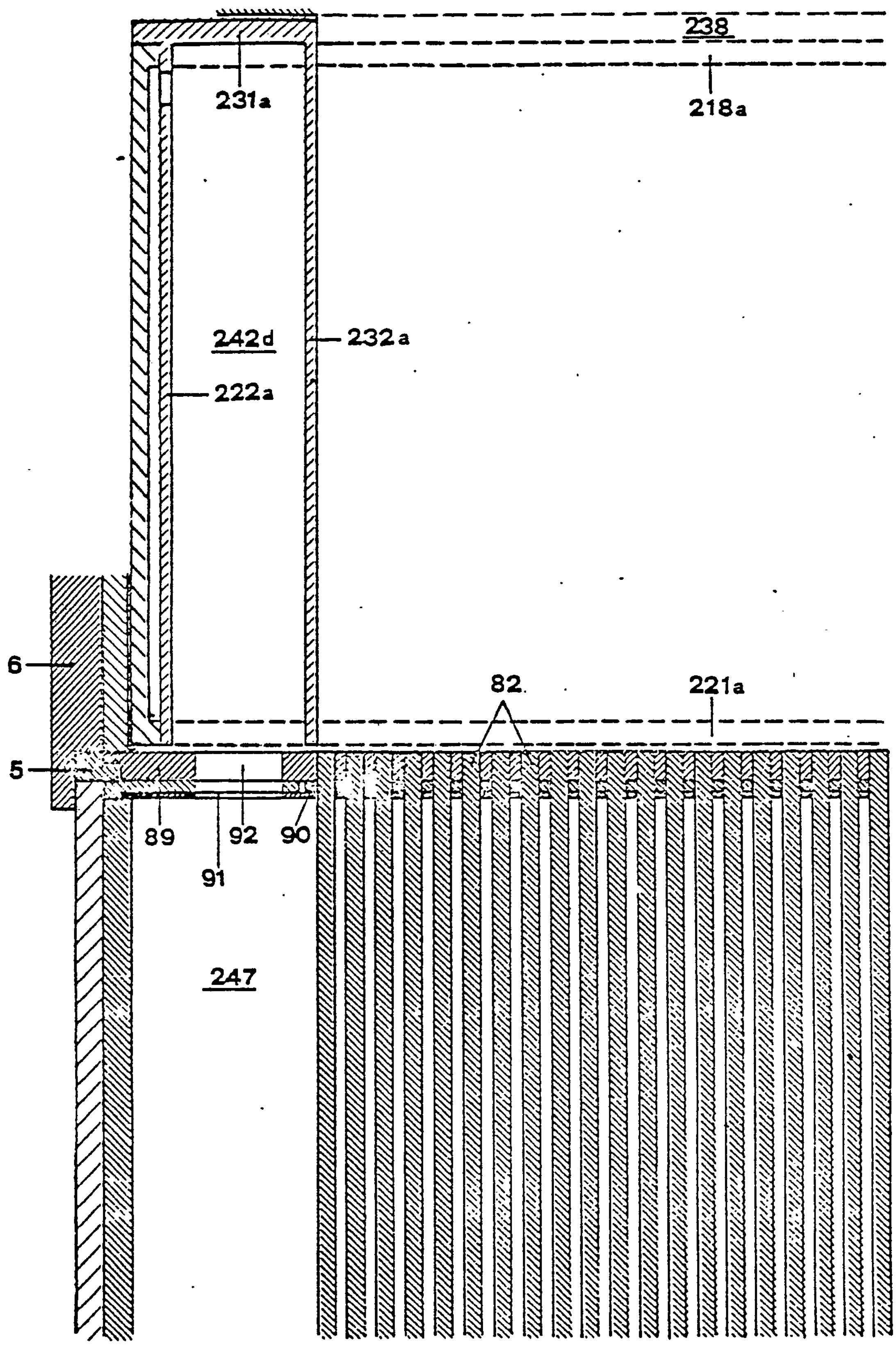


FIG. 1C

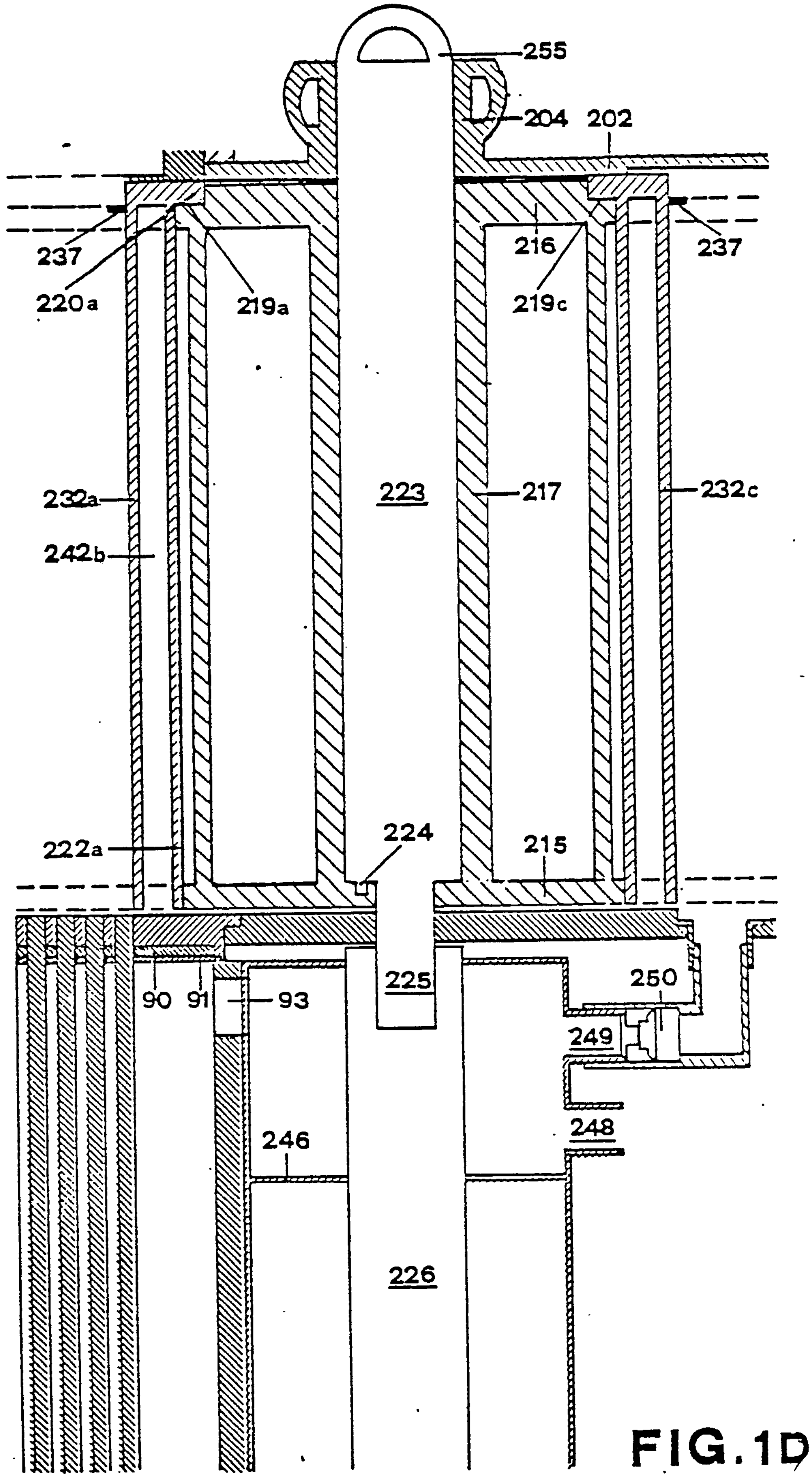
255
204
202
237
237
216
220a
219a
219c
223
217
232a
232c
242b
224
215
222a
225
250
90
91
93
249
248
246
226

FIG.1D

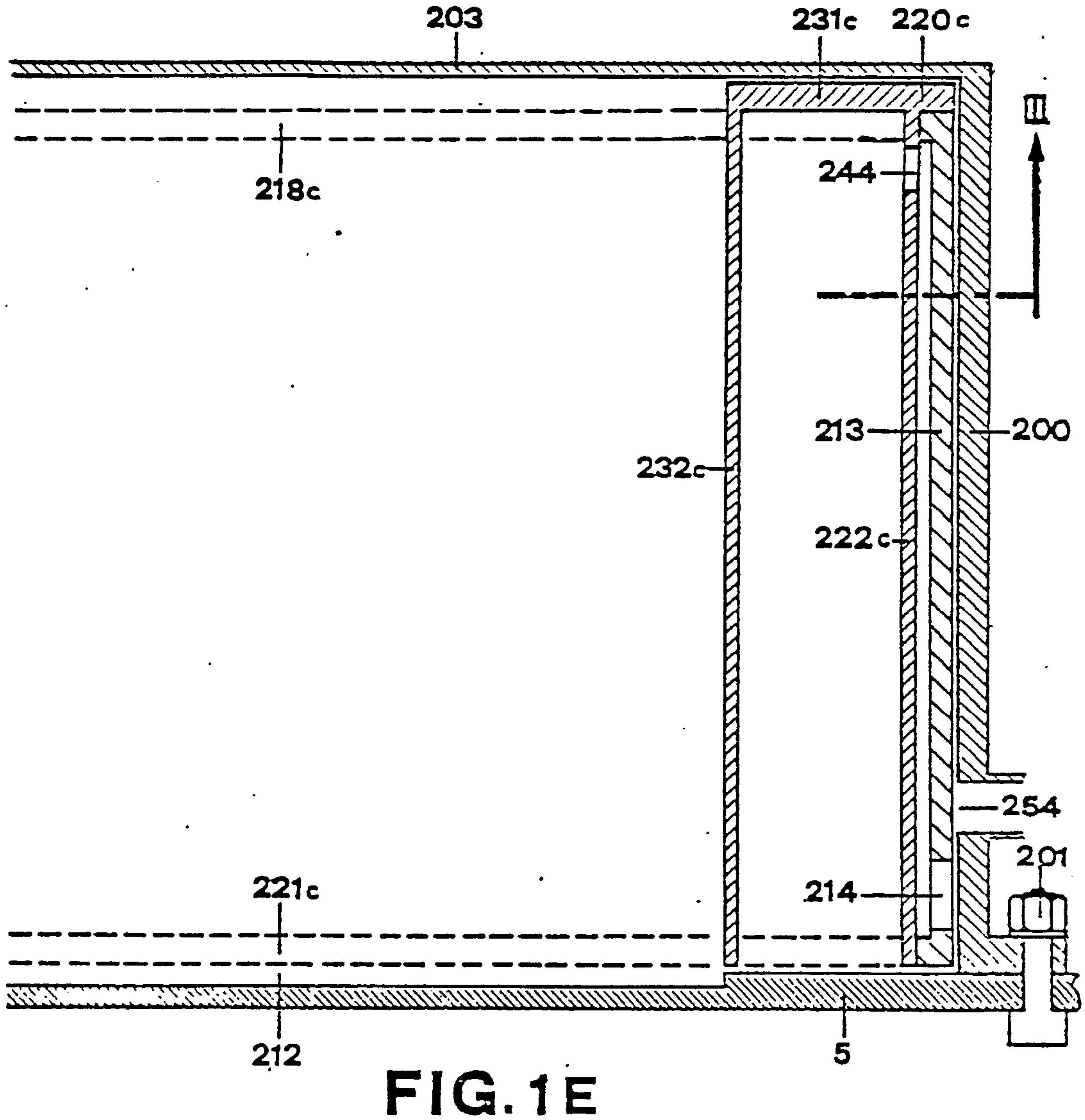
203
231c
220c
III
218c
244
213
200
232c
222c
254
201
221c
214
212
5

FIG. 1E

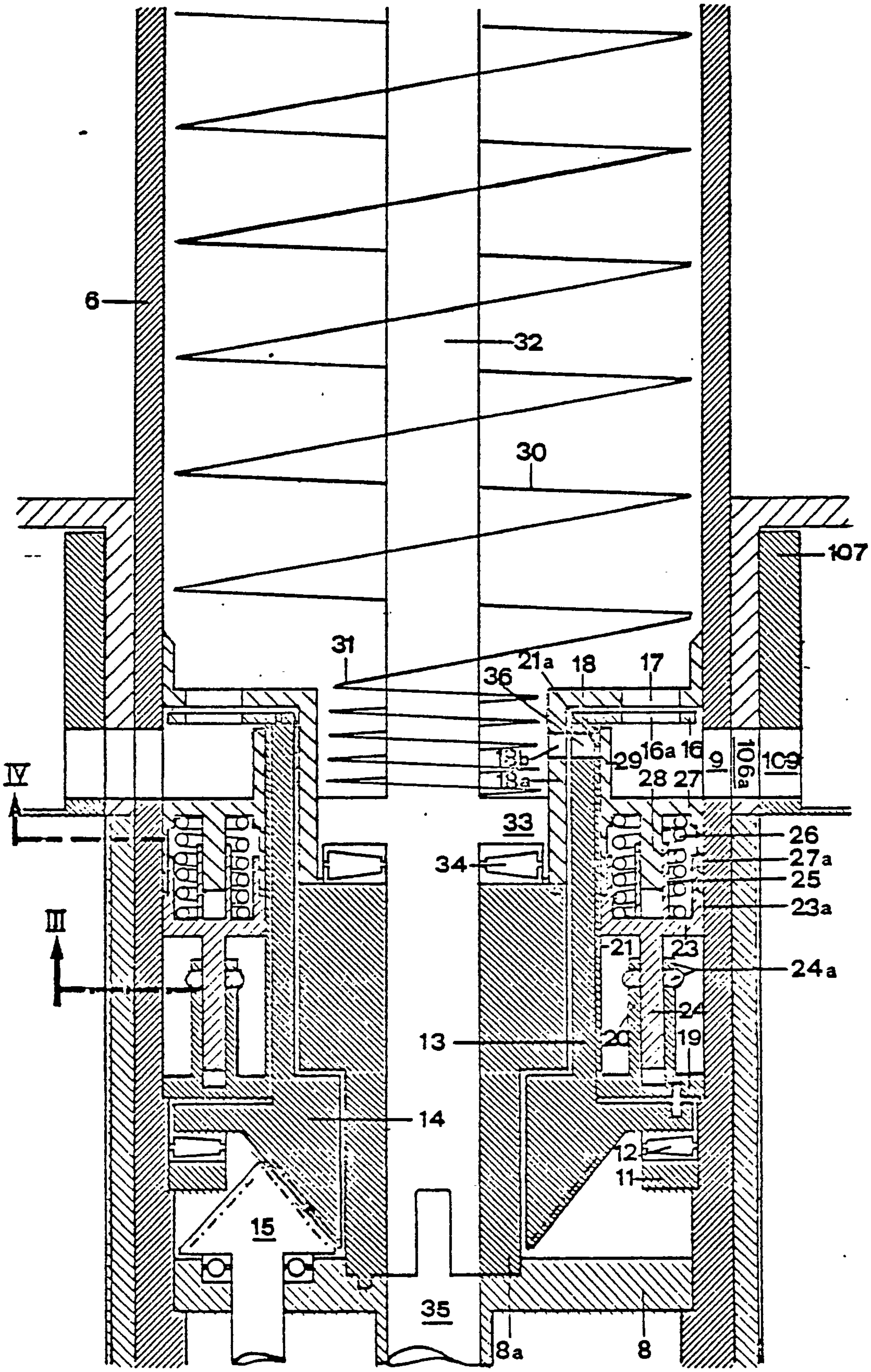
6
32
30
107
31
21a
18
17
36
16a
16
9
106a
109
18b
29
18a
28
27
IV
33
26
27a
34
25
23a
III
21
23
24a
24
13
20
19
14
12
11
15
35
8a
8

FIG.1F

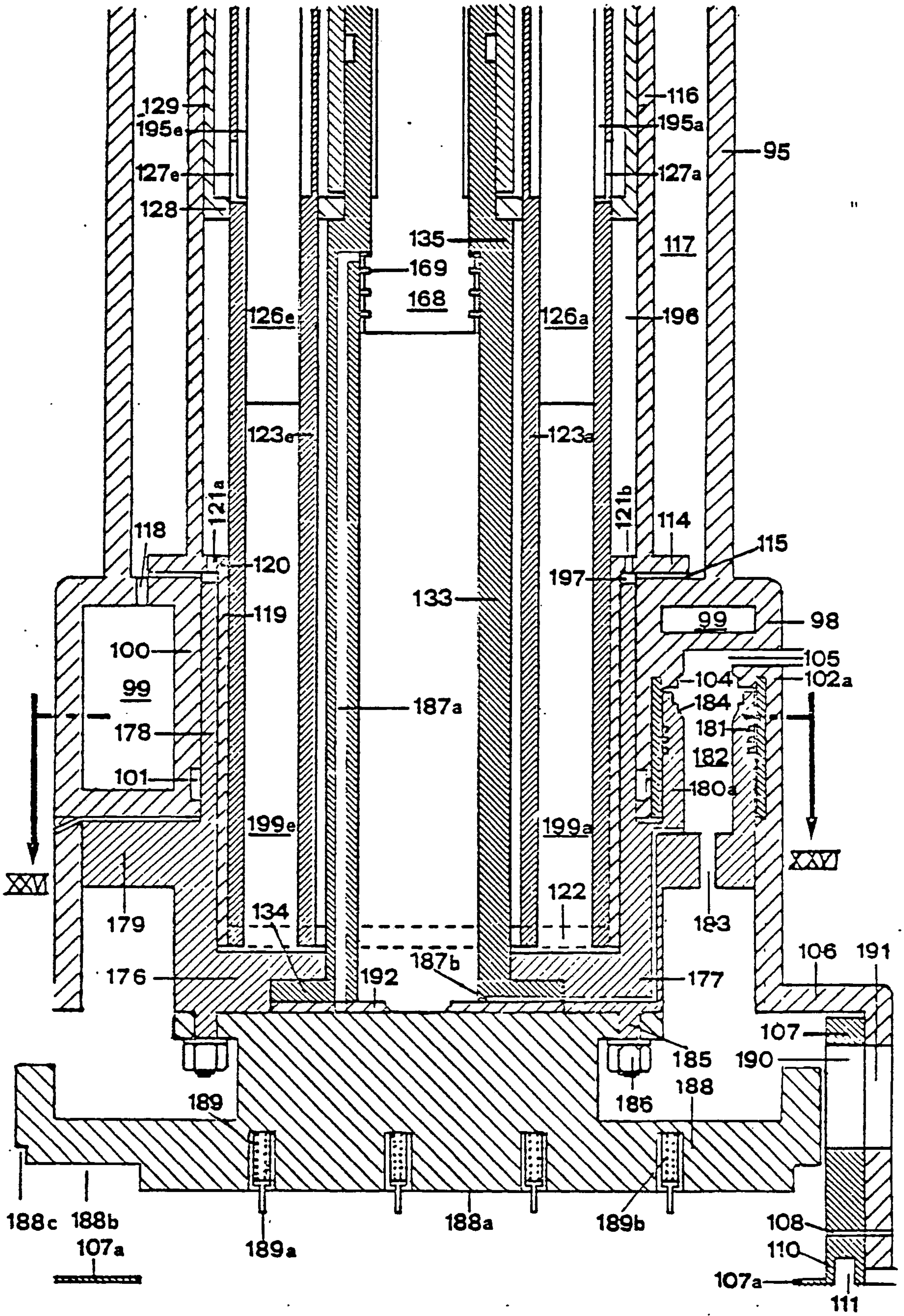
129
195e
127e
128
116
195a
95
127a
117
135
169
168
126e
126a
196
123e
123a
121a
121b
118
114
115
120
197
133
119
99
98
100
105
104
102a
99
184
187a
181
178
182
101
180a
199e
199a
XXVI
XXVI
179
122
134
183
106
191
176
187b
192
177
107
185
190
186
188
189
188c
188b
188a
189b
108
107a
189a
110
107a
111

FIG. 1G

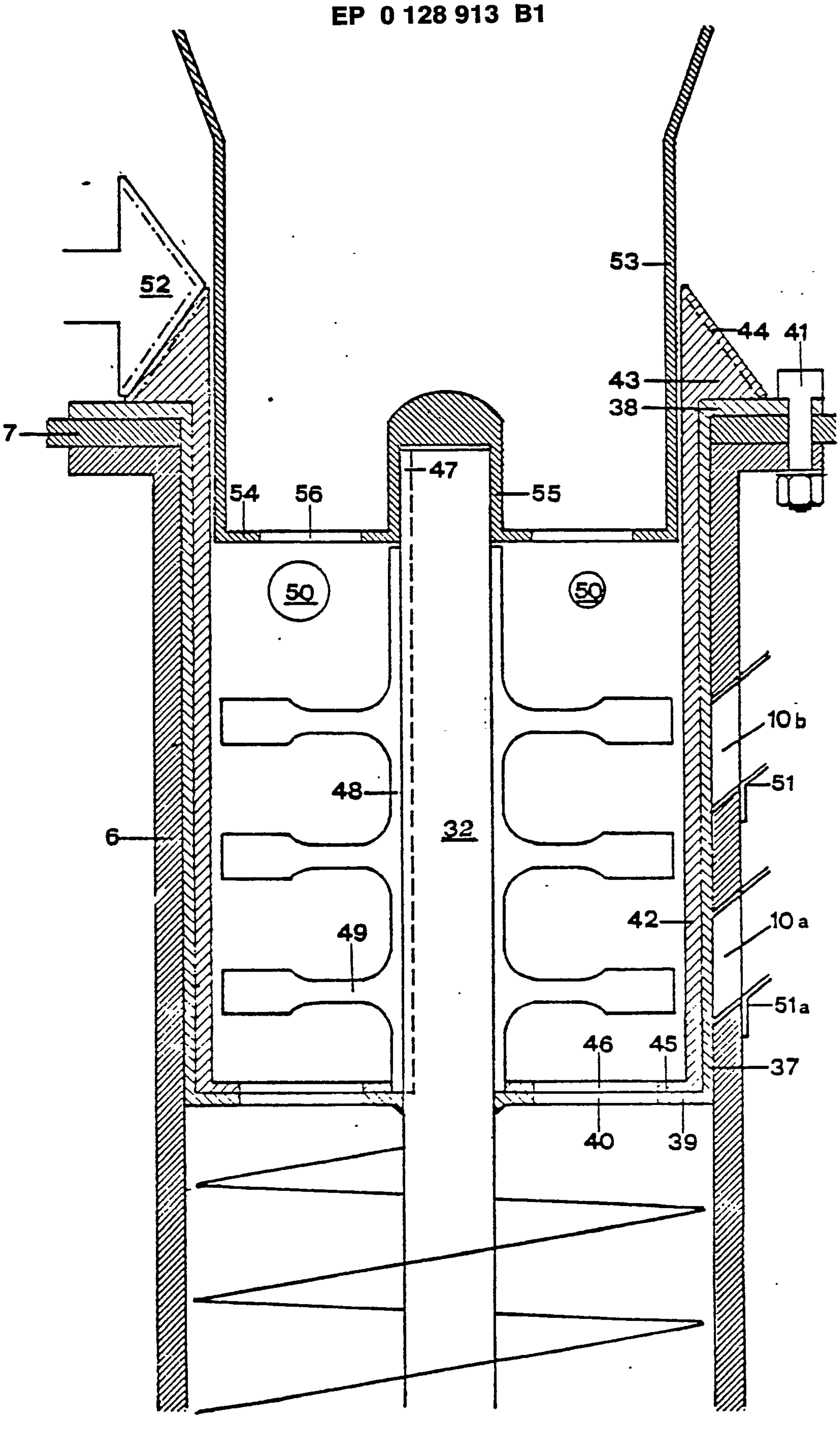
52
53
44
41
43
38
7
47
54
56
55
50
50
10 b
51
48
32
6
42
10 a
49
51a
46
45
37
40
39

FIG. 1H

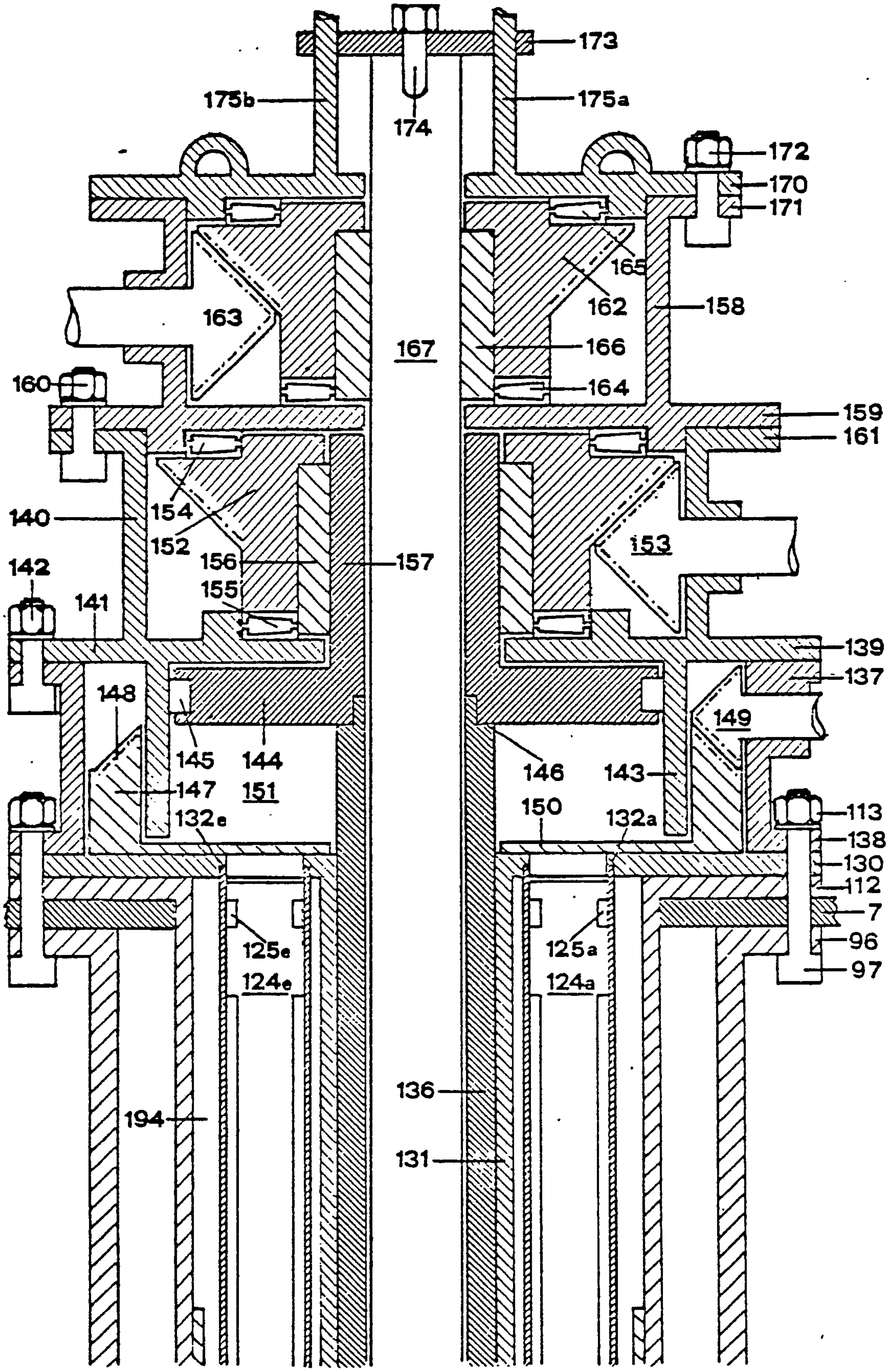
173
175b
175a
174
172
170
171
165
163
162
158
167
166
160
164
159
161
140
154
152
153
156
157
142
155
141
139
137
148
149
145
144
146
143
147
151
150
132e
132a
113
138
130
112
7
96
125e
125a
124e
124a
97
136
194
131

FIG. 1I

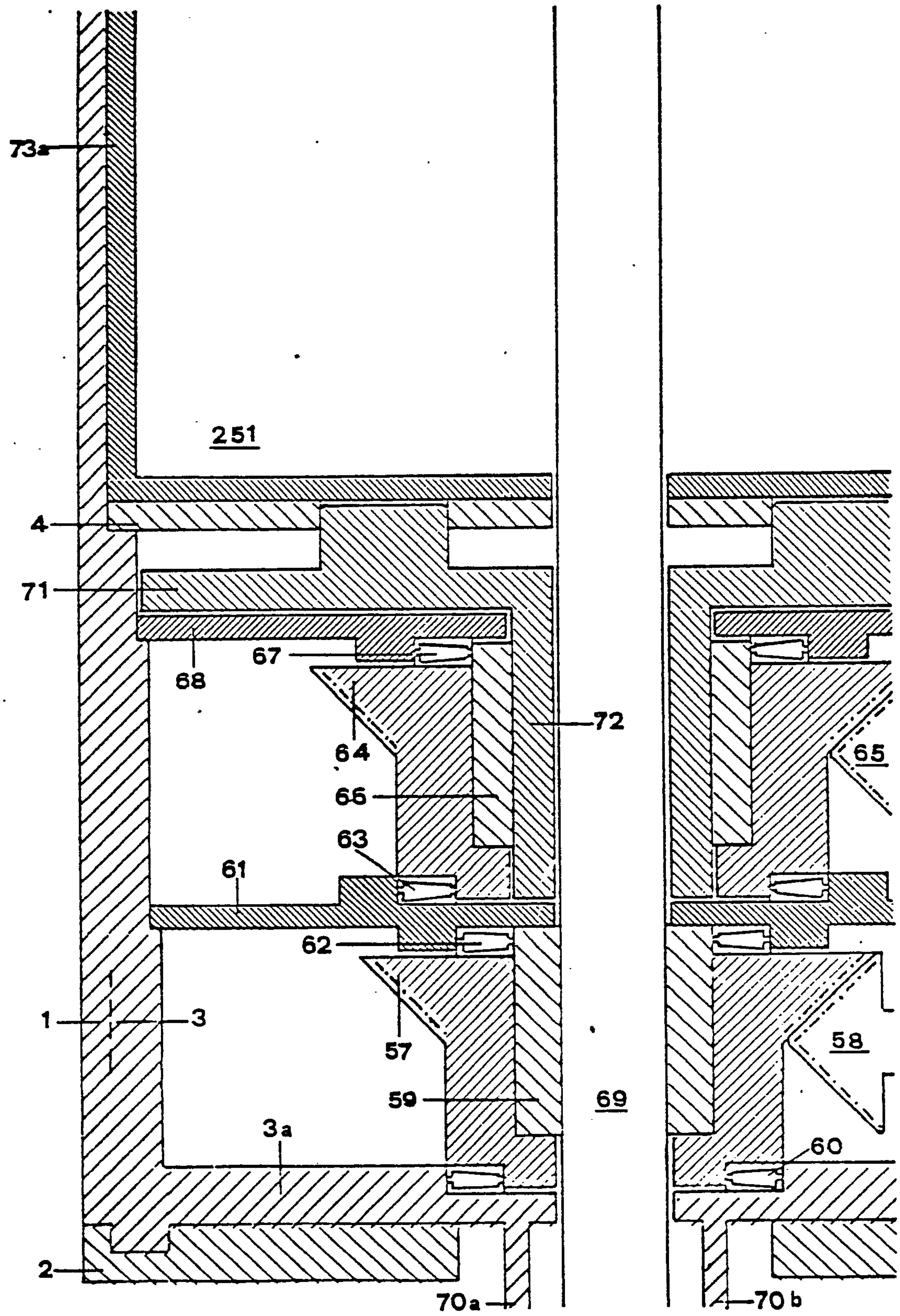


FIG. 2A

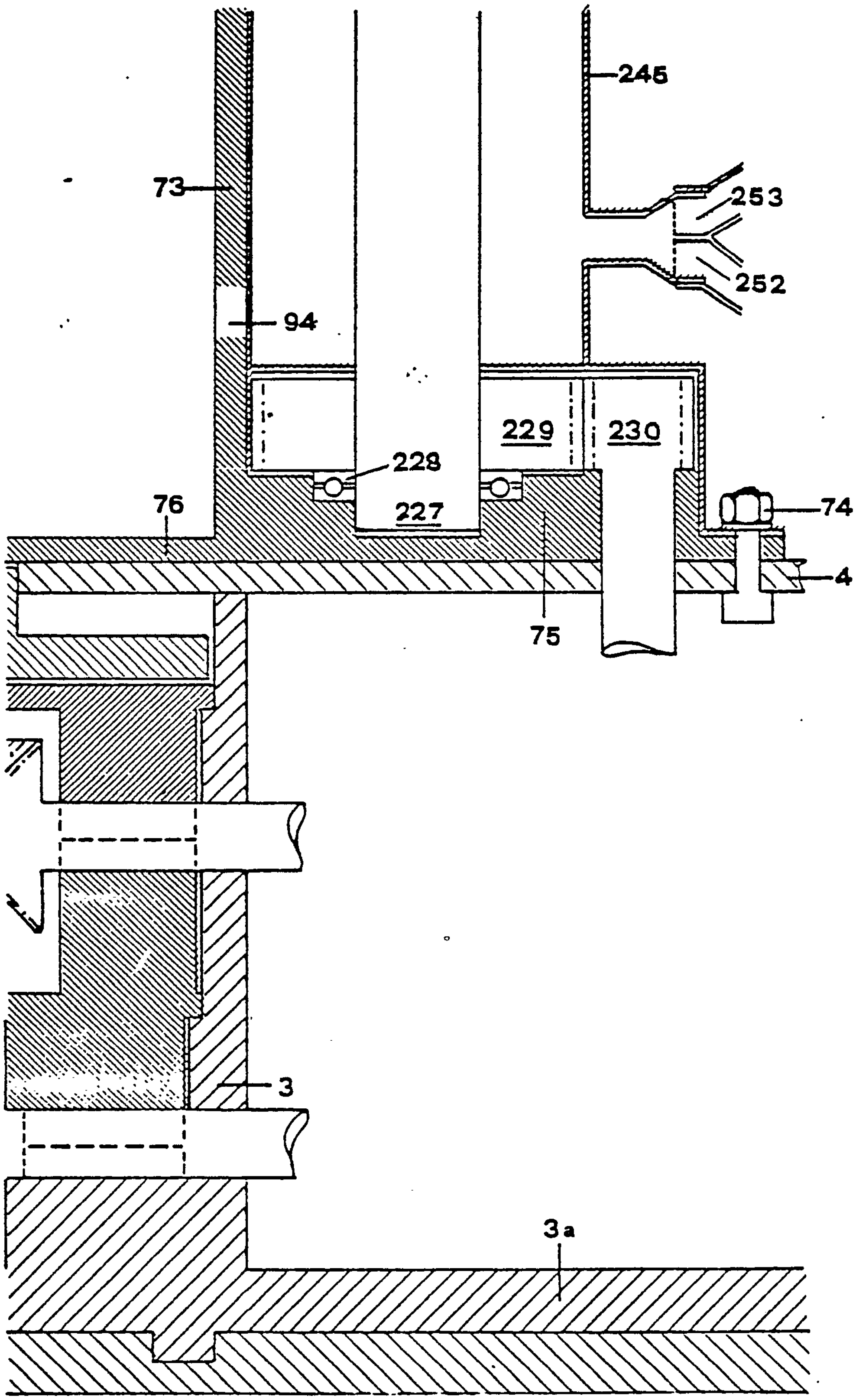


FIG. 2B

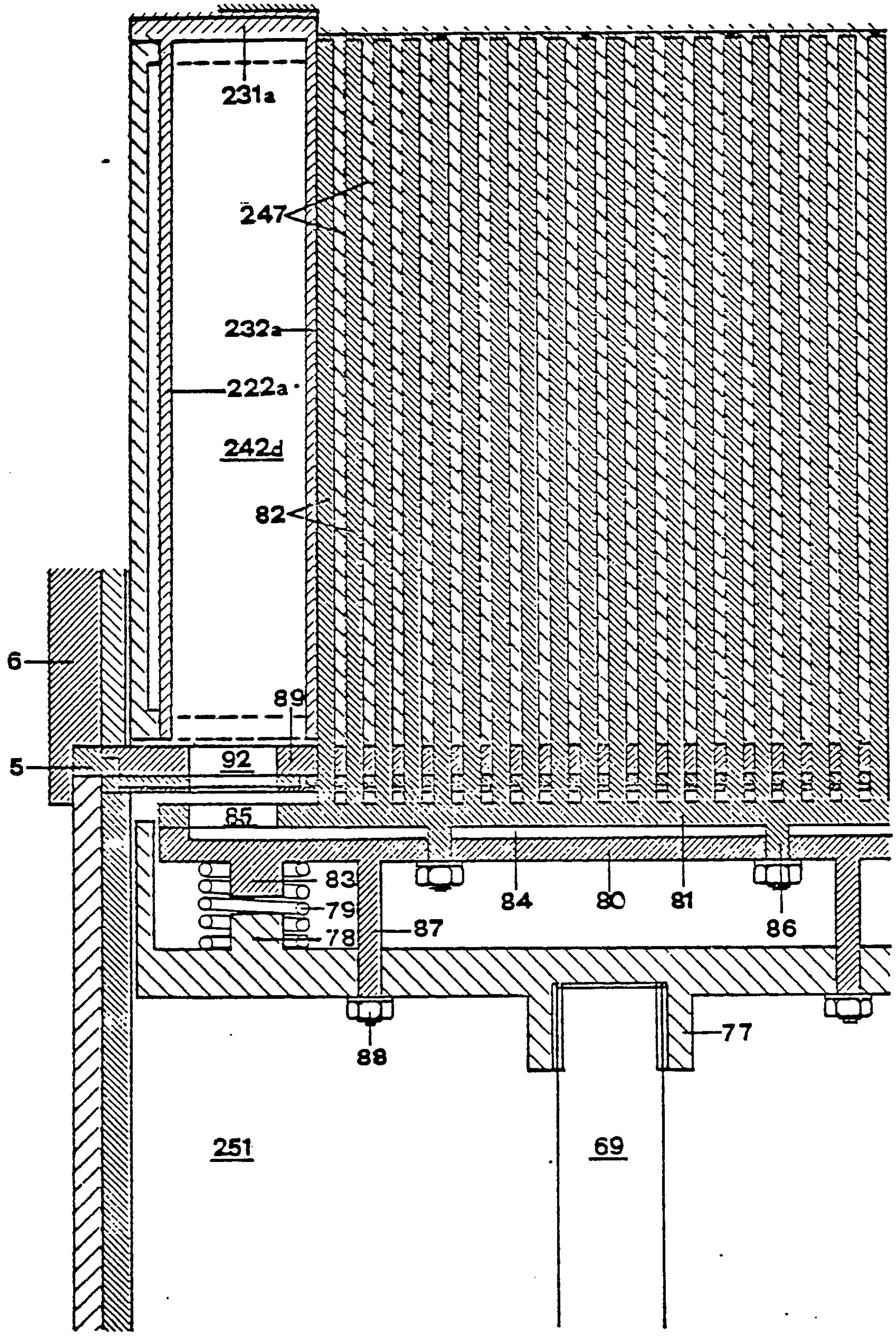
231a
247
232a
222a
242d
82
6
89
92
5
85
83
79
78
87
84
80
81
86
88
77
251
69

FIG. 2C

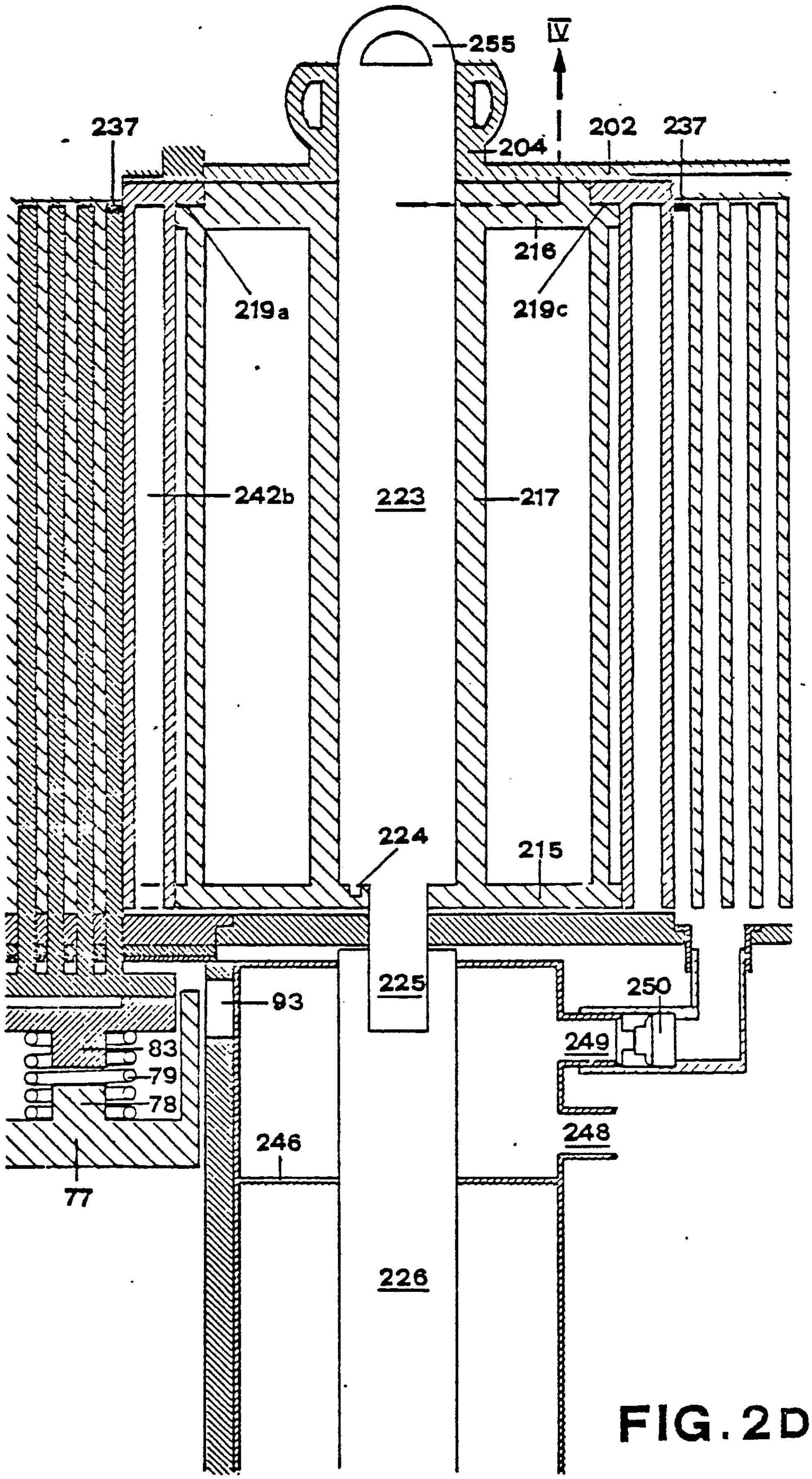
255
IV
237
204
202
237
216
219a
219c
242b
223
217
224
215
225
93
250
249
83
79
78
248
246
77
226

FIG. 2D

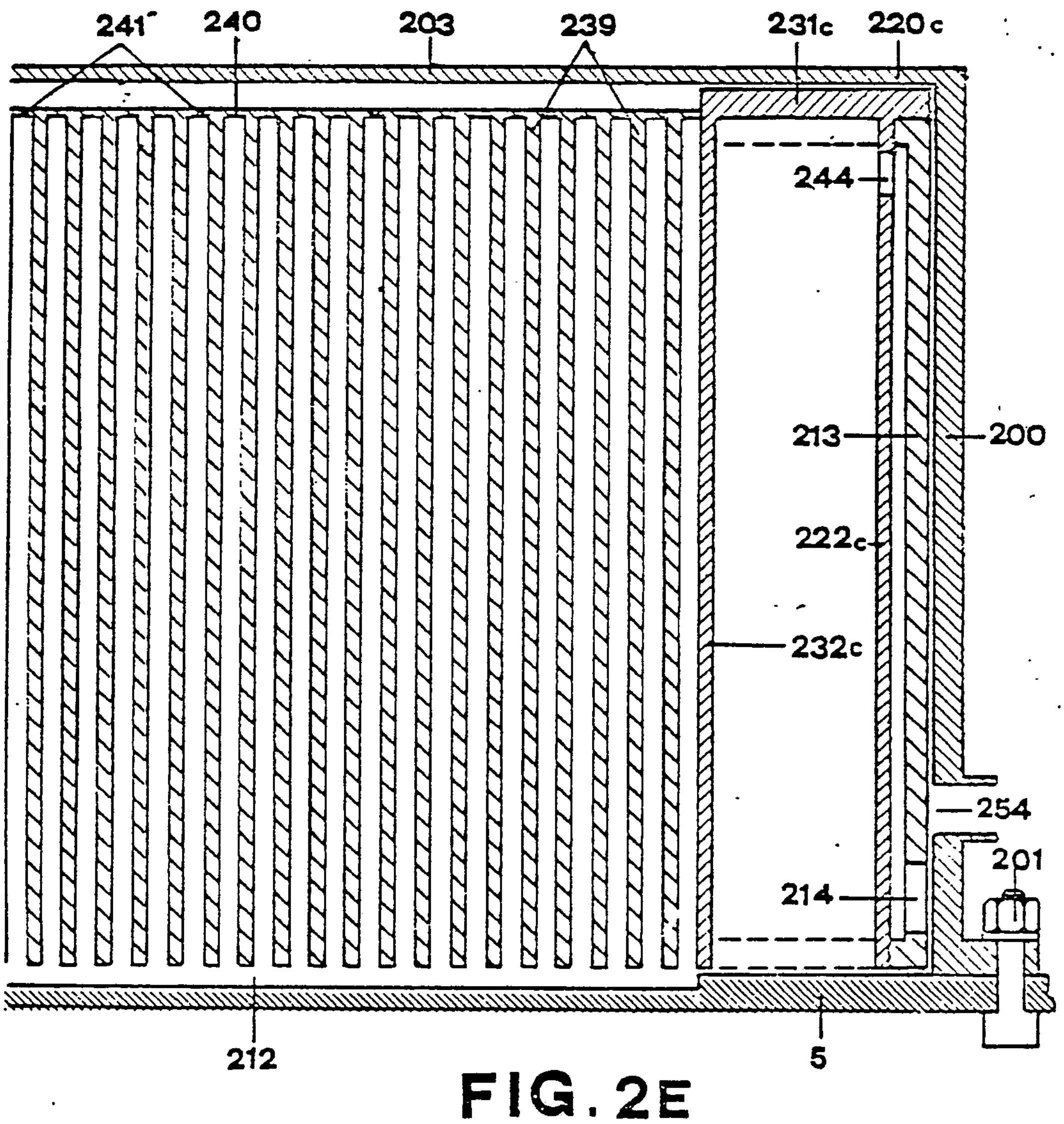
241
240
203
239
231c
220c
244
213
200
222c
232c
254
201
214
212
5

FIG. 2E

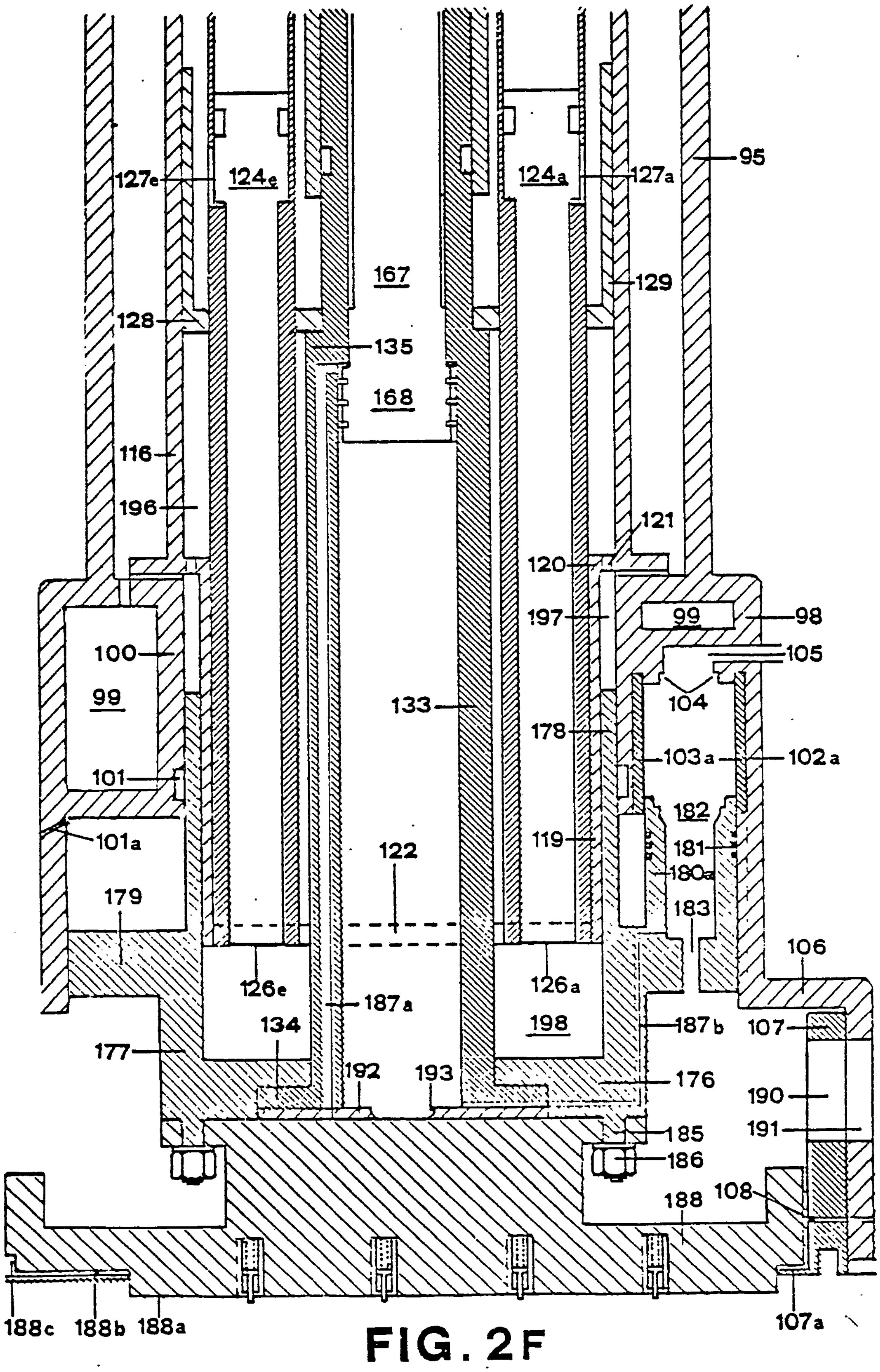

95
124e
127e
124a
127a
167
129
128
135
168
116
196
121
120
197
99
98
100
105
104
99
133
178
103a
102a
101
182
101a
119
181
122
180a
179
183
106
126e
126a
187a
134
198
187b
107
177
192
193
176
190
185
191
186
188
108
188c
188b
188a
107a


FIG. 2F

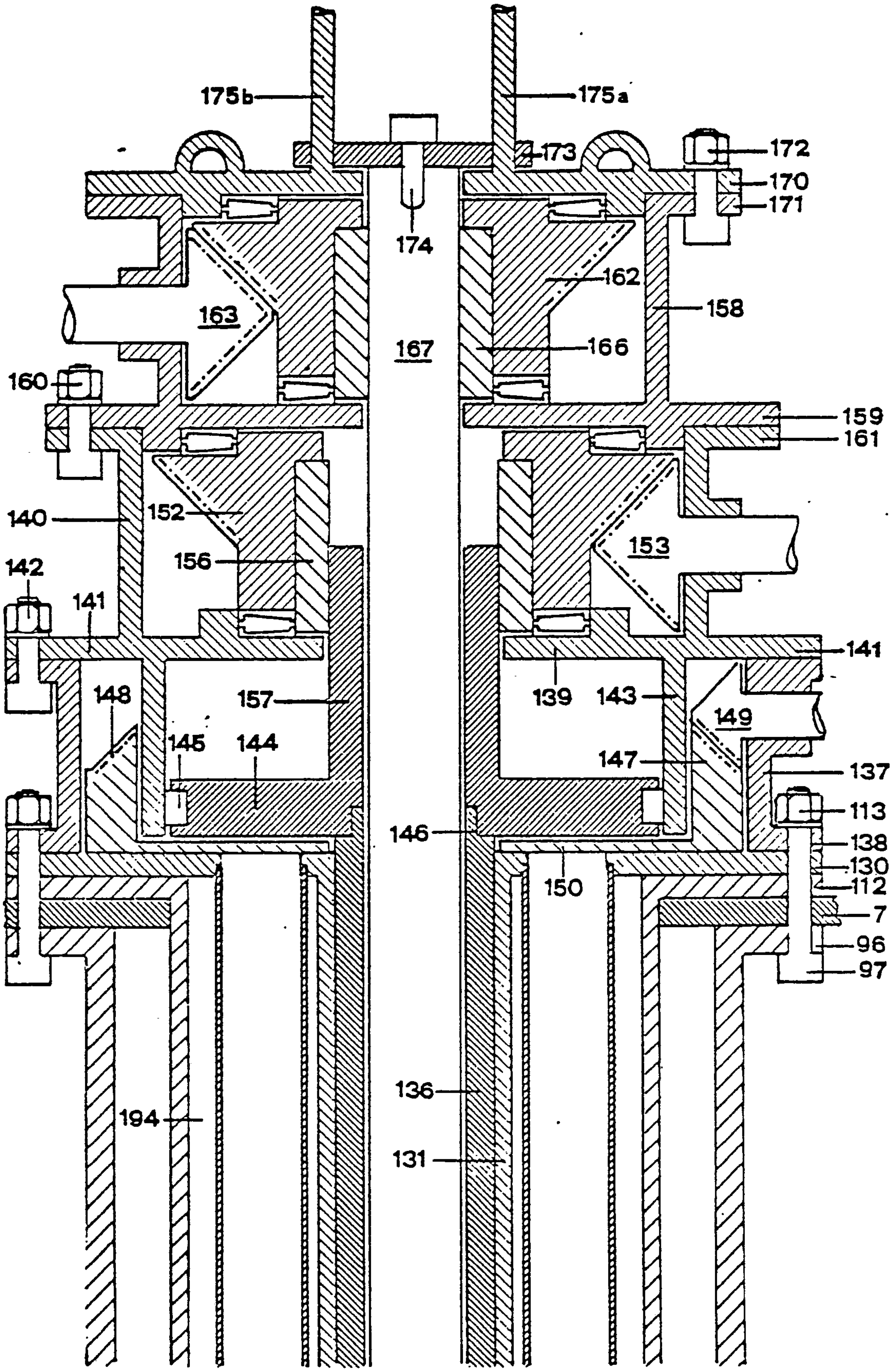
175b
175a
173
172
170
171
174
162
158
163
167
166
160
159
161
140
152
153
156
142
141
141
148
157
139
143
149
145
144
147
137
113
146
138
130
150
112
7
96
97
136
194
131

FIG. 2G

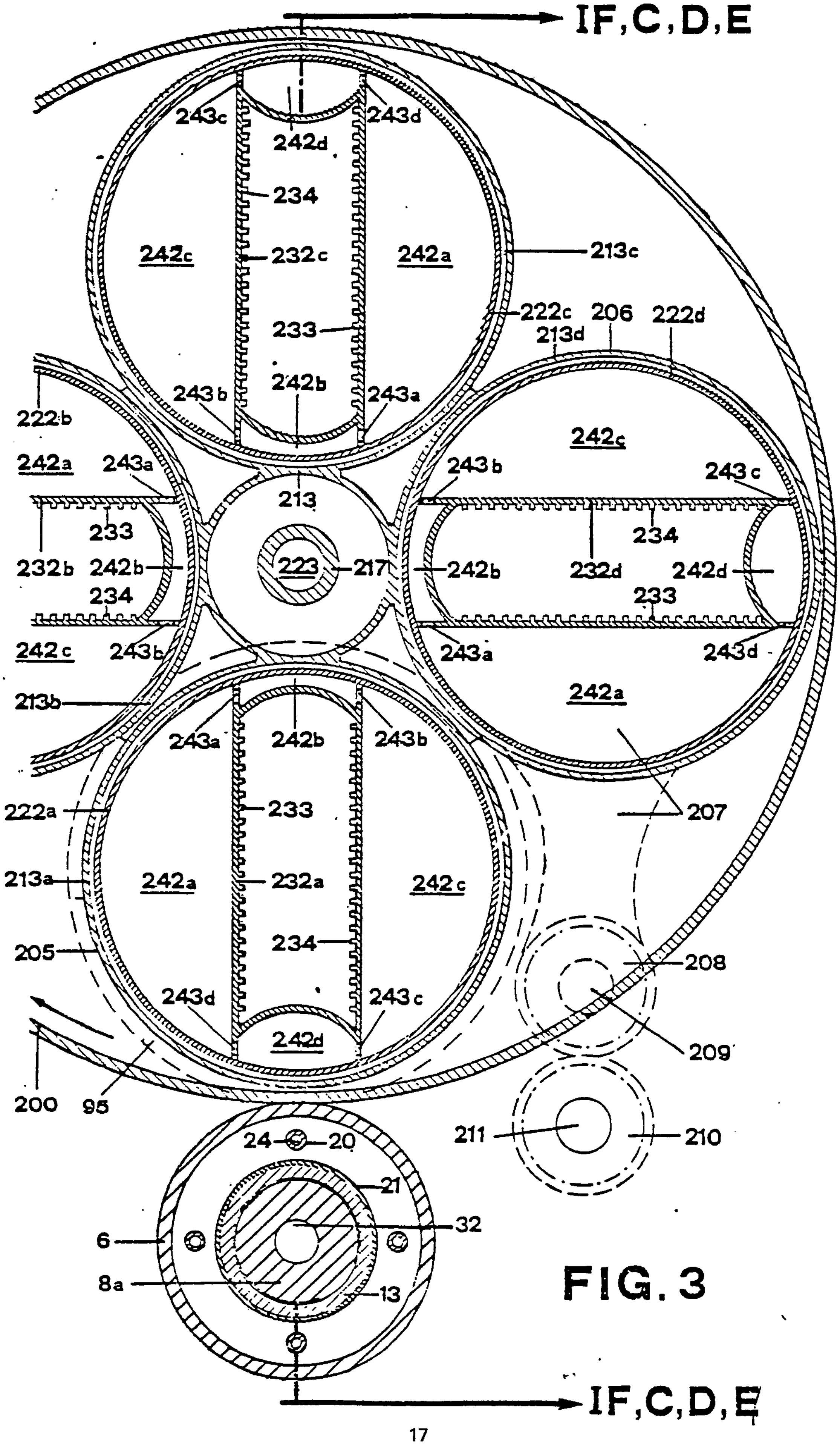
IF,C,D,E
243c
243d
242d
234
242c
232c
242a
213c
222c
206
222d
213d
233
242b
243b
243a
222b
242a
243a
242c
243b
243c
213
233
234
232b
242b
223
217
242b
232d
242d
234
233
242c
243b
243a
243d
242a
213b
243a
242b
243b
222a
233
207
213a
242a
232a
242c
205
234
208
243d
243c
242d
209
200
95
24
20
211
210
21
32
6
8a
13
IF,C,D,E

FIG. 3

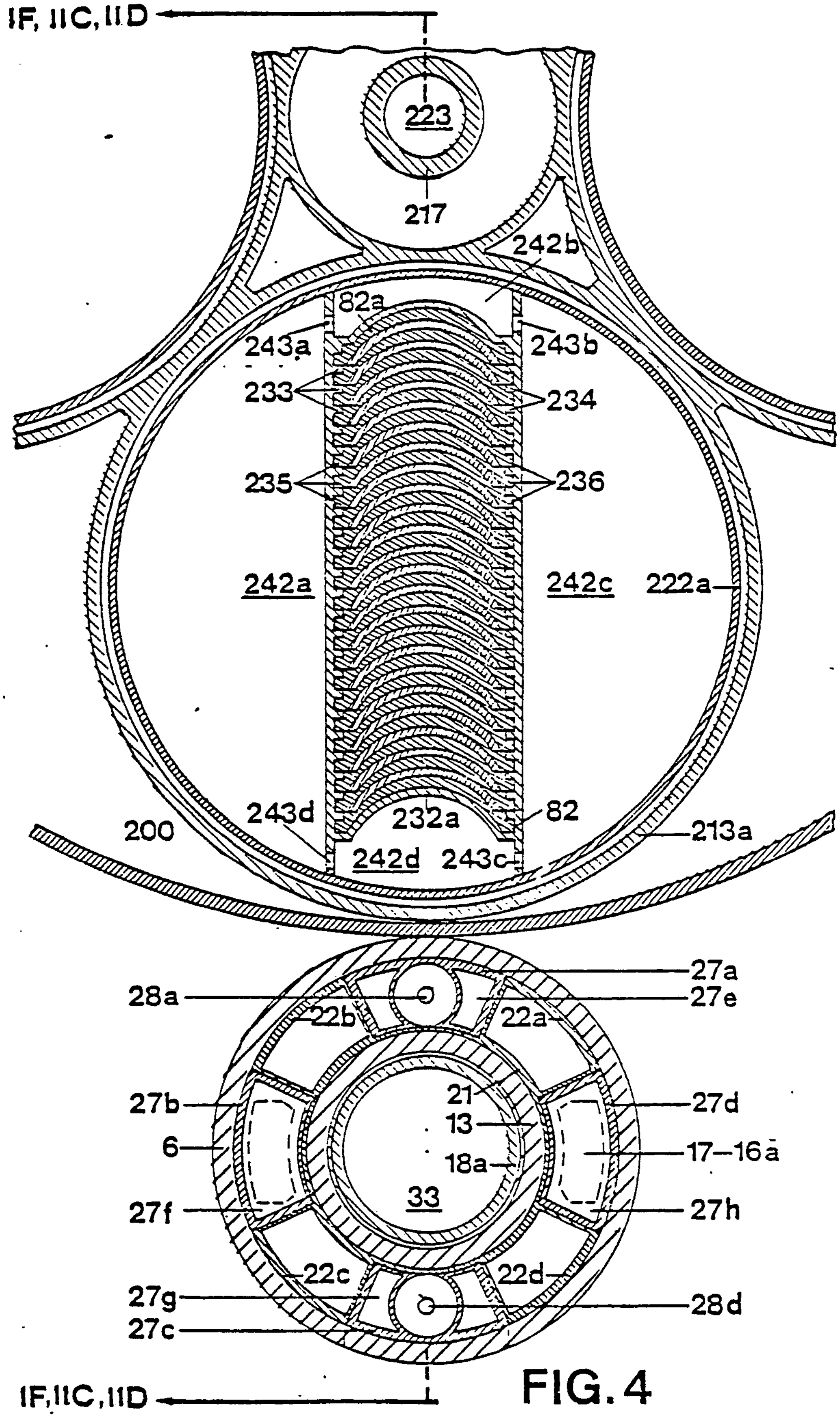
IF, IIC, IID
223
217
242b
82a
243a
243b
233
234
235
236
242a
242c
222a
243d
232a
82
200
213a
242d
243c
27a
28a
27e
22b
22a
21
27b
27d
13
6
18a
17–16a
33
27f
27h
22c
22d
27g
28d
27c
IF, IIC, IID

FIG. 4

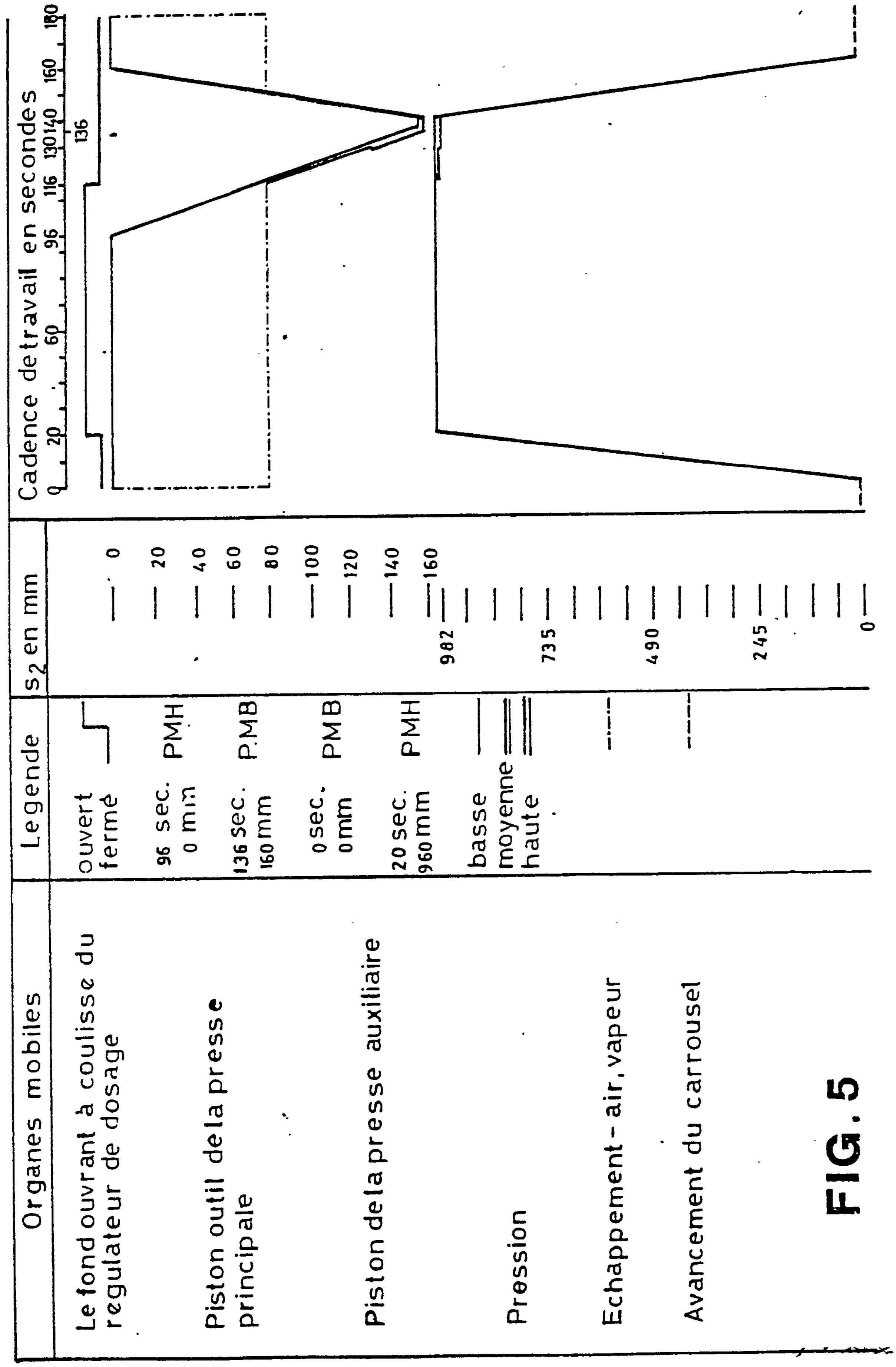
Organes mobiles
Le fond ouvrant à coulisse du regulateur de dosage
Piston outil de la presse principale
Piston de la presse auxiliaire
Pression
Echappement - air, vapeur
Avancement du carrousel
Legende
ouvert
fermé
96 sec.
0 mm
PMH
136 sec.
160 mm
P.MB
0 sec.
0 mm
PMB
20 sec.
960 mm
PMH
basse
moyenne
haute
$s_2$ en mm
0
20
40
60
80
100
120
140
160
982
735
490
245
0
Cadence de travail en secondes
0
20
60
96
116
130
136
140
160
180

FIG. 5

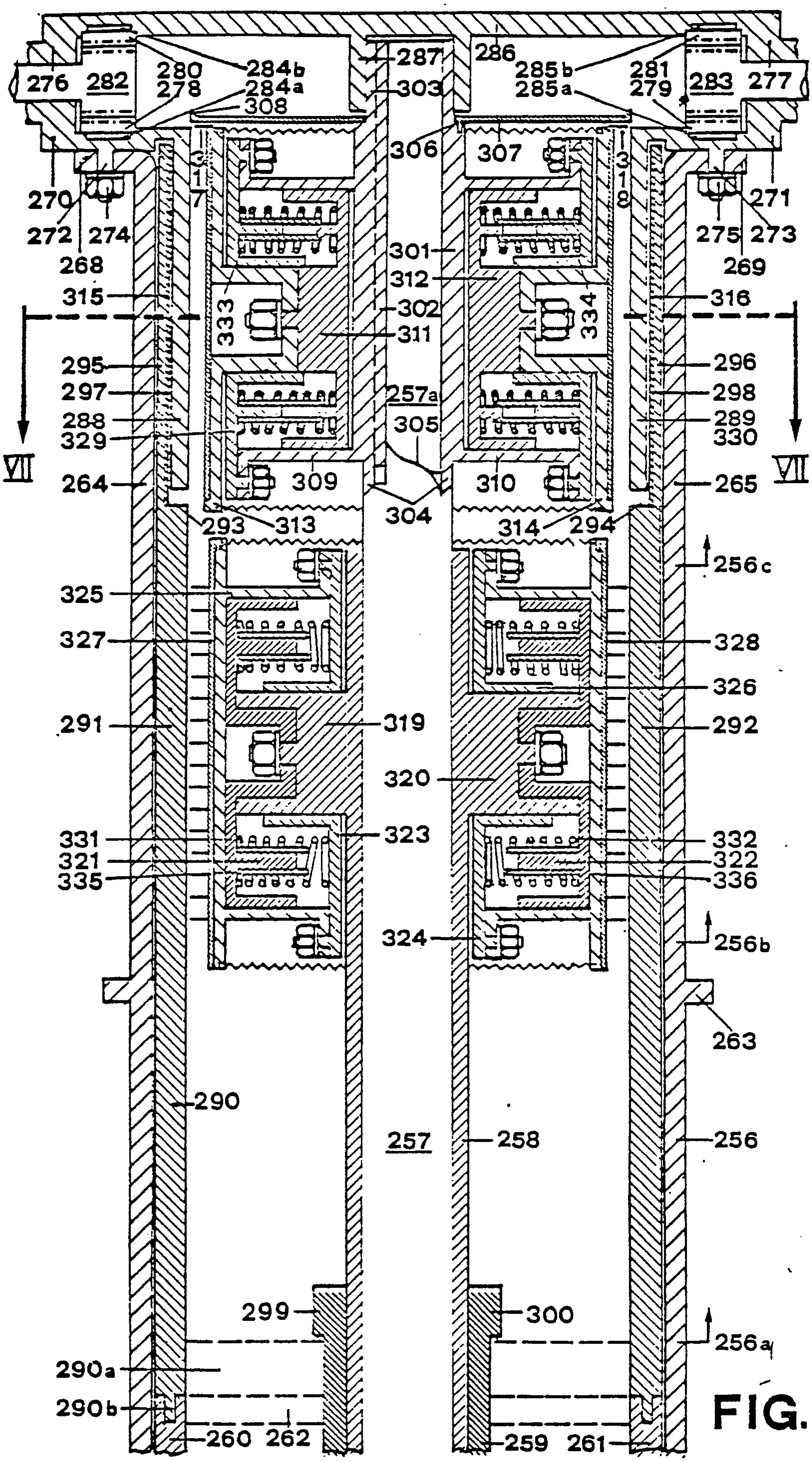
276
282
280
278
284b
284a
308
287
303
286
285b
285a
281
279
283
277
306
307
270
272
274
268
317
318
271
275
273
269
301
312
315
333
302
311
334
316
295
297
288
329
257a
305
296
298
289
330
VII
264
309
310
265
293
313
304
314
294
256c
325
327
328
326
291
319
292
320
331
321
335
323
332
322
336
324
256b
263
290
257
258
256
299
300
290a
256a
290b
260
262
259
261

FIG. 6

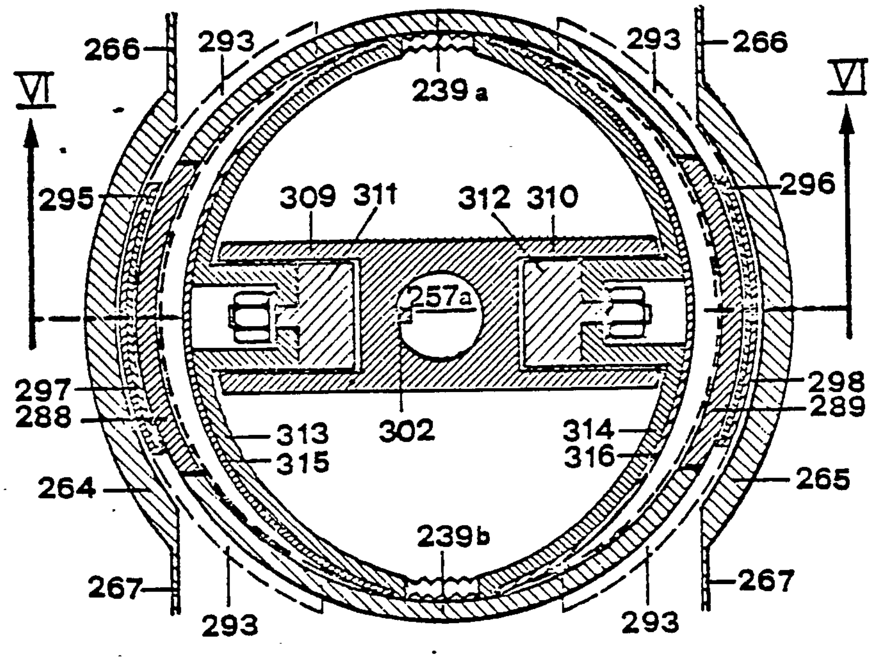
266
293
239a
293
266
VI
VI
295
309 311
312 310
296
257a
297
288
302
313
315
314
316
298
289
264
265
239b
267
293
293
267

FIG. 7

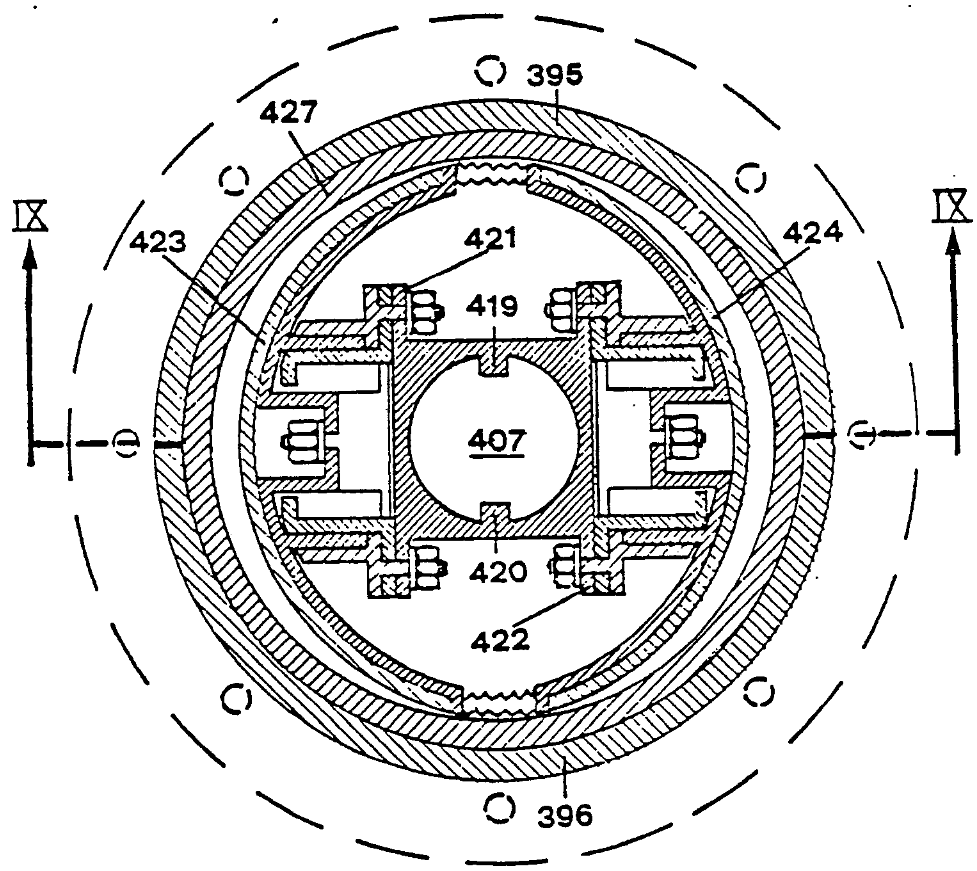
395
427
IX
IX
423
421
424
419
407
420
422
396

FIG. 8

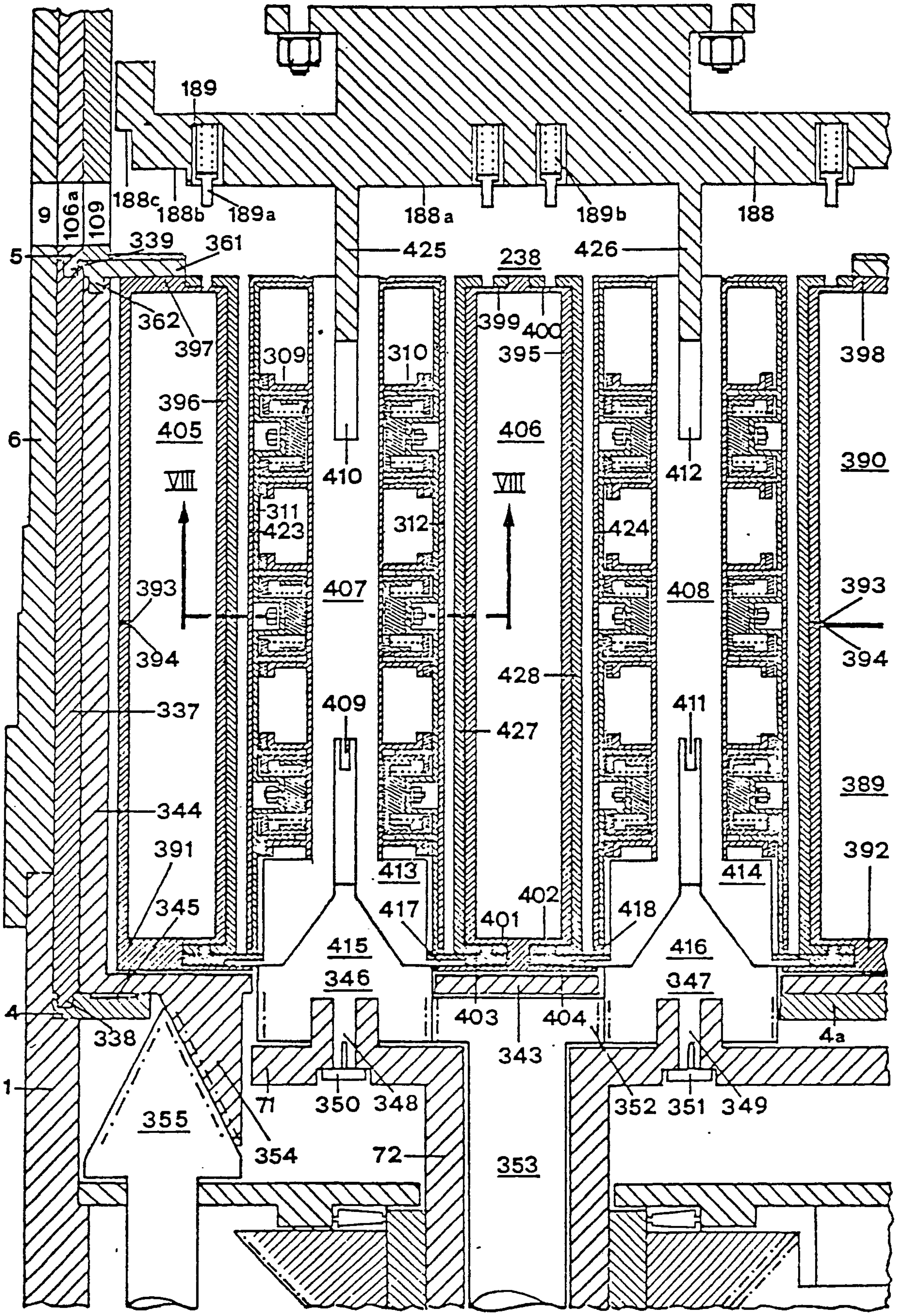
189
188c
188b
189a
188a
189b
188
9
106a
109
5
339
361
425
238
426
362
397
399
400
309
310
395
398
396
405
406
6
410
412
390
VIII
VIII
311
423
312
424
393
407
408
393
394
394
428
337
409
411
427
344
389
391
392
413
414
345
417
402
418
401
415
416
346
347
4
338
403
404
343
4a
1
71
350
348
352
351
349
355
354
72
353

FIG. 9

FIG.10

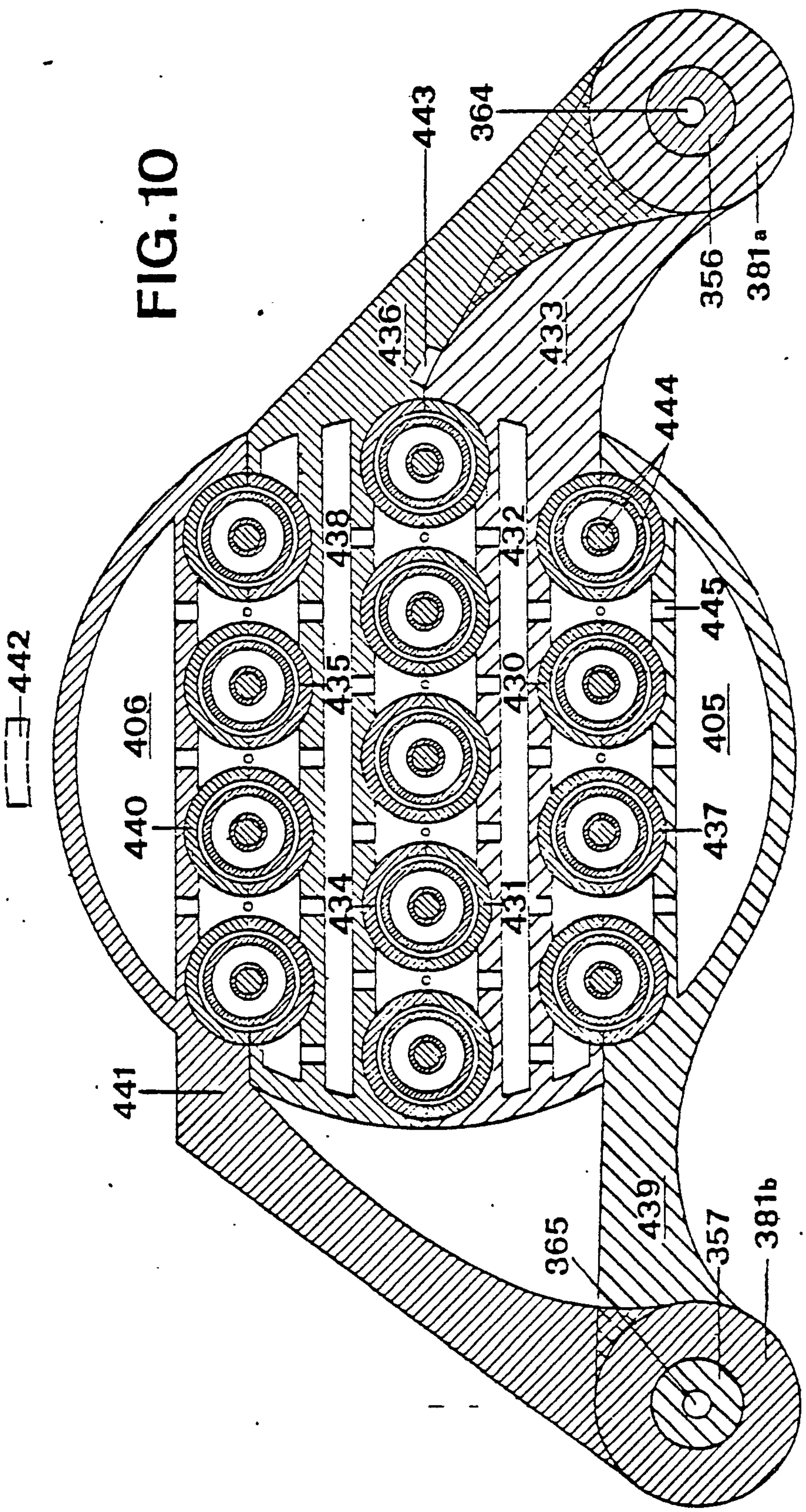

364
443
356
381a
436
433
444
438
432
445
442
435
430
406
405
440
437
434
431
441
365
439
357
381b

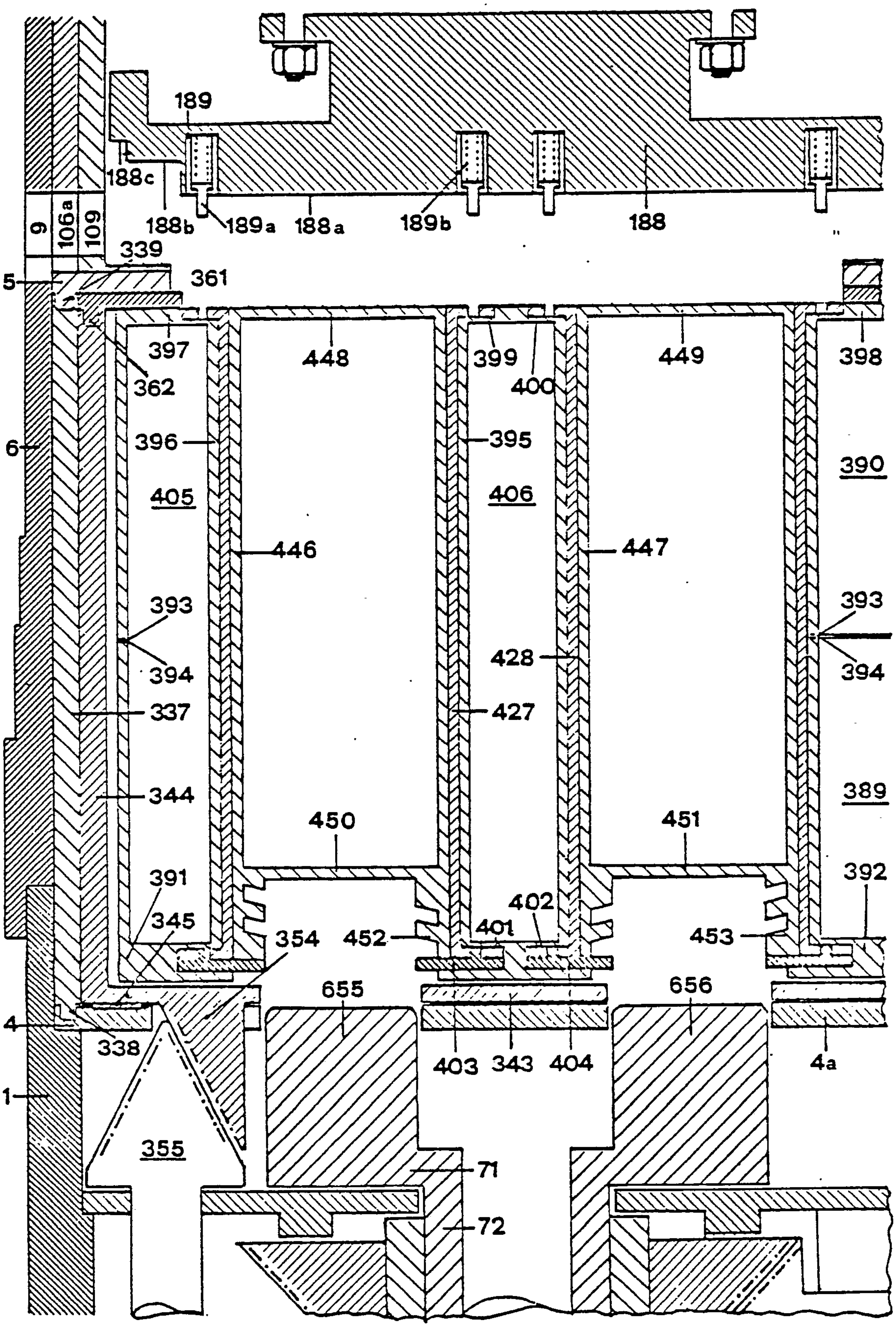
189
188c
188b
189a
188a
189b
188
9
106a
109
339
361
5
397
362
448
399
400
449
398
396
395
6
405
406
390
446
447
393
394
428
427
337
393
394
344
450
451
389
391
345
402
401
392
354
452
453
655
656
4
338
403
343
404
4a
1
355
71
72

FIG.11

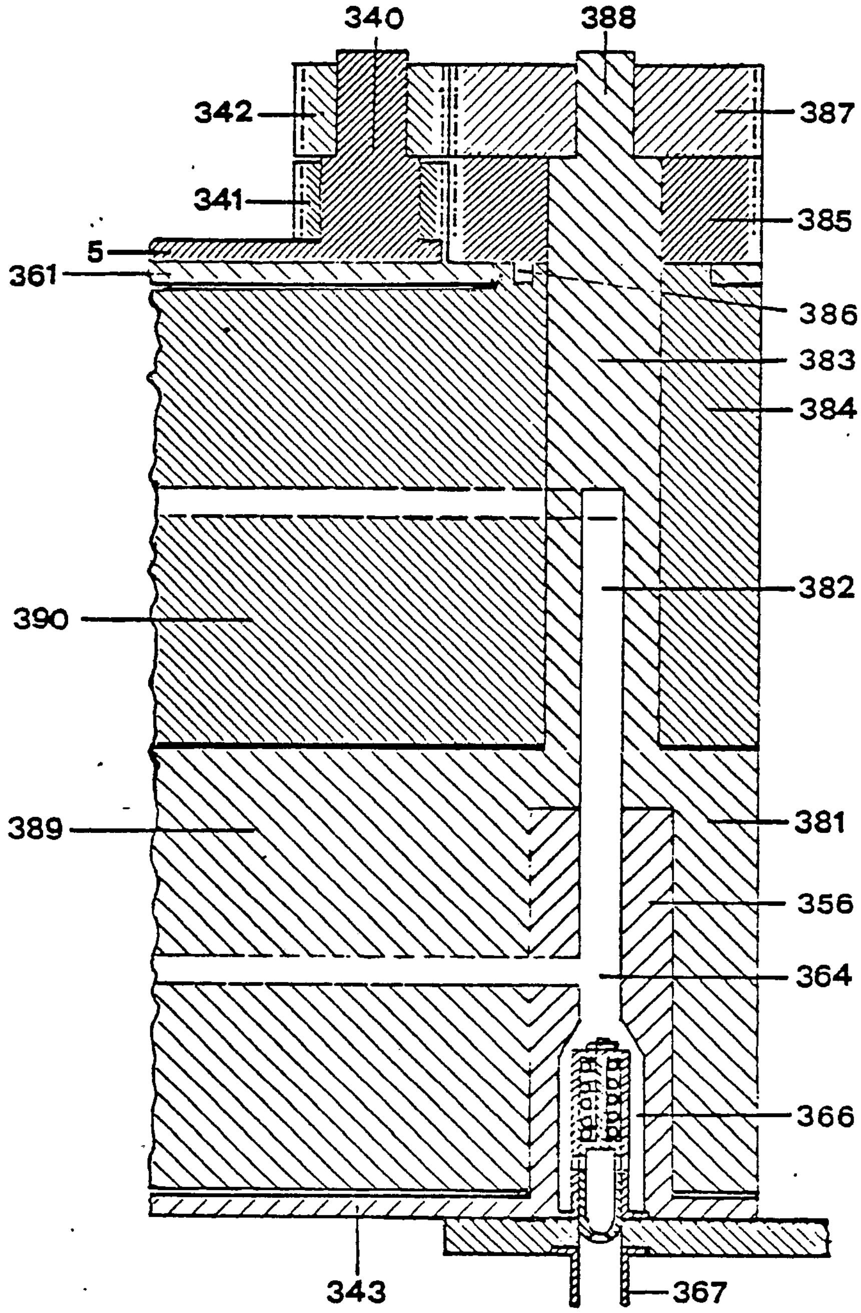
340
388
342
387
341
385
5
361
386
383
384
382
390
389
381
356
364
366
343
367

FIG. 12

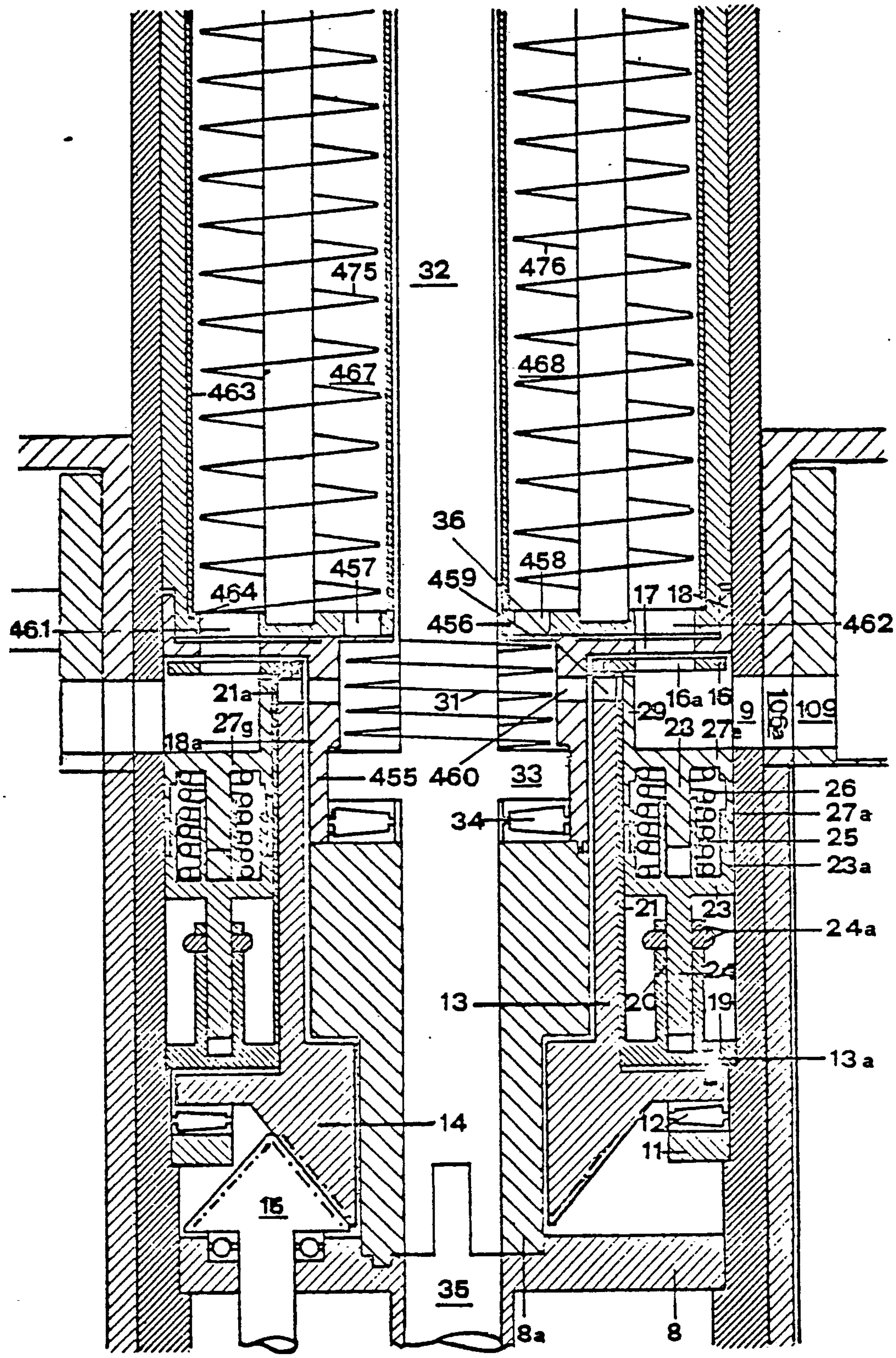

475
32
476
463
467
468
36
459
457
458
464
17
18
461
456
462
21a
31
16a
16
27g
29
9
109a
109
18a
23
27e
455
460
33
26
27a
34
25
23a
21
23
24a
13
20
19
13a
14
12
11
15
35
8a
8


FIG.13

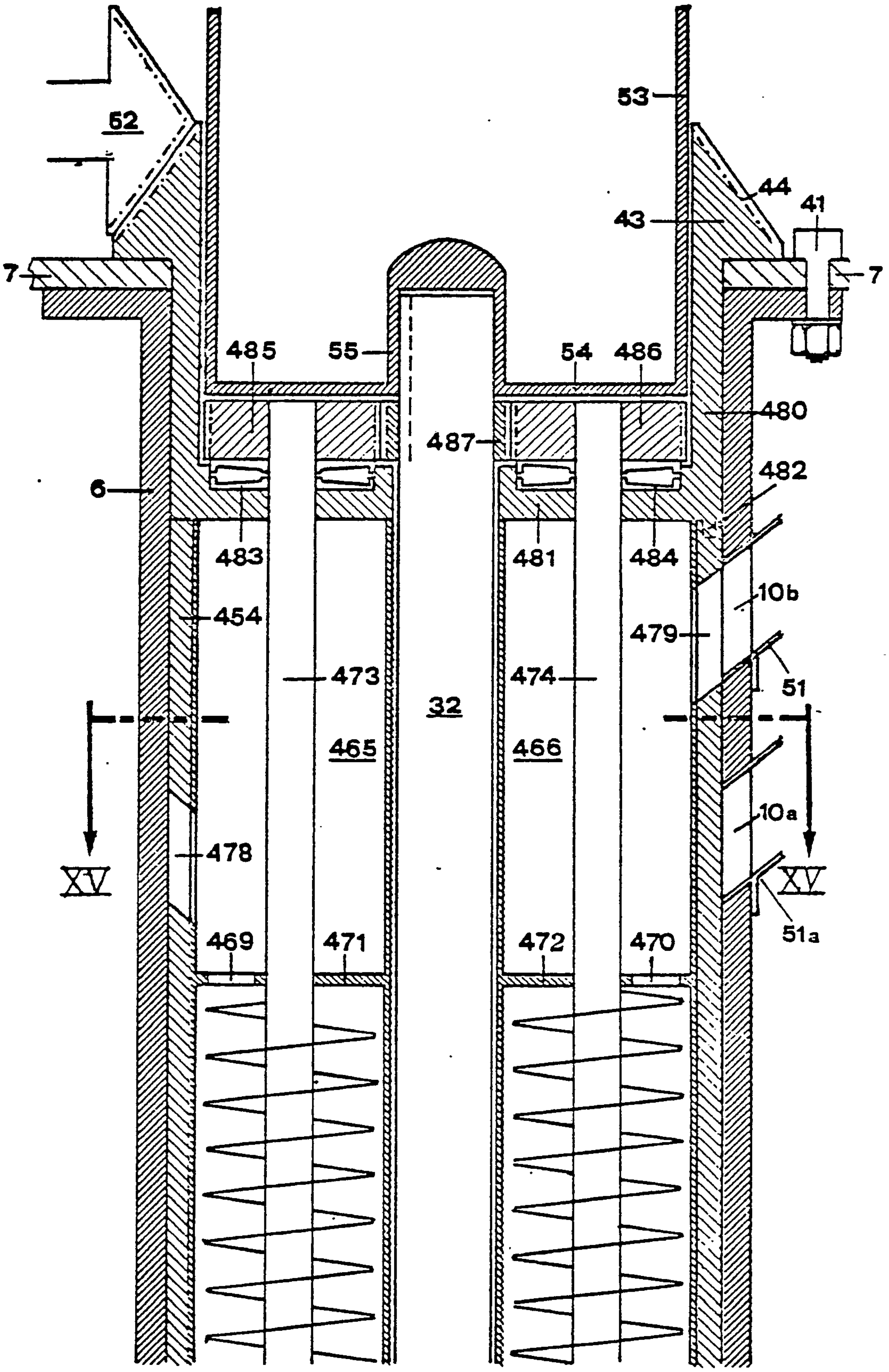
52
53
44
41
43
7
7
485
55
54
486
480
487
6
482
483
481
484
454
10b
479
473
474
51
32
465
466
10a
478
XV
XV
51a
469
471
472
470

FIG.14

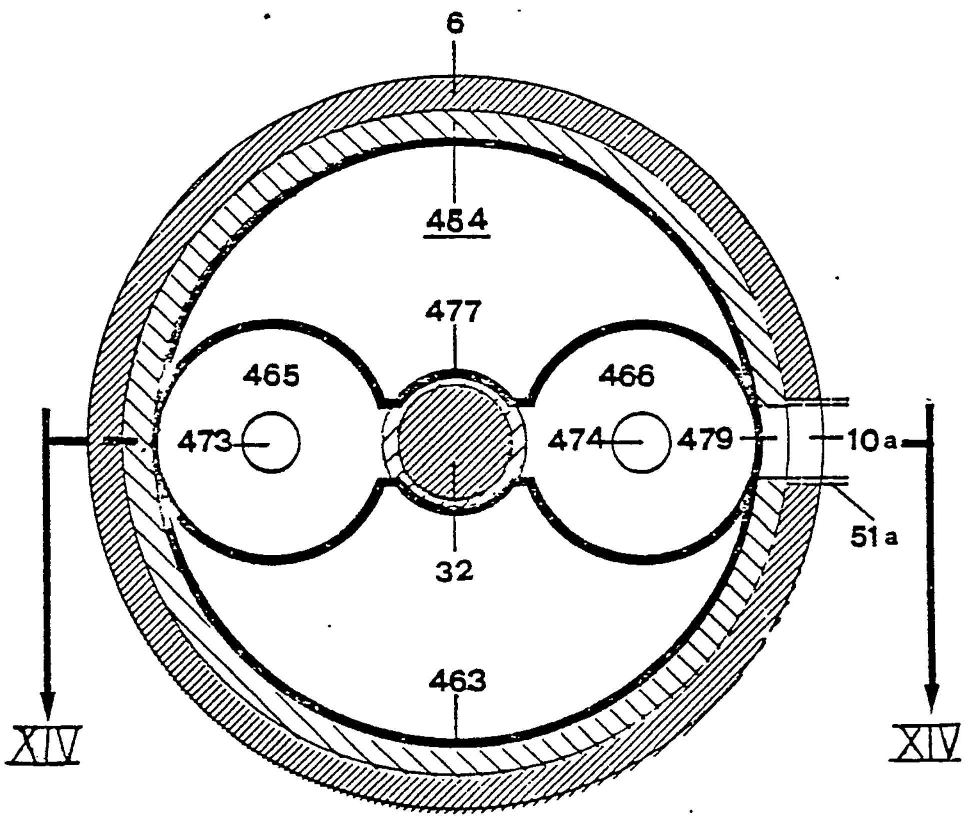


FIG.15

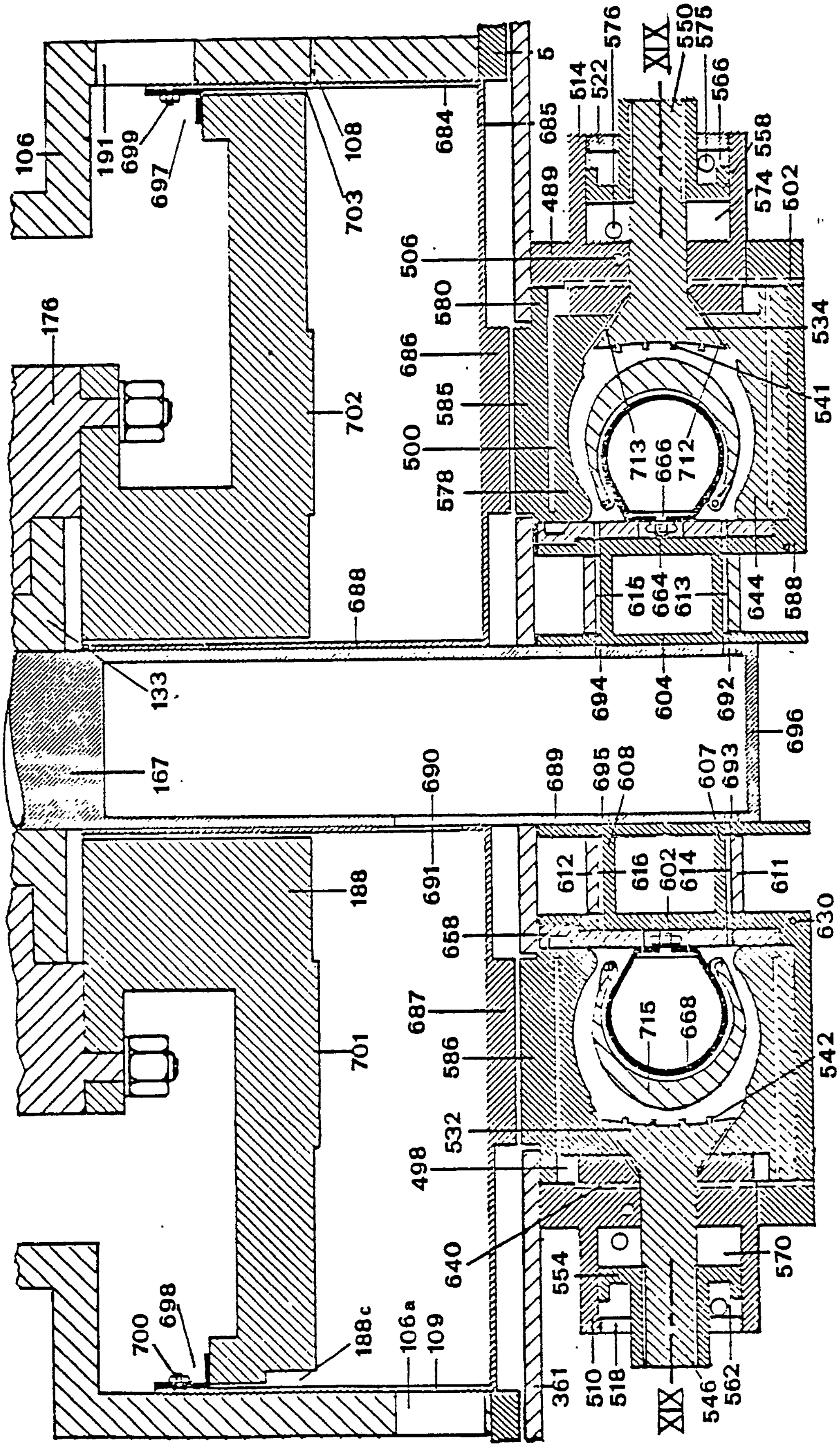
106
191
699
697
703
108
684
685
5
514
522
576
XIX
550
575
566
558
574
502
489
506
580
534
176
686
585
702
500
578
541
713
666
712
688
616
664
613
644
588
133
694
604
692
696
167
690
689
695
608
607
693
691
612
616
602
614
611
188
658
630
687
715
668
586
701
542
532
498
640
554
570
700
698
188c
106a
109
361
510
518
XIX
546
562

FIG.16

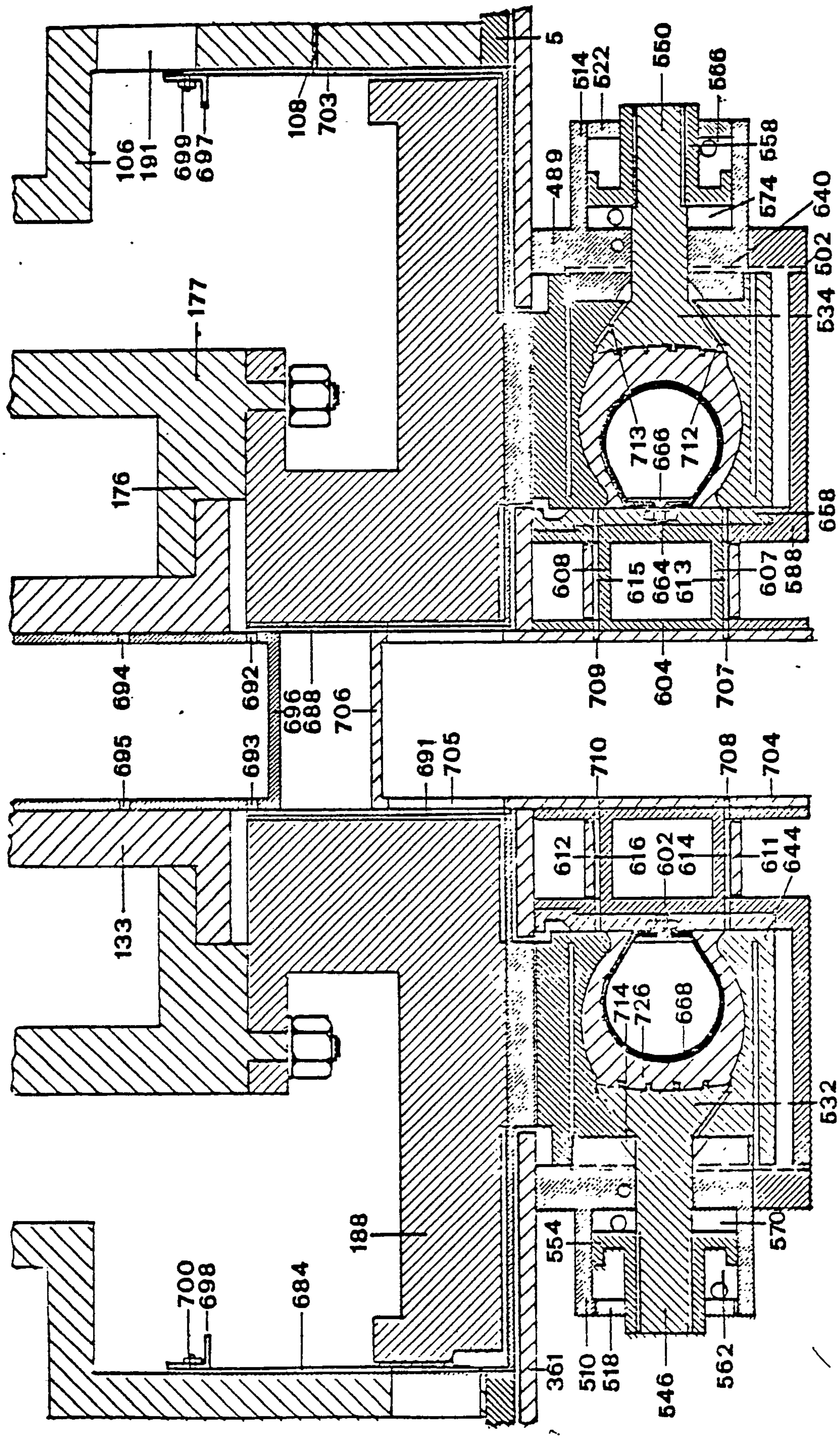
5
106
191
699
697
108
703
514
522
550
566
558
489
574
640
502
534
177
176
713
666
712
658
608
615
664
613
607
588
694
692
696
688
706
709
604
707
695
693
691
705
710
708
704
133
612
616
602
614
611
644
714
726
668
532
188
554
570
700
698
684
361
510
518
546
562

FIG .17

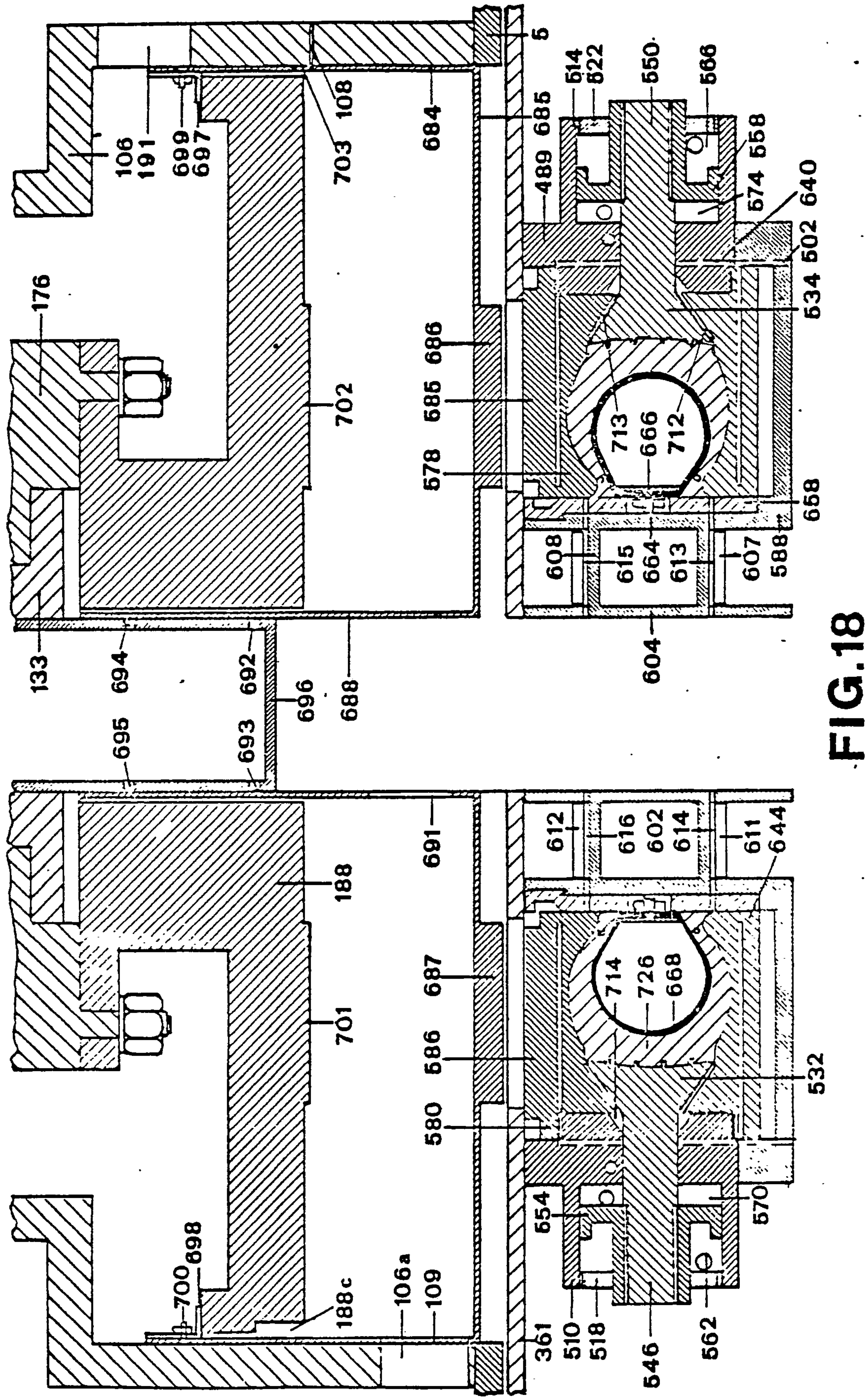

FIG.18

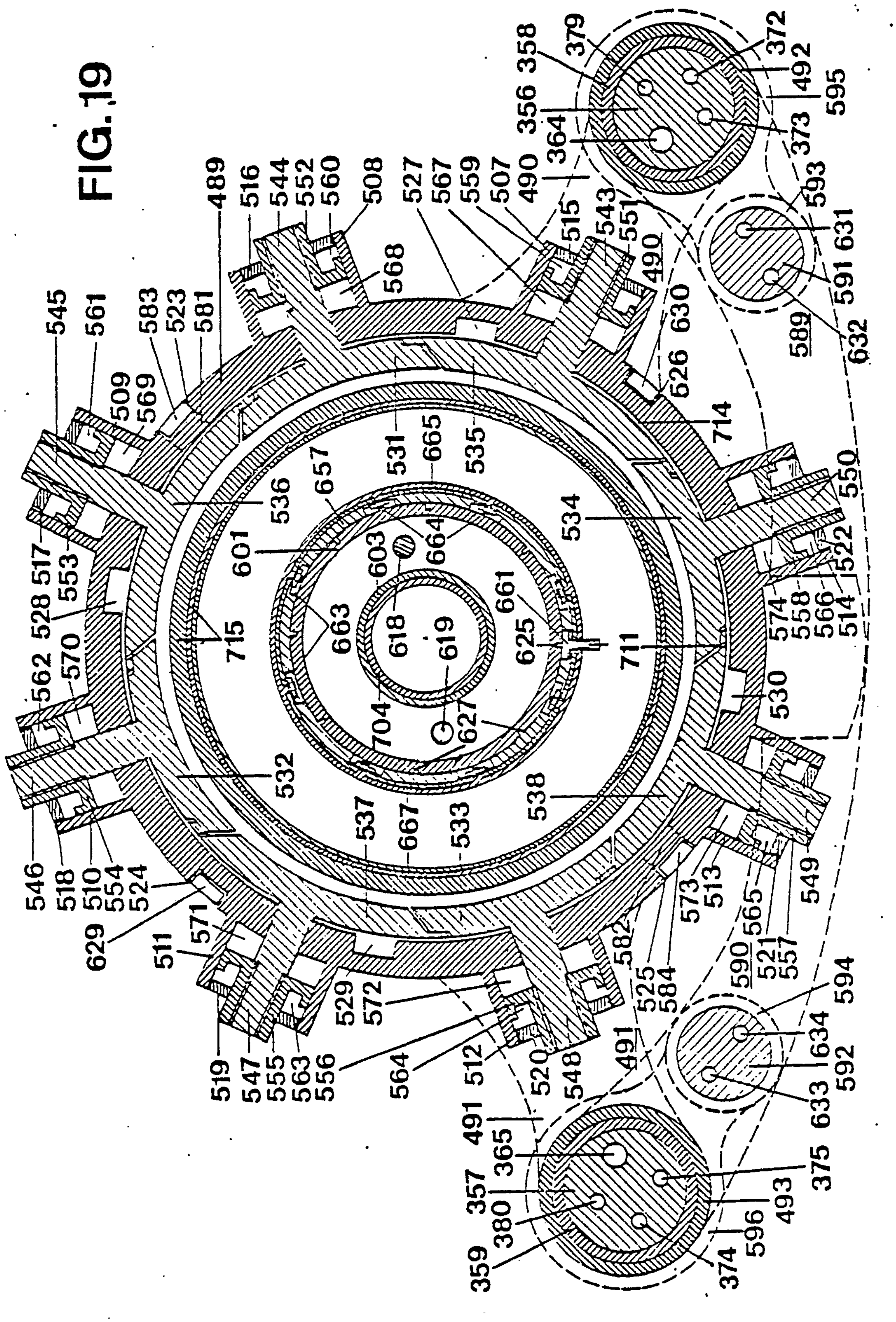

FIG. 19

FIG. 20

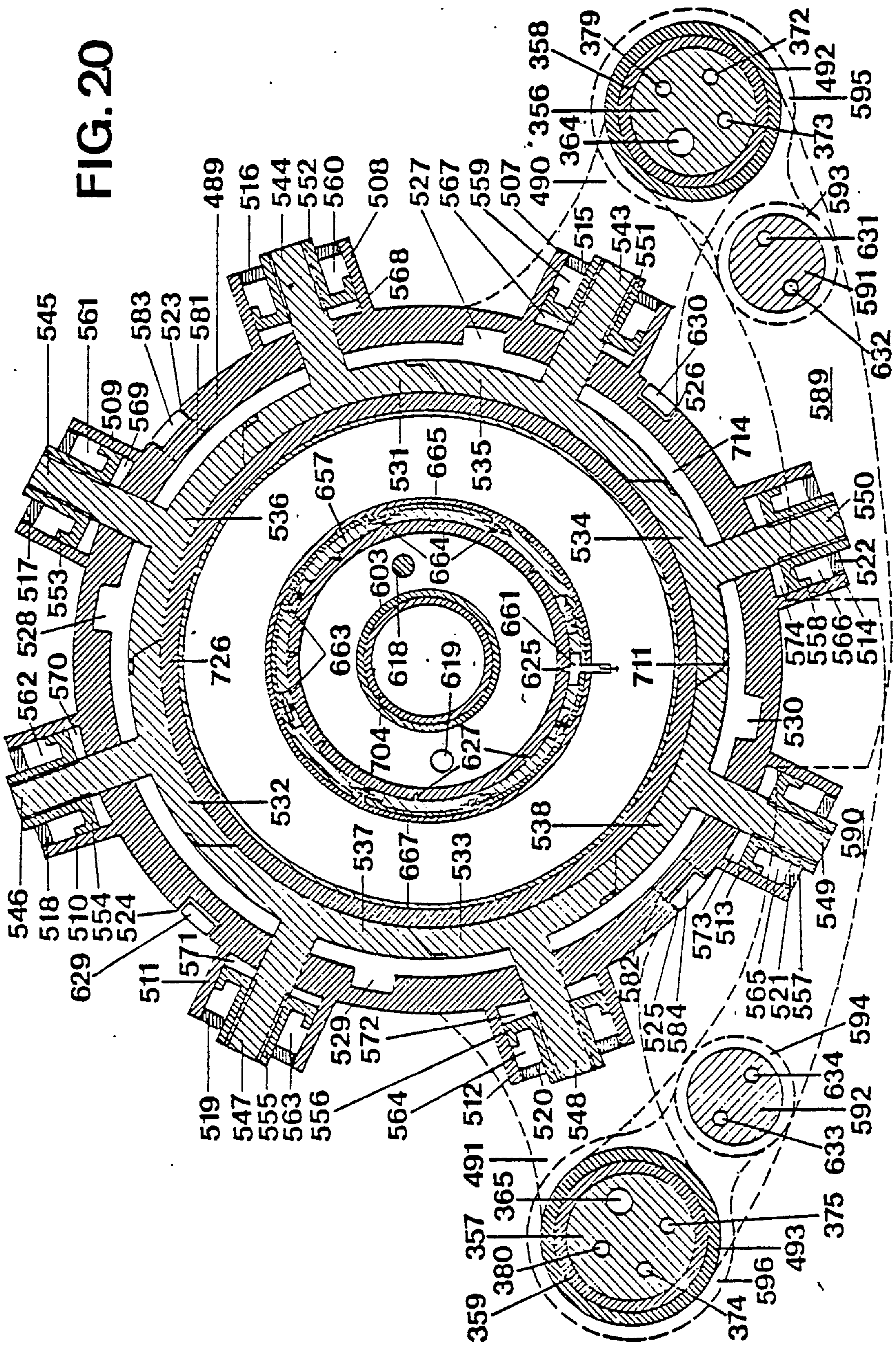

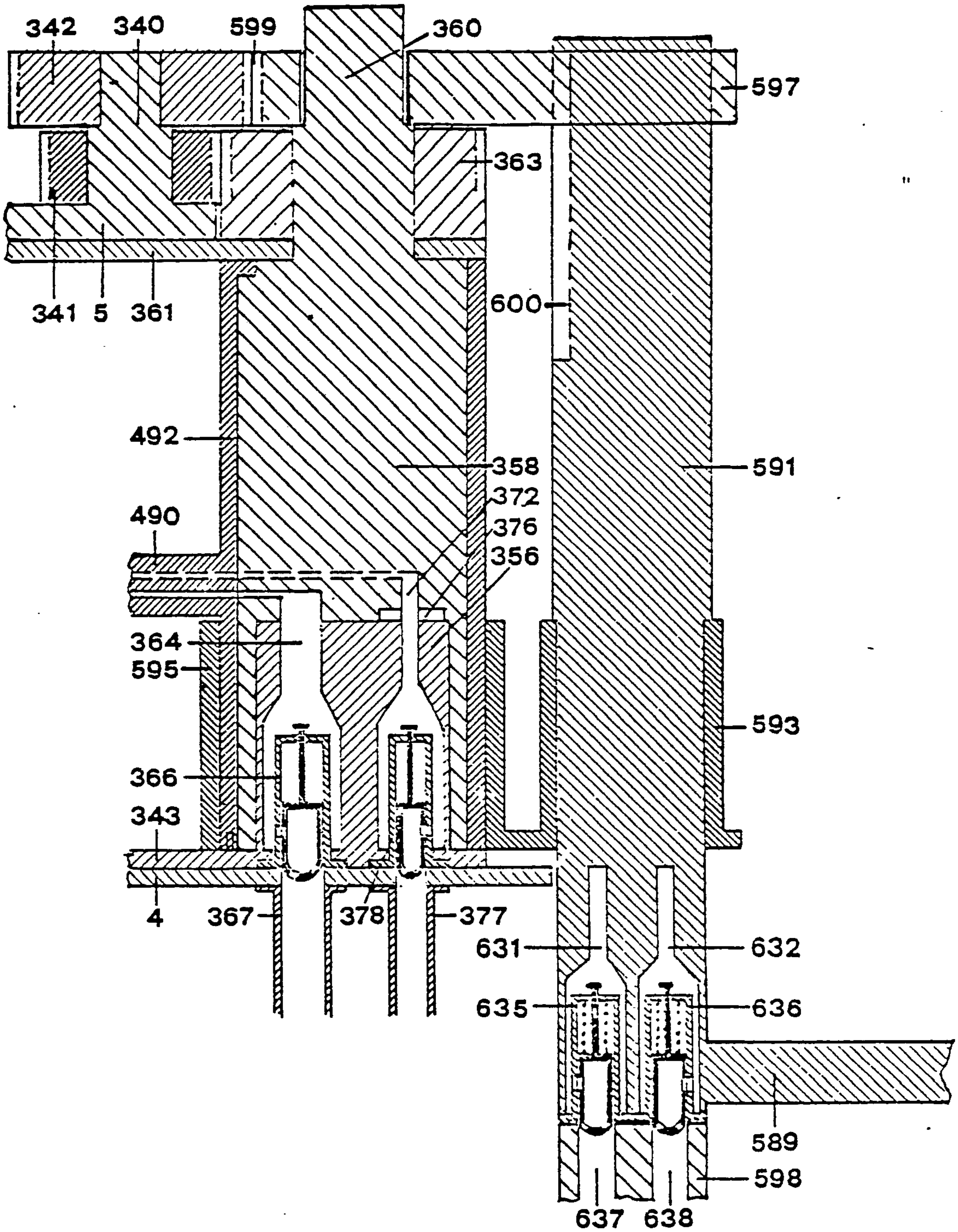
342
340
599
360
597
363
341
5
361
600
492
358
591
372
490
376
356
364
595
593
366
343
4
367
378
377
631
632
635
636
589
598
637
638

FIG. 21

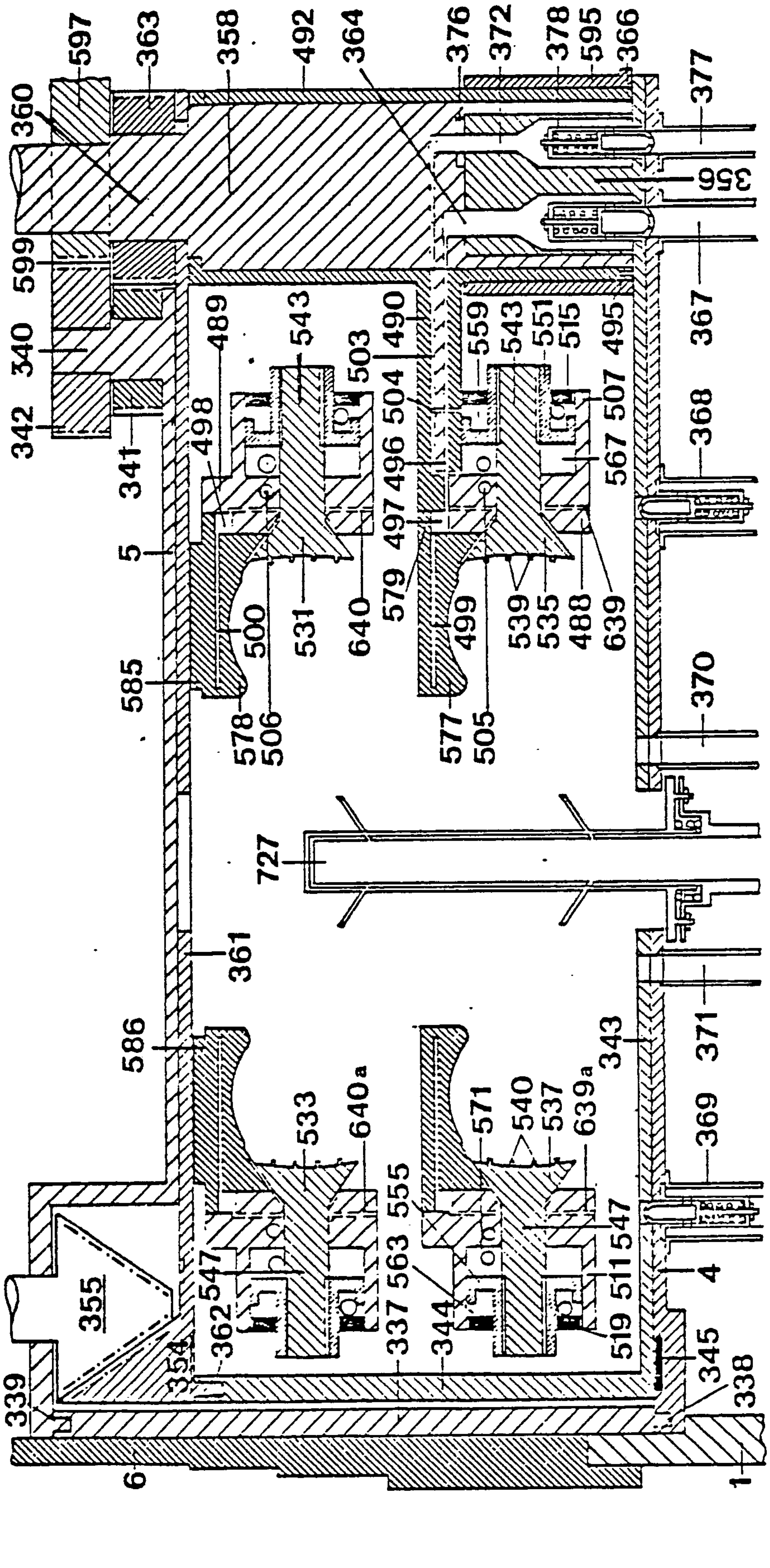
597
363
358
492
364
376
372
378
595
366
377
360
356
599
367
340
342
341
489
543
503
490
559
543
551
515
495
498
504
507
368
496
567
497
5
531
640
579
539
535
488
639
500
585
499
578
506
577
505
370
727
361
371
586
533
640a
571
540
537
639a
343
369
555
547
355
547
563
511
4
362
337
344
519
345
354
339
338
6
1

FIG. 22

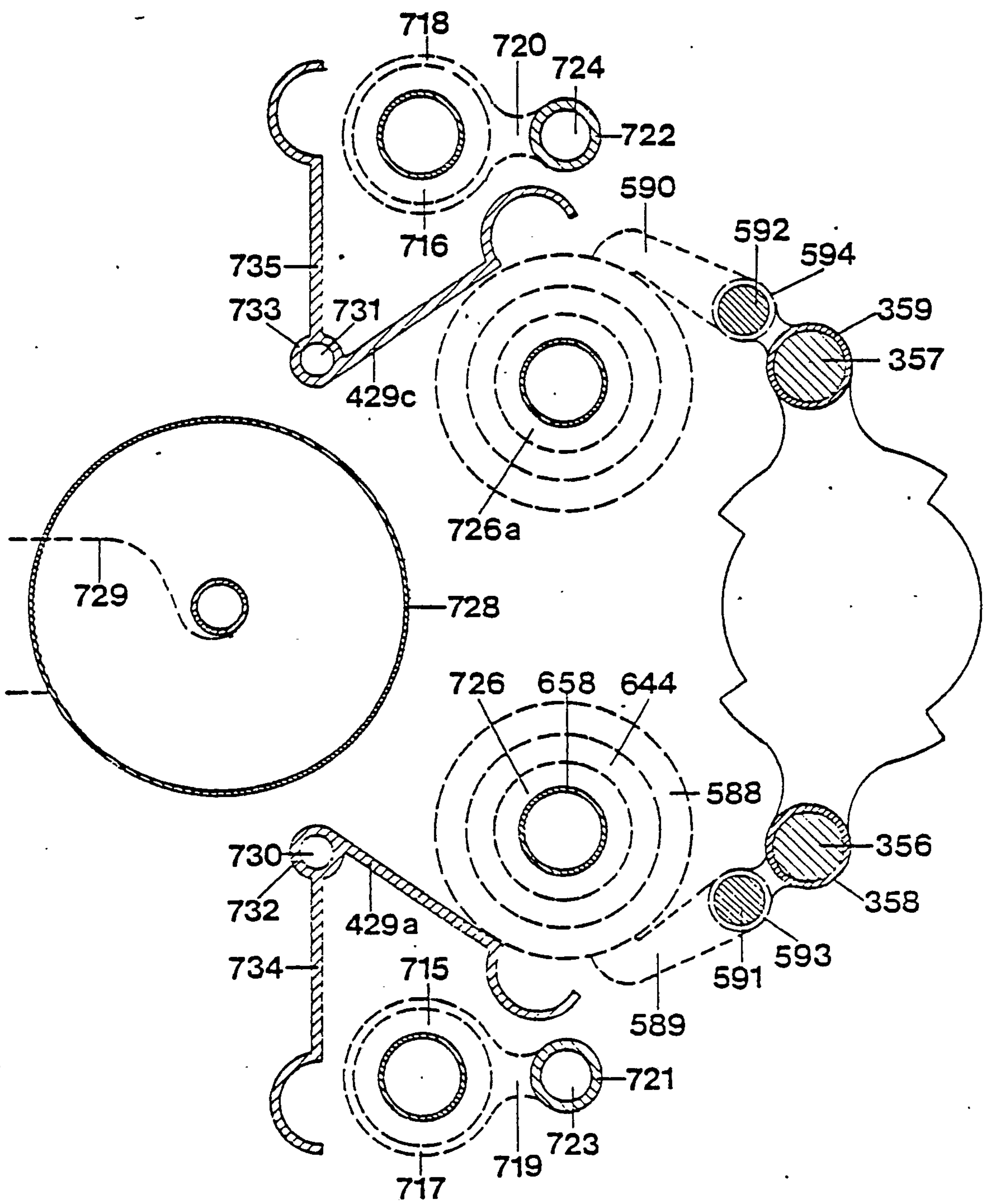
718
720
724
722
590
592
594
359
357
735
733
731
429c
716
726a
729
728
726
658
644
588
730
732
429a
734
356
358
593
591
589
715
721
723
719
717

FIG. 23

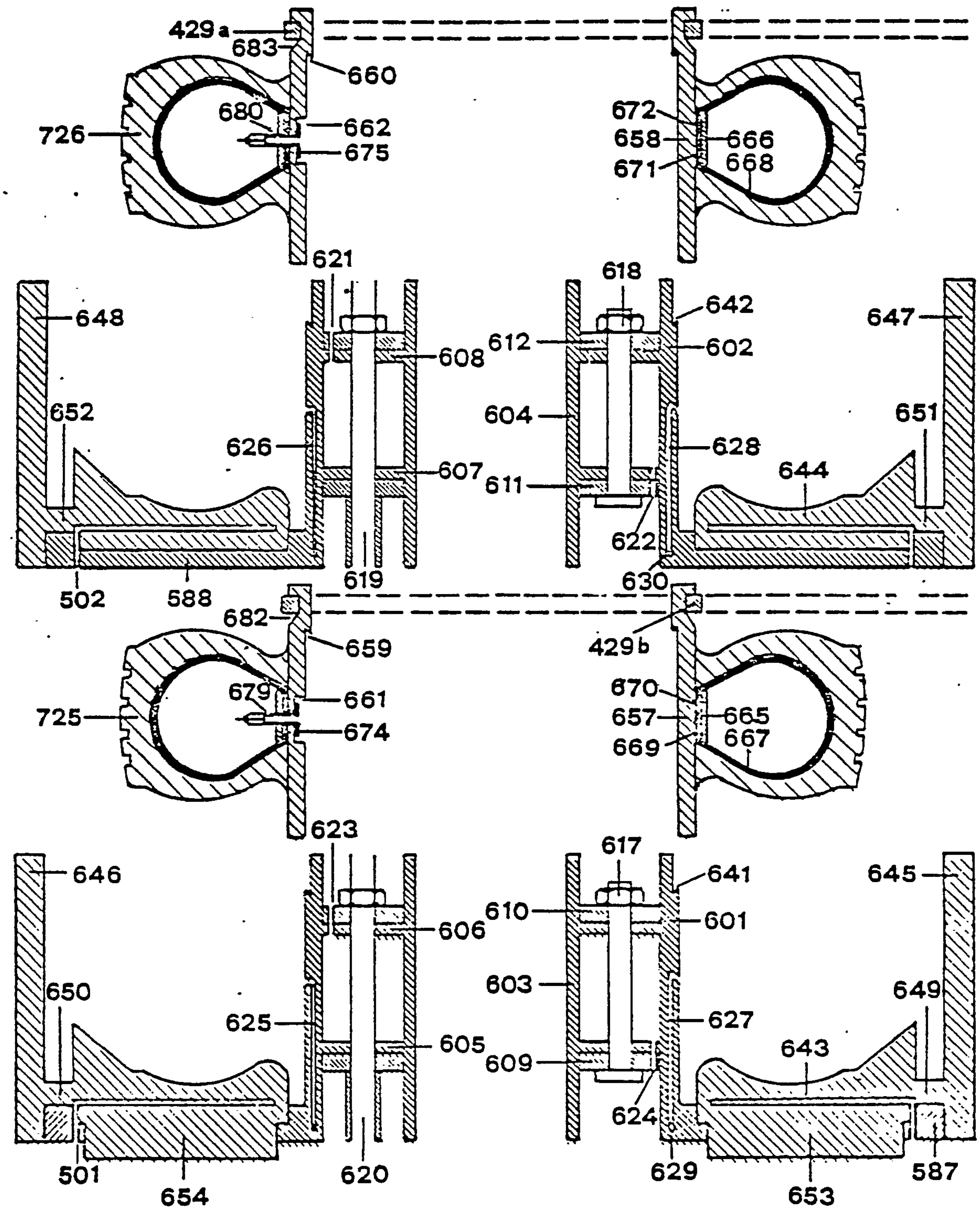
429a
683
660
726
680
662
675
672
658
666
671
668
621
618
648
642
647
612
602
608
604
652
651
626
628
644
607
611
622
630
619
502
588
682
659
429b
725
679
661
670
657
665
674
669
667
623
617
646
641
645
610
601
606
603
650
649
625
627
643
605
609
624
501
654
620
629
653
587

FIG. 24

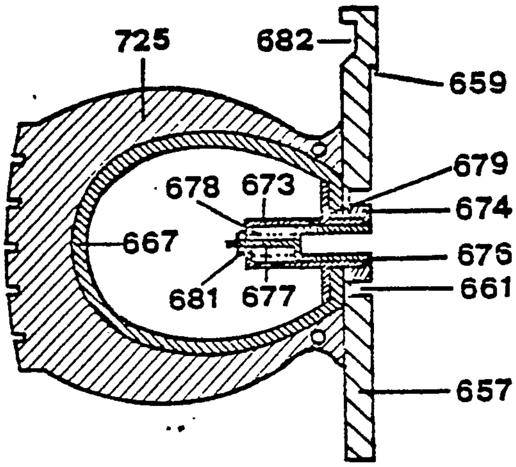
725
682
659
679
678
673
674
667
676
681
677
661
657

FIG. 25

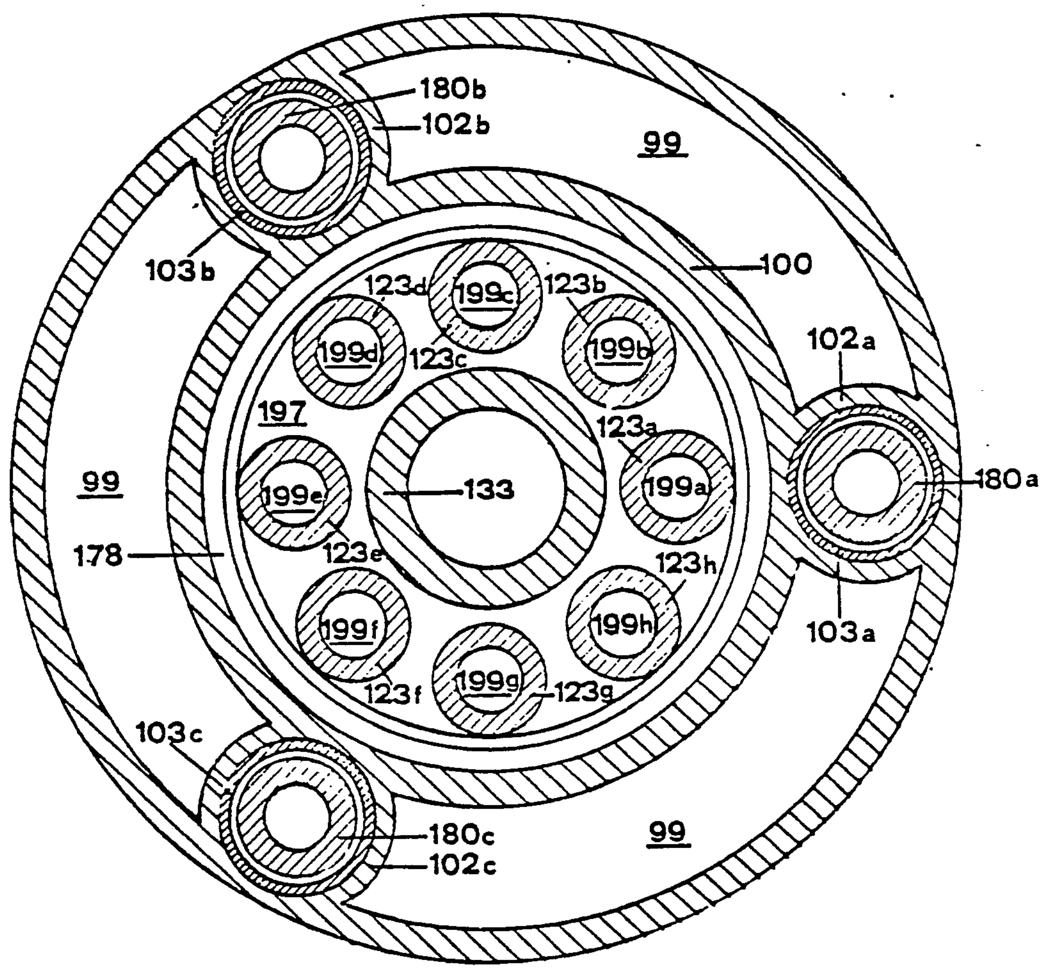
180b
102b
99
103b
100
123d
199c
123b
199d
123c
199b
102a
197
123a
99
199e
133
199a
180a
178
123e
123h
199h
103a
199f
199g
123f
123g
103c
180c
99
102c

FIG. 26

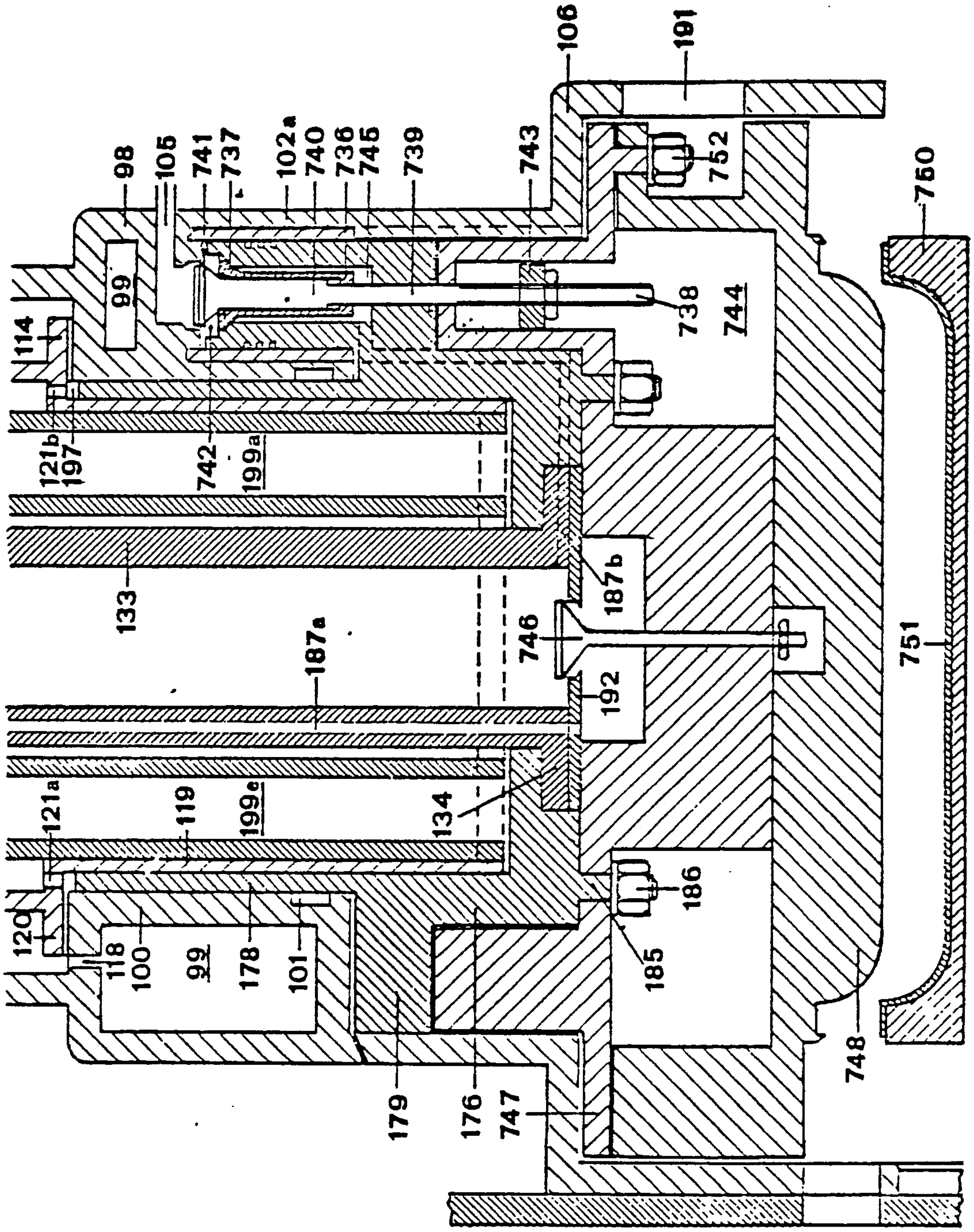
98
105
741
737
102a
740
736
745
739
743
106
191
752
760
99
114
738
744
121b
197
742
199a
133
187b
746
187a
192
751
121a
119
199e
134
186
120
118
100
99
178
101
185
748
179
176
747

FIG. 27

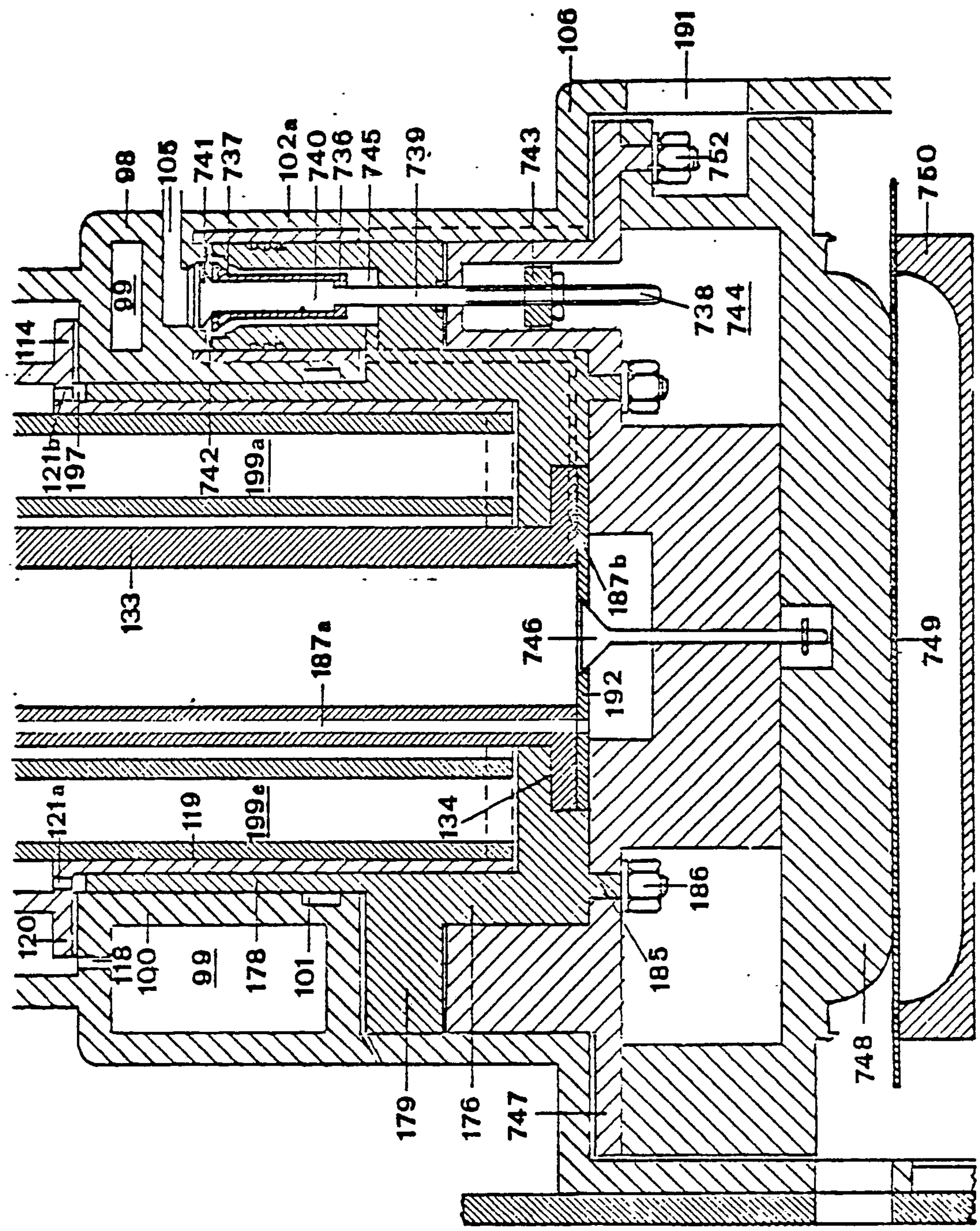
98
105
741
737
102a
740
736
745
739
743
106
191
752
750
114
99
738
744
121b
197
742
199a
133
187b
187a
746
192
749
121a
119
199e
134
120
118
100
99
178
101
185
186
179
176
747
748

FIG.28

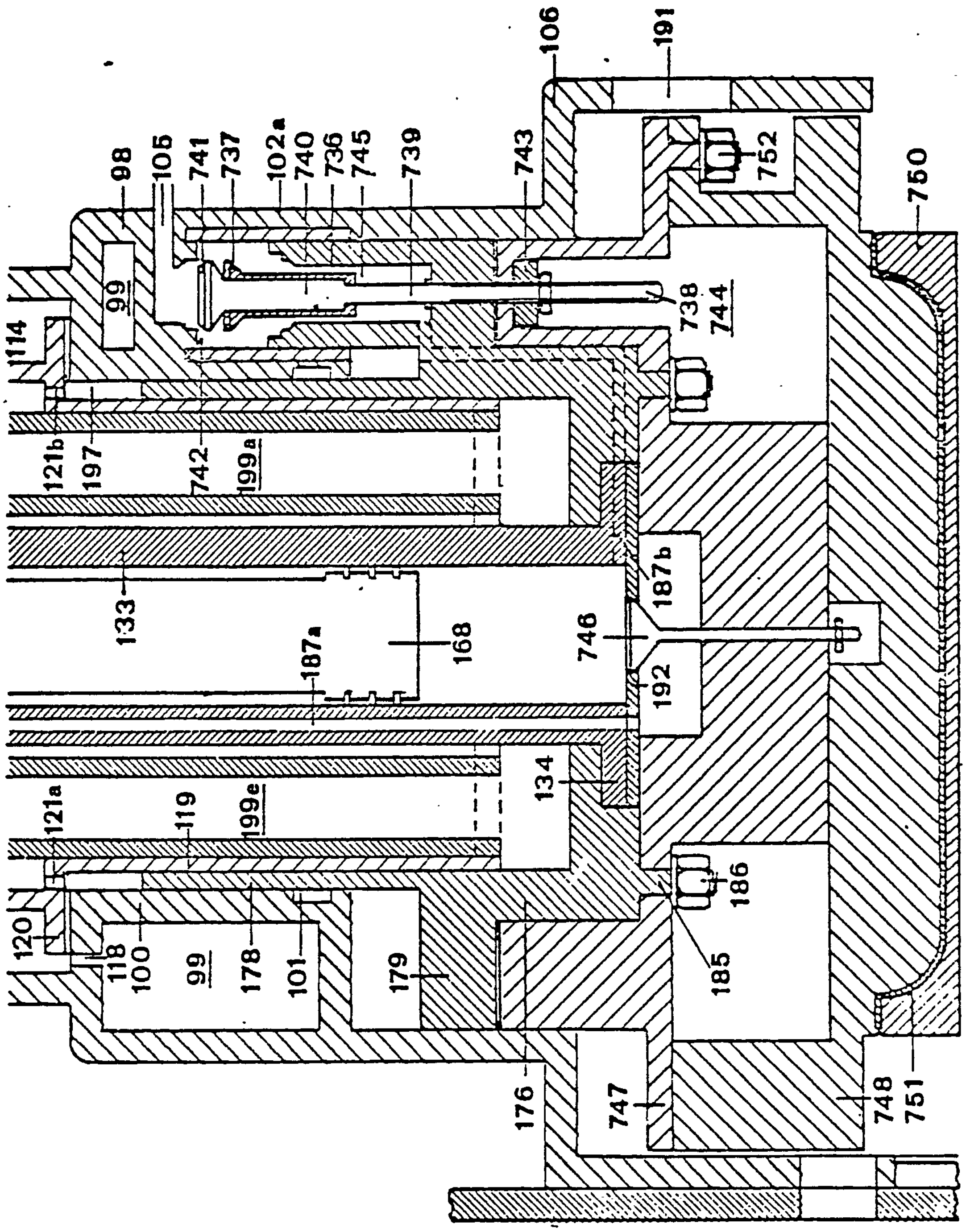
98
105
741
737
102a
740
736
745
739
743
106
191
752
750
99
114
738
744
121b
197
742
199a
133
187a
168
746
187b
192
134
121a
119
199e
120
118
100
99
178
101
179
186
185
176
747
748
751

FIG. 29